# EUROPEAN PATENT APPLICATION

(11) **EP 4 770 242 A1**
(43) Date of publication of application: **01.07.2026**
(21) Application number: 23957300.9
(22) Date of filing: 02.11.2023
(51) Int. Cl.: H04W 72/23

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN)
(74) Representative: RGTH
(86) International application number: PCT/CN2023/129465
(87) International publication number: WO 2025/091432

(57) **Abstract**

Provided are a wireless communication method, a terminal device, and a network device. The method comprises: a first terminal device receiving configuration information, wherein the configuration information is used for indicating one or more of the following: a target resource that can be used in a measurement gap and for uplink and/or downlink transmission; a target logical channel that can be used in the measurement gap; a target logical channel group that can be used in the measurement gap; a target service that can be transmitted in the measurement gap; a target HARQ process that can be transmitted in the measurement gap; whether uplink and/or downlink transmission can be executed in the measurement gap; and whether target transmission can be executed in the measurement gap. In the present application, a network device configures, for a terminal device, a target resource that can be used in a measurement gap and for uplink and/or downlink transmission, etc.; and the terminal device can then perform a related transmission in the measurement gap on the basis of the configuration performed by the network device, thus facilitating a reduction in the influence of the measurement gap on the service quality of a related service.

## Description

### TECHNICAL FIELD

This application relates to the field of wireless communications technologies, and specifically, to a wireless communication method, a terminal device, and a network device.

### BACKGROUND

In a wireless communications system, a terminal device may measure a neighboring cell during a measurement gap. During the measurement gap, the terminal device generally suspends uplink and downlink data transmission in a current serving cell. However, for some services (such as XR services) having stringent requirements for latency, no data transmission during the measurement gap may reduce quality of service, thereby causing service transmission errors.

### SUMMARY

Embodiments of this application provide a wireless communication method, a terminal device, and a network device. The following description is provided from the following aspects.

According to a first aspect, there is provided a wireless communication method. The wireless communication method includes: receiving, by a first terminal device, configuration information, where the configuration information is used to indicate one or more of following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

According to a second aspect, there is provided a wireless communication method. The wireless communication method includes: transmitting, by a network device, configuration information to a first terminal device, where the configuration information is used to indicate one or more of following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

According to a third aspect, there is provided a wireless communication method. The wireless communication method includes: transmitting, by a first terminal device, first information to a network device, where the first information is used to indicate one or more of following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; or capability information of the first terminal device that is associated with a measurement gap.

According to a fourth aspect, there is provided a wireless communication method. The wireless communication method includes: receiving, by a network device, first information transmitted by a first terminal device, where the first information is used to indicate one or more of following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; or capability information of the first terminal device that is associated with a measurement gap.

According to a fifth aspect, there is provided a wireless communication method. The wireless communication method includes: triggering, by a first terminal device, first DSR, and/or transmitting a first MAC CE, where the first MAC CE is a MAC CE corresponding to DSR, the MAC CE includes information of at least one logical channel group, and the information of the one logical channel group includes remaining time information and data amount information.

According to a sixth aspect, there is provided a wireless communication method. The wireless communication method includes: receiving, by a network device, first DSR, and/or receiving a first MAC CE, where the first MAC CE is a MAC CE corresponding to DSR, the first MAC CE includes information of at least one logical channel group, and the information of the one logical channel group includes remaining time information and data amount information.

According to a seventh aspect, there is provided a wireless communication method. The wireless communication method includes: reporting, by a terminal device, buffer size information by using one or more LCGs, where the one or more LCGs are configured to report the buffer size information by using a first BSR table and a second BSR table, or are at least configured to report the buffer size information by using the second BSR table, there is a first difference between the first BSR table and the second BSR table, and the first difference includes one or more of following: a difference in granularity; a difference in an indication range of a BS; a difference in a value range; or a difference in identifiers of tables.

According to an eighth aspect, there is provided a wireless communication method. The wireless communication method includes: receiving, by a network device, buffer size information reported by a terminal device by using one or more LCGs, where the one or more LCGs are configured to report the buffer size information by using a first BSR table and a second BSR table, or are at least configured to report the buffer size information by using the second BSR table, there is a first difference between the first BSR table and the second BSR table, and the first difference includes one or more of following: a difference in granularity; a difference in an indication range of a BS; a difference in a value range; or a difference in identifiers of tables.

According to a ninth aspect, there is provided a terminal device. The terminal device includes: a receiving module, configured to receive configuration information, where the configuration information is used to indicate one or more of following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

According to a tenth aspect, there is provided a network device. The network device includes: a transmitting module, configured to transmit configuration information to a first terminal device, where the configuration information is used to indicate one or more of following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

According to an eleventh aspect, there is provided a terminal device. The terminal device includes: a transmitting module, configured to transmit first information to a network device, where the first information is used to indicate one or more of following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; or capability information of the first terminal device that is associated with a measurement gap.

According to a twelfth aspect, there is provided a network device. The network device includes: a receiving module, configured to receive first information transmitted by a first terminal device, where the first information is used to indicate one or more of following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; or capability information of the first terminal device that is associated with a measurement gap.

According to a thirteenth aspect, there is provided a terminal device. The terminal device includes: a triggering module, configured to trigger first DSR; and/or a transmitting module, configured to transmit a first MAC CE, where the first MAC CE is a MAC CE corresponding to DSR, the MAC CE includes information of at least one logical channel group, and the information of the one logical channel group includes remaining time information and data amount information.

According to a fourteenth aspect, there is provided a network device. The network device includes: a receiving module, configured to receive first DSR, and/or receive a first MAC CE, where the first MAC CE is a MAC CE corresponding to DSR, the first MAC CE includes information of at least one logical channel group, and the information of the one logical channel group includes remaining time information and data amount information.

According to a fifteenth aspect, there is provided a terminal device. The terminal device includes: a transmitting module, configured to report buffer size information by using one or more LCGs, where the one or more LCGs are configured to report the buffer size information by using a first BSR table and a second BSR table, or are at least configured to report the buffer size information by using the second BSR table, there is a first difference between the first BSR table and the second BSR table, and the first difference includes one or more of following: a difference in granularity; a difference in an indication range of a BS; a difference in a value range; or a difference in identifiers of tables.

According to a sixteenth aspect, there is provided a network device. The network device includes: a receiving module, configured to receive buffer size information reported by a terminal device by using one or more LCGs, where the one or more LCGs are configured to report the buffer size information by using a first BSR table and a second BSR table, or are at least configured to report the buffer size information by using the second BSR table, there is a first difference between the first BSR table and the second BSR table, and the first difference includes one or more of following: a difference in granularity; a difference in an indication range of a BS; a difference in a value range; or a difference in identifiers of tables.

According to a seventeenth aspect, there is provided a terminal device. The terminal device includes: a transceiver, a memory, and a processor, where the memory is configured to store a program; and the processor is configured to invoke the program in the memory, and control the transceiver to receive or transmit a signal, to cause the terminal device to execute the method according to any one of the first aspect, the third aspect, the fifth aspect, or the seventh aspect.

According to an eighteenth aspect, there is provided a network device. The network device includes: a transceiver, a memory, and a processor, where the memory is configured to store a program; and the processor is configured to invoke the program in the memory, and control the transceiver to receive or transmit a signal, to cause the network device to execute the method according to any one of the second aspect, the fourth aspect, the sixth aspect, or the eighth aspect.

According to a nineteenth aspect, there is provided an apparatus. The apparatus includes a processor, configured to invoke a program from a memory, to cause the apparatus to execute the method according to any one of the first aspect to the eighth aspect.

According to a twentieth aspect, there is provided a chip. The chip includes a processor, configured to invoke a program from a memory, to cause a device on which the chip is installed to execute the method according to any one of the first aspect to the eighth aspect.

According to a twenty-first aspect, there is provided a computer-readable storage medium, where the computer-readable storage medium stores a program, and the program causes a computer to execute the method according to any one of the first aspect to the eighth aspect.

According to a twenty-second aspect, there is provided a computer program product. The computer program product includes a program, where the program causes a computer to execute the method according to any one of the first aspect to the eighth aspect.

According to a twenty-third aspect, there is provided a computer program, where the computer program causes a computer to execute the method according to any one of the first aspect to the eighth aspect.

In this application, a network device configures, for a terminal device, a target resource available for uplink and/or downlink transmission during a measurement gap and/or a target logical channel group available for use during a measurement gap. The terminal device may perform related transmission during the measurement gap based on the configuration by the network device, which facilitates a reduction in an impact of the measurement gap on quality of service of related services, thereby avoiding service transmission errors.

### BRIEF DESCRIPTION OF DRAWINGS

FIG. 1 is an example diagram of a system architecture of a wireless communications system to which embodiments of this application are applicable.
FIG. 2 is a schematic flowchart of a wireless communication method according to an embodiment of this application.
FIG. 3 is a schematic flowchart of a wireless communication method according to another embodiment of this application.
FIG. 4 is a schematic flowchart of a wireless communication method according to another embodiment of this application.
FIG. 5 is a schematic flowchart of a wireless communication method according to another embodiment of this application.
FIG. 6 is a schematic structural diagram of a terminal device according to an embodiment of this application.
FIG. 7 is a schematic structural diagram of a network device according to an embodiment of this application.
FIG. 8 is a schematic structural diagram of a terminal device according to another embodiment of this application.
FIG. 9 is a schematic structural diagram of a network device according to another embodiment of this application.
FIG. 10 is a schematic structural diagram of a terminal device according to another embodiment of this application.
FIG. 11 is a schematic structural diagram of a network device according to another embodiment of this application.
FIG. 12 is a schematic structural diagram of a terminal device according to another embodiment of this application.
FIG. 13 is a schematic structural diagram of a network device according to another embodiment of this application.
FIG. 14 is a schematic structural diagram of a communications apparatus according to an embodiment of this application.

### DESCRIPTION OF EMBODIMENTS

The following clearly and fully describes the technical solutions in embodiments of this application with reference to the accompanying drawings in embodiments of this application. Apparently, the described embodiments are some rather than all of embodiments of this application.

### Communications system architecture

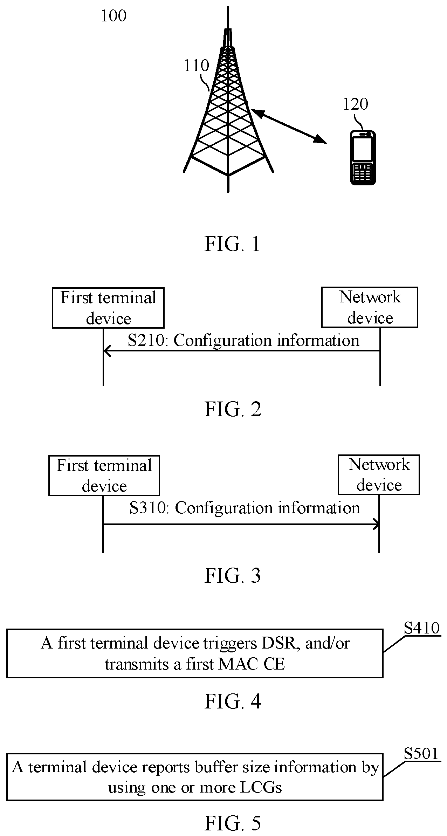

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 shows one network device and one terminal device as an example. Optionally, the wireless communication system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that, the technical solutions in embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in vehicle-to-everything (vehicle-to-everything, V2X), device-to-device (device-to-device, D2D), or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. Scenarios in which the network device and the terminal device are located are not limited in embodiments of this application.

It should be understood that all or some of functions of the communications device in this application may alternatively be implemented by software functions running on hardware, or by virtualization functions instantiated on a platform (for example, a cloud platform).

### 5G communications system and applications

With a demand for communication speed, delay, high-speed mobility, and energy efficiency, as well as diversity and complexity of communication services in future life, the 3GPP international standards organization starts to develop 5G. Main application scenarios of 5G include: enhanced mobile broadband (enhanced mobile broadband, eMBB), ultra-reliable low latency communications (ultra reliable & lowlatency communication, URLLC), and massive machine type communication (massive machine type of communication, mMTC).

The eMBB aims to provide a user with access to multimedia content, services, and data. The demand for eMBB is growing rapidly. The eMBB may be deployed in different scenarios, such as indoor, urban, or rural areas. Application capabilities and requirements of the eMBB vary greatly, and its application capabilities and requirements may be analyzed in detail in combination with specific deployment scenarios. Typical applications of URLLC include factory automation, power automation, remote medical operations (such as surgery), traffic safety assurance, and the like. Typical features of mMTC include high connection density, small data volume, latency insensitivity, low costs and long service life of modules, and the like.

In a 5G network environment, to reduce air interface signalling overheads, quickly restore a wireless connection, and quickly restore a data service, another new radio resource control (radio resource control, RRC) status, that is, an RRC inactive (RRC_INACTIVE) state, is introduced. The RRC_INACTIVE state is different from an RRC idle (RRC_IDLE) state and an RRC active (RRC_ACTIVE) state.

In the RRC_IDLE state, mobility is UE-based cell selection and reselection. Paging of a UE is initiated by a core network (core network, CN), and a paging area is configured by the CN. In addition, no access stratum (access stratum, AS) context of the UE exists on a base station side, and no RRC connection exists between the UE and the network.

In the RRC_CONNECTED state, an RRC connection exists between the UE and the network, and an AS context of the UE exists on both the base station side and the UE side. The network side learns a location of the UE at a specific cell level, the mobility is controlled by the network side, and unicast data may be transmitted between the UE and the base station.

In the RRC_INACTIVE state, mobility is UE-based cell selection and reselection, there is a connection between the CN and the NR, and the AS context of the UE exists on a base station. Paging of the UE is triggered by an RAN, an RAN-based paging area is managed by the RAN, and the network side learns that a location of the UE is at a level of the RAN-based paging area.

### Extended reality (extended reality, XR) services

XR is considered as a highly promising technique, and an optimal form and development trend for promoting large-scale application of XR will become one of typical applications in future communications. Therefore, supporting XR services in wireless communications systems is an important aspect of system design. At present, XR services supported by wireless communications systems include augmented reality (augmented reality, AR), virtual reality (virtual reality, VR), cloud gaming (cloud gaming, CG), and the like. A main type of XR services is video stream (video stream), and an arrival rate (measured in frames per second (frame per second, fps)) of video streams may be 30 fps, 60 fps, 90 fps, or 120 fps, corresponding to video stream periods of 33.33 ms, 16.67 ms, 11.11 ms, and 8.33 ms, respectively.

Data characteristics of XR services include a variable packet size and a relatively large mean packet size. For example, for an AR/VR service with a data rate of 100 Mbps, a mean packet size of uplink data packets is 20,833 bytes (bytes), a maximum packet size is 31,250 bytes, and a minimum packet size is 10,417 bytes. Therefore, a size of AR/VR data packets to be transmitted within each period ranges from 10,417 bytes to 31,250 bytes. However, in an actual communications system with a bandwidth of 100 MHz, transmitting a data packet of 20,833 bytes requires approximately transmission resources of four slots. Therefore, XR services occupy a relatively large amount of resources in the communications system.

### Measurement gap (measurement gap)

To implement inter-frequency or intra-frequency measurement, the concept of a measurement gap has been introduced in a related technology. In NR, a measurement gap may be configured for each UE, or for each frequency range (frequency range, FR). Regardless of the configuration granularity, the configuration of the measurement gap typically includes the configuration of parameters such as a measurement gap length (measurement gap length, MGL), a measurement gap repetition period (measurement gap repetition period, MGRP), and a gap offset (offset). In an example, values of MGL and MGRP for different gap patterns (gap pattern) may be as shown in Table 1, where different gap pattern identifiers (identification, ID) indicate different gap patterns.

MGL indicates a length of a measurement gap. For example, if a value of MGL is 6 ms, it indicates that the UE is required to perform intra-frequency or inter-frequency measurement within the 6 ms, and is not allowed to perform data transmission in a current serving cell (serving cell) corresponding to a frequency associated with the configuration of the measurement gap. MGRP indicates a repetition period of a measurement gap. For example, if a value of MGRP is 40 ms, it indicates that a measurement gap occurs every 40 ms. The offset offset indicates an offset location of a repetition period of a measurement gap.

**Table 1 Gap pattern configuration table**

| Gap pattern ID | MGL/ms | MGRP/ms |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |

During a measurement gap, the UE stops normal uplink and downlink data transmission in a serving cell of corresponding frequency domain. For example, the UE stops transmitting hybrid automatic repeat request (hybrid automatic repeat request, HARQ) feedback (feedback), scheduling requests (scheduling request, SR), and channel state information (channel state information, CSI). For another example, the UE stops reporting sounding reference signals (sounding reference signal, SRS). Alternatively, the UE stops transmitting data on an uplink (uplink, UL)-shared channel (shared channel, SCH) other than Message 3 (Msg3). Alternatively, the UE stops monitoring a physical downlink control channel (physical downlink control channel, PDCCH) and reception of messages on a downlink (downlink, DL)-SCH. The UE resumes normal uplink and downlink data transmission in the serving cell of the corresponding frequency domain only after the measurement gap ends.

### Delay reporting

To facilitate adjustment of scheduling strategies by a network device, a delay status reporting (delay status reporting, DSR) operation is proposed in a related technology. Provisions regarding the DSR in communication standards are as follows.

At RAN2#120, RAN2 agreed to report delay information related to an amount of data. Specifically, RAN2 will introduce data amount information related to delay information (for example, remaining time (remaining time)) in a medium access control (medium access control, MAC) control element (control element, CE). Content not specified a delay information report includes: whether the delay information report is a buffer status report (buffer status report, BSR) or an extension of a new format; how the delay information is reported (for example, what is the content of the report); and how to ensure that reported delay information is up-to-date (for example, handling a UL scheduling delay).

At RAN2#122, RAN2 further agreed that the remaining time is determined based on a value of a packet data convergence protocol (packet data convergence protocol, PDCP) discard timer (discardTimer). Specifically, the UE calculates the remaining time based on the value of the PDCP discard timer. Content not specified in the delay information report includes: whether the UE reports one value or a plurality of values, how to model this in PDCP specifications; and which UEs support reporting.

At RAN2#123, further agreements reached regarding the DSR include the following aspects.

In a first aspect, whether a network can configure a terminal to trigger delay status reporting (whether to configure a threshold for each logical channel group (logical channel group, LCG)) is not specified.

In a second aspect, when the UE triggers delay information of an LCG, the UE further reports a buffer status related to remaining time, and defines a single MAC CE (whether this MAC CE is an extended BSR MAC CE or a new MAC CE is not specified) for a DSR report (including the buffer status).

In a third aspect, it is assumed that a new independent MAC CE is defined for the DSR (a remaining delay and a related amount of data). For example, a DSR report is not coupled with a BSR report (a detailed definition of the related amount of data is not specified).

In a fourth aspect, a threshold-based DSR report is supported. For example, a DSR report is triggered when a remaining delay of a protocol data unit (protocol data unit, PDU)/a PDU set (set) is less than a threshold configured by a network (network, NW), and a threshold may be configured for each LCG (whether configuring a plurality of thresholds for each LCG is supported and a definition of the remaining time are not specified).

At RAN2#123bis, further agreements reached regarding the DSR include the following aspects.

In a first aspect, for triggering DSR, if there is no pending DSR associated with the LCG, the shortest remaining time of buffered data in the uplink (UL) that is less than the configured threshold is used.

In a second aspect, triggering one threshold for each LCG is enough for DSR.

In a third aspect, if PDU set discarding is configured, a total size of remaining PDUs in a PDU set (if at least one PDU in the PDU set has remaining time less than the threshold) is to be considered into the calculation of an amount of data to be reported in the DSR. If no PDU set is configured, it is yet not specified what should be reported.

In a fourth aspect, it is supported that single delay information for each LCG is the baseline for DSR in Release release (Rel)-18. The remaining time (the shortest remaining time among LCGs) shall be explicitly reported in the DSR.

### Delay status reporting

A DSR procedure may be used by the UE to provide a delay status of UL data to a gNB. The delay status may include remaining time of the UL data and an amount of data related to the reported remaining time. The remaining time may be determined based on a value of a PDCP discard timer. The PDCP discard timer is associated with the first symbol of a physical uplink shared channel (physical uplink shared channel, PUSCH) transmission for transmitting the DSR. An RRC layer may control the DSR operation by configuring a remaining time threshold (remaining time threshold) parameter of the DSR operation. The remaining time threshold is a threshold of remaining time of uplink data that triggers DSR for a logical channel group. When remaining time of a PDU in a logical channel group configured with DSR is less than a remaining time threshold configured for the logical channel group, a MAC entity triggers a DSR procedure.

As described above, during a measurement gap, the UE stops performing normal uplink and downlink data transmission in the serving cell of the corresponding frequency domain. However, for some services having relatively high requirements for latency, no data transmission during the measurement gap may reduce quality of service, thereby causing service transmission errors.

In view of the foregoing problems, a wireless communication method according to an embodiment of this application is described below in detail with reference to FIG. 2. The wireless communication method illustrated in FIG. 2 is applicable to any type of network device and terminal device mentioned above. For ease of understanding, a terminal device to which the method is applied is hereinafter referred to as a first terminal device.

The method illustrated in FIG. 2 may include step S210.

In step S210, the first terminal device receives configuration information from a network device. The configuration information may be used to indicate one or more of the following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

In an example, the configuration information may be used to indicate the target resource available for uplink transmission during the measurement gap. For example, the configuration information may indicate a specific UL grant (grant), and the first terminal device may perform uplink transmission during the measurement gap by using a transmission resource corresponding to the UL grant. Alternatively, the configuration information may be used to indicate the target resource available for downlink transmission during the measurement gap. For example, the configuration information may indicate a specific DL assignment (assignment), and the first terminal device may perform downlink transmission during the measurement gap by using a transmission resource corresponding to the DL assignment.

In another example, the configuration information may be used to indicate the target logical channel available for use during the measurement gap. For example, the configuration information may indicate an identifier of a specific logical channel, and the first terminal device may perform data transmission during the measurement gap by using the logical channel corresponding to the identifier.

In another example, the configuration information may be used to indicate the target logical channel group available for use during the measurement gap. For example, the configuration information may indicate an identifier of a specific logical channel group, and the first terminal device may perform data transmission during the measurement gap by using the logical channel group corresponding to the identifier.

In another example, the configuration information may be used to indicate the target service transmittable during the measurement gap. For example, the configuration information may indicate an XR service, and the first terminal device may perform transmission of the XR service during the measurement gap.

In another example, the configuration information may be used to indicate the target HARQ process transmittable during the measurement gap. For example, the configuration information may indicate a specific HARQ process, and the first terminal device may transmit the HARQ process during the measurement gap.

In another example, the configuration information may be used to indicate whether at least one of uplink transmission or downlink transmission is executable during the measurement gap. For example, the configuration information may indicate that uplink transmission may be performed, and the first terminal device may perform uplink transmission during the measurement gap.

In another example, the configuration information may be used to indicate whether target transmission is executable during the measurement gap. The target transmission herein may refer to related transmission performed by the first terminal device based on one or more of the following: a target resource available for uplink and/or downlink transmission during a measurement gap; a target logical channel available for use during a measurement gap; a target logical channel group available for use during a measurement gap; a target service transmittable during a measurement gap; or a target HARQ process transmittable during a measurement gap. For example, the configuration information may indicate that the target transmission may be performed based on the target logical channel group available for use during the measurement gap, and the first terminal device may perform related transmission based on the target logical channel group available for use during the measurement gap.

In another example, the configuration information may be used to indicate a plurality of pieces of information among the foregoing information. For example, the configuration information may indicate the target logical channel group available for use during the measurement gap and the target service transmittable during the measurement gap. The first terminal device may perform data transmission on the target logical channel group, and the first terminal device may perform transmission of the target service.

Therefore, according to the method illustrated in FIG. 2, the network device configures, for the terminal device, the target resource available for uplink and/or downlink transmission during the measurement gap and/or the target logical channel group available for use during the measurement gap. The terminal device may perform related transmission during the measurement gap based on the configuration from the network device, which facilitates a reduction in an impact of the measurement gap on quality of service of related services, thereby avoiding service transmission errors.

In some implementations, the target resource may include one or more of the following: a resource for PDCCH monitoring; a resource scheduled by a PDCCH; a configured grant (configured grant, CG) resource; a semi-persistent scheduling (semi-persistent scheduling, SPS) resource; a feedback resource for SPS; a feedback resource for dynamic grant (dynamic grant, DG); or a physical uplink control channel (physical uplink control channel, PUCCH) resource.

The resource for PDCCH monitoring in the target resource may be configured based on at least one of a search space configuration, an identifier related to a radio network temporary identifier (cell-radio network temporary identifier, RNTI) or a cell-radio network temporary identifier (cell-radio network temporary identifier, C-RNTI), a PDCCH reception location, or the like. During the measurement gap, the first terminal device may perform PDCCH monitoring by using the resource used for PDCCH monitoring, so as to obtain a resource scheduled by a PDCCH.

The resource scheduled by the PDCCH in the target resource may be configured based on scheduling information on the PDCCH. For example, downlink control information (downlink control information, DCI) on the PDCCH may include scheduling information of transmission resources for a physical downlink shared channel (physical downlink shared channel, PDSCH) and/or a PUSCH, so as to indicate the transmission resource for the PDSCH and/or the PUSCH. During the measurement gap, the first terminal device may perform related transmission based on the resource scheduled by the PDCCH, so as to reduce an impact of the measurement gap on quality of service.

The CG resource or SPS resource in the target resource may be configured based on a location (occasion) and/or an index (index) of the resource. The location of the CG resource may refer to one or more specific CG/SPS periods, for example, the 1^{st} CG/SPS period or the 1^{st}, 2^{nd,} and 3^{rd} CG/SPS periods. The location of the CG resource may alternatively refer to one or more specific locations within one or more CG/SPS periods, for example, the 1^{st} location within the 1^{st} CG/SPS period; or the 1^{st} and 2^{nd} locations within the 1^{st} CG/SPS period; or the 1^{st} and 2^{nd} locations within the 1^{st} and 2^{nd} CG/SPS periods. During the measurement gap, the first terminal device may perform related transmission based on the CG resource and/or the SPS resource, thereby facilitating a reduction in an impact of the measurement gap on quality of service.

The feedback resource for SPS, the feedback resource for DG, or the PUCCH resource in the target resource may be configured based on a location and/or an index of the resource. The location may refer to a specifically configured feedback resource or feedback resource location. Alternatively, the location may refer to one or more PUCCH locations, or a PUCCH location corresponding to a specific PUCCH index or configuration. The index may refer to an index corresponding to a specifically configured feedback resource or feedback resource location. Alternatively, the index may refer to an index corresponding to one or more PUCCH locations, or an index corresponding to a PUCCH location that corresponds to a specific PUCCH index or configuration. The feedback resource for SPS, the feedback resource for DG, or the PUCCH resource in the target resource may alternatively refer to all PUCCH locations configured by the network; or PUCCH locations for feedback; or PUCCH locations for transmitting uplink control information (uplink control information, UCI). During the measurement gap, the first terminal device may perform related transmission based on the resource or resource location, thereby facilitating a reduction in an impact of the measurement gap on quality of service.

In some implementations, the configuration information may be used to indicate one or more of the following: a logical channel associated with the target resource; a logical channel group associated with the target resource; a service associated with the target resource; or a HARQ process associated with the target resource. For example, the configuration information may indicate a correspondence or an association relationship between one or more of the logical channel, the logical channel group, the service, or the HARQ process and the target resource.

Further, the target resource may be used to transmit only data of a first logical channel or a first logical channel group; and/or the target resource may be used to transmit only data of a first service; and/or the target resource may be used to transmit only a MAC CE corresponding to a first logical channel, or a first logical channel group, or a first service; and/or the target resource may be used to transmit only data of a first HARQ process, or the target resource may correspond to a first HARQ process, where the first logical channel, the first logical channel group, the first service, or the first HARQ process is associated with the target resource. In other words, related transmission of the logical channel, the logical channel group, the service, or the HARQ process associated with the target resource may be performed during the measurement gap based on the target resource. Otherwise, related transmission may not be performed based on the target resource. Based on this, unreasonable utilization of the target resource during the measurement gap may be avoided.

In addition, in a case that an amount of data that the target resource supports for transmission is greater than an amount of data of a first logical channel, a first logical channel group, or a first service, the target resource may be further used to transmit data of a second logical channel or a second logical channel group; or in a case that an amount of data that the target resource supports for transmission is greater than an amount of data of a first HARQ process, the target resource may be further used to transmit data of a second logical channel, a second logical channel group, a second service, or a second HARQ process, or reassembly may be performed for a first HARQ process, where the first logical channel, the first logical channel group, or the first service is associated with the target resource, and the second logical channel, the second logical channel group, or the second service is not associated with the target resource. In other words, during the measurement gap, if the amount of data that the target resource supports for transmission is greater than that required for transmission of one or more of the logical channel, the logical channel group, the service, or the HARQ process associated with the target resource, remaining resources may be used to transmit one or more of a logical channel, a logical channel group, a service, or a HARQ process not associated with the target resource. Based on this, utilization of the target resource is improved.

The configuration information may be for all measurement gaps configured for the first terminal device. In other words, the configuration information is valid during all measurement gaps for the first terminal device. Based on this, the first terminal device may determine transmission strategies during all the measurement gaps based on the configuration information.

In addition, the configuration information may alternatively be for a specific measurement gap configured for the first terminal device. In other words, the configuration information is valid during part of measurement gaps for the first terminal device. The specific measurement gap may be a measurement gap at a specific location, such as measurement gaps at one or more locations within all the measurement gaps. For example, the specific measurement gap may be the 1^{st} measurement gap among all gaps, or the 1^{st}, 2^{nd}, and 3^{rd} measurement gaps among all gaps. The specific measurement gap may alternatively be a periodic specific measurement gap, for example, one or more specific measurement gaps occur every X periods, where X is a positive integer greater than or equal to 1. Further, the specific measurement gap may include a measurement gap configuration for a UE, or a measurement gap configuration for a frequency band, or a measurement gap configuration for radio frequency (radio frequency, RF). Configuration information for the specific measurement gap helps the terminal device determine different transmission strategies for different measurement gaps.

The configuration information may include first indication information, and the first indication information may be used to indicate a transmission occasion of the specific measurement gap, or a transmission occasion within the specific measurement gap, or a transmission occasion within all the measurement gaps. Based on this, the terminal device may determine a measurement gap within which the transmission occasion is located, so as to perform related transmission during the gap within which the transmission occasion is located.

In some implementations, the target resource may be a resource dedicated to a measurement gap; or the target resource is a resource associated with a measurement gap; or the target logical channel is a logical channel dedicated to a measurement gap; or the target logical channel is a logical channel associated with a measurement gap; or the target logical channel group is a logical channel group dedicated to a measurement gap; or the target logical channel group is a logical channel group associated with a measurement gap; or the target service is a service dedicated to a measurement gap; or the target service is a service associated with a measurement gap; or the target HARQ process is a HARQ process dedicated to a measurement gap; or the target HARQ process is a HARQ process associated with a measurement gap. In other words, the target resource cannot be used outside the measurement gap, nor for a logical channel other than a logical channel during the measurement gap or a logical channel associated with the measurement gap, nor for a logical channel group other than a logical channel group during the measurement gap or a logical channel group associated with the measurement gap, nor for a service other than a service during the measurement gap or a service associated with the measurement gap, nor for a HARQ process other than a HARQ process during the measurement gap or a HARQ process associated with the measurement gap. Based on this, resource conflicts during target transmission performed during the measurement gap based on the target resource may be avoided.

In some implementations, the method illustrated in FIG. 2 may further include step S220. In step S220, the first terminal device receives second indication information. The second indication information may be used to indicate an available transmission location of the target resource, or a time-frequency resource configuration available for transmission during a measurement gap. Based on the second indication information, the terminal device may perform related transmission based on the available transmission location of the target resource or based on a time-frequency resource available for transmission.

In some implementations, the first terminal device is a first terminal device satisfying a first condition, and the first condition is associated with one or more of the following: a terminal location; channel quality; a service at or being transmitted by the terminal device; a logical channel or a logical channel group configured for the terminal device; a capability of the terminal device; capability information transmitted by the terminal device to a network device; or a configuration of the terminal device that is associated with PUSCH duration or resource periodicity.

In an example, the first condition may be associated with the terminal location, and the first terminal device may be a terminal device at a specific location. The network device may perform related configuration for the terminal device at the specific location by using the configuration information, thereby facilitating a reduction in an impact of the measurement gap on the terminal device at the specific location.

In another example, the first condition may be associated with the channel quality, and the first terminal device may be a terminal device whose channel quality satisfies specific channel quality or is higher than specific channel quality. The network device may perform, by using the configuration information, related configuration for the terminal device whose channel quality satisfies the specific channel quality, thereby facilitating a reduction in an impact of the measurement gap on the terminal device with the specific channel quality.

In another example, the first condition may be associated with the service at or being transmitted by the terminal device, and the first terminal device may be a terminal device having or transmitting a specific service. The specific service may be a service having a specific latency requirement, a specific quality of service (quality of service, QoS) requirement, or a specific priority requirement. Alternatively, the specific service may be a specific type of service, such as an XR service, a service of performing PDU set processing, a service of identifying a PDU set, a service of supporting data (data) burst (butst) processing, or a service of identifying a data (data) burst (burst). The network device may perform, by using the configuration information, related configuration for the terminal device having or transmitting the specific service, thereby facilitating a reduction in an impact of the measurement gap on the terminal device having or transmitting the specific service.

In another example, the first condition may be associated with a logical channel or a logical channel group configured for the terminal device, and the first terminal device may be a terminal device configured with a specific logical channel or a specific logical channel group. The specific logical channel or logical channel group may refer to a logical channel or logical channel group having a specific latency requirement, a specific QoS requirement, or a specific priority requirement. The specific logical channel or logical channel group may alternatively refer to a logical channel or logical channel group that supports a specific service type, performs PDU set processing, identifies a PDU set, supports data burst processing, or identifies a data burst. The network device may perform, by using the configuration information, related configuration for the terminal device configured with the specific logical channel or logical channel group, thereby facilitating a reduction in an impact of the measurement gap on the terminal device configured with the specific logical channel or logical channel group.

In another example, the first condition may be associated with the capability of the terminal device, and the first terminal device may be a terminal device having a specific capability. The specific capability may be a capability of supporting UL and/or DL transmission during the measurement gap. The network device may perform, by using the configuration information, related configuration for the terminal device having the specific capability, thereby facilitating a reduction in an impact of the measurement gap on the terminal device having the specific capability.

In another example, the first condition may be associated with the capability information transmitted by the terminal device to the network device, and the first terminal device may be a terminal device that transmits capability information to the network device. The capability information includes one or more of the following: a capability of the terminal device to perform uplink and/or downlink transmission during a measurement gap; a resource location for the terminal device to perform uplink and/or downlink transmission during a measurement gap; a service that the terminal device is required to transmit during a measurement gap; a logical channel that the terminal device is required to use during a measurement gap; a logical channel group that the terminal device is required to use during a measurement gap; a signal or a channel that the first terminal device is required to transmit during a measurement gap; a HARQ process number that the first terminal device is required to transmit during a measurement gap; or whether the terminal device is required to be configured with a measurement gap. The network device may perform, by using the configuration information, related configuration for the terminal device that transmits the capability information to the network device, thereby facilitating a reduction in an impact of the measurement gap on the terminal device that transmits the capability information to the network device.

In another example, the first condition may be associated with the configuration of the terminal device that is associated with PUSCH duration or resource periodicity, and the first terminal device may be a terminal device having the configuration. For example, the configuration may be that the PUSCH duration is less than or equal to a specific PUSCH duration threshold, or that the resource periodicity is less than a specific resource periodicity threshold. The network device may perform, by using the configuration information, related configuration for the terminal device that transmits the capability information to the network device, thereby facilitating a reduction in an impact of the measurement gap on the terminal device that transmits the capability information to the network device.

In another example, the first condition may be associated with one or more in the foregoing. For example, the first condition is associated with the capability of the terminal device, and the terminal location. Therefore, the first terminal device may be a terminal device having both a specific capability and a specific location. The network device may perform, by using the configuration information, related configuration for the terminal device satisfying the first condition, thereby facilitating a reduction in an impact of the measurement gap on the terminal device satisfying the first condition.

In some implementations, the method illustrated in FIG. 2 further includes step S230. In step S230, the first terminal device performs a first operation based on the configuration information. The first operation may include one of the following: determining whether to perform uplink/downlink transmission in all measurement gaps, a specific measurement gap, a transmission occasion of a measurement gap, or an available transmission location within a measurement gap; or performing uplink/downlink transmission in all measurement gaps, a specific measurement gap, a transmission occasion of a measurement gap, or an available transmission location within a measurement gap. For example, the first terminal device determines, based on the configuration information, that uplink transmission may be performed in an available location within a specific measurement gap. During the specific measurement gap, the first terminal device performs uplink transmission in the available transmission location, thereby facilitating a reduction in an impact of the measurement gap on quality of service.

The uplink and/or downlink transmission may include one or more of the following: HARQ-acknowledgment (acknowledgment, ACK) information transmission; PUCCH transmission; SR transmission; CSI transmission; uplink grant transmission; PDCCH monitoring; DL-SCH reception; or transmission of a transport block (transmission block, TB) by a physical layer as instructed by a MAC layer.

How the terminal device performs related transmission during the measurement gap based on the configuration information from the network device is described in detail above. However, how the network device determines the configuration information is not yet specified. In view of this, a wireless communication method according to another embodiment of this application is described below in detail with reference to FIG. 3. The wireless communication method illustrated in FIG. 3 is applicable to any type of network device and terminal device mentioned above. For ease of understanding, a terminal device to which the method is applied is hereinafter referred to as a first terminal device.

As shown in FIG. 3, the method illustrated in FIG. 3 may include step S310.

In step S310, the first terminal device transmits first information to a network device. The first information is used to indicate one or more of the following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; capability information of the first terminal device that is associated with a measurement gap.

In an example, the first information may be used to indicate the transmission resource recommended for use by the first terminal device during the measurement gap. For example, the first information may indicate a specific uplink resource and/or a specific downlink resource. Accordingly, the network device may configure the above configuration information for the first terminal device based on the first information, for example, configure the target resource available for uplink and downlink transmission during the measurement gap for the terminal device.

In another example, the first information may alternatively be used to indicate the transmission resource configuration recommended for use by the first terminal device during the measurement gap. Accordingly, the network device may configure the above configuration information for the first terminal device based on the first information, for example, configure the target resource available for uplink and downlink transmission during the measurement gap for the terminal device.

In another example, the first information may alternatively be used to indicate the resource location of the transmission resource that is recommended for use by the first terminal device during the measurement gap. Accordingly, the network device may configure the above configuration information for the first terminal device based on the first information, for example, configure the target resource available for uplink and downlink transmission during the measurement gap for the terminal device.

In another example, the first information may alternatively be used to indicate the SPS and/or CG index that the first terminal device is required to use during the measurement gap. Accordingly, the network device may configure the above configuration information for the first terminal device based on the first information, for example, configure the target resource available for uplink and downlink transmission during the measurement gap for the terminal device.

In another example, the first information may alternatively be used to indicate the target service transmittable during the measurement gap. Accordingly, the network device may configure the above configuration information for the first terminal device based on the first information, for example, configure the target service transmittable during the measurement gap for the terminal device.

In another example, the first information may alternatively be used to indicate the logical channel that the first terminal device is required to use during the measurement gap. Accordingly, the network device may configure the above configuration information for the first terminal device based on the first information, for example, configure the target logical channel available for use during the measurement gap for the terminal device.

In another example, the first information may alternatively be used to indicate the logical channel group that the first terminal device is required to use during the measurement gap. Accordingly, the network device may configure the above configuration information for the first terminal device based on the first information, for example, configure the target logical channel group available for use during the measurement gap for the terminal device.

In another example, the first information may alternatively be used to indicate the HARQ process number that the first terminal device is required to use during the measurement gap. Accordingly, the network device may configure the above configuration information for the first terminal device based on the first information, for example, configure the target HARQ process available for use during the measurement gap for the terminal device.

In another example, the first information may alternatively be used to indicate the signal or the channel that the first terminal device is required to transmit during the measurement gap. Accordingly, the network device may configure the above configuration information for the first terminal device based on the first information, for example, configure, for the terminal device, whether at least one of uplink transmission or downlink transmission is executable during the measurement gap.

In another example, the first information may alternatively be used to indicate the capability information of the first terminal device that is associated with the measurement gap. Accordingly, the network device may configure the above configuration information for the first terminal device based on the first information, for example, configure, for the terminal device, whether the target transmission is executable during the measurement gap. The target transmission herein may be the target transmission described above.

In another example, the first information may alternatively be used to indicate a plurality of pieces of information in the foregoing information. For example, the first information may indicate the HARQ process number that the first terminal device is required to use during the measurement gap, and the signal or the channel that the first terminal device is required to transmit during the measurement gap. Accordingly, the network device may configure the above configuration information for the first terminal device based on the first information.

The capability information may include one or more of the following: a capability of the first terminal device to perform uplink and/or downlink transmission during a measurement gap; a location for the first terminal device to perform uplink and/or downlink transmission during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; a requirement of the first terminal device for a measurement gap. Based on the capability information, it facilitates the network device in more properly configuring the above configuration information for the terminal device.

The first information may be for all measurement gaps configured for the first terminal device, a first frequency band, or first RF. Alternatively, the first information may be for a specific measurement gap configured for the first terminal device, or the first frequency band, or the first RF. The specific measurement gap may be as described above. Alternatively, the first information may be for a transmission occasion of a measurement gap configured for the first terminal device, the first frequency band, or the first RF. Alternatively, the first information may be for an available transmission location within a measurement gap configured for the first terminal device, the first frequency band, or the first RF. Alternatively, the first information may be for a time-frequency resource configuration available for transmission during a measurement gap that is configured for the first terminal device, or the first frequency band, or the first RF. Based on the first information with a specific target, the network device may also configure the configuration information in a targeted manner.

Based on the method illustrated in FIG. 3, the terminal device transmits the first information to the network device, which facilitates the network device in configuring the above configuration information based on the first information.

As described above, the terminal device may provide a delay status of uplink data to the network by using a DSR procedure, so that the network device adjusts a scheduling strategy. However, how the terminal device performs DSR reporting is not specified. In view of this, a wireless communication method according to another embodiment of this application is described below in detail with reference to FIG. 4. The wireless communication method illustrated in FIG. 4 is applicable to any type of network device and terminal device mentioned above. For ease of understanding, a terminal device to which the method is applied is hereinafter referred to as a first terminal device.

As shown in FIG. 4, the method illustrated in FIG. 4 may include step S401.

In step S401, the first terminal device triggers first DSR, and/or transmits a first MAC CE. The first MAC CE may be a MAC CE corresponding to DSR, the first MAC CE may include information of at least one logical channel group, and the information of the one logical channel group may include remaining time information and data amount information.

Based on the method illustrated in FIG. 4, the first terminal device may perform DSR reporting by triggering the first DSR and/or transmitting the first MAC CE, which facilitates the network device in adjusting a scheduling strategy.

In some implementations, the first MAC CE and/or the information of the one logical channel group may satisfy at least one of the following conditions: the first MAC CE being a UL MAC CE; the first MAC CE being a DSR MAC CE; the first MAC CE being a fixed-size MAC CE or a variable-size MAC CE; the first MAC CE carrying information of only one LCG, or carrying information of a plurality of LCGs; the first MAC CE being for information of a buffer status (buffer status, BS) table (table) selected for an LCG, or for information of a buffer status table selected for the first terminal device or the first MAC CE; for one LCG, the first MAC CE carrying information about one or more amounts of data; remaining time of the one logical channel group being remaining time up to expiration of a PDCP discard timer; an amount of data of the one logical channel group being an amount of data corresponding to the remaining time, or an amount of data corresponding to a first threshold, or an amount of data whose corresponding remaining time is less than or equal to the remaining time, or an amount of data whose corresponding remaining time is less than or equal to the first threshold; or an amount of data of the one logical channel group being an amount of data of one piece of data, one PDU, or one PDU set within the logical channel group that satisfies a condition, or an amount of data of all data, PDUs, or PDU sets within the logical channel group that satisfy a condition. Based on this, it facilitates the terminal device in determining a MAC CE and/or a logical channel group to which the first DSR or the first MAC CE corresponds.

In some implementations, the one or more amounts of data may satisfy at least one of the following conditions: the one or more amounts of data being amounts of data whose remaining time is less than or equal to the first threshold; the plurality of amounts of data being amounts of data whose remaining time is less than or equal to different first thresholds; for one LCG, the one or more amounts of data being amounts of data whose remaining time is less than or equal to the first threshold; or for one LCG, the plurality of amounts of data being amounts of data whose remaining time is less than or equal to different first thresholds. Based on this, it facilitates the terminal device in determining one or more amounts of data corresponding to the reported data amount information.

In some implementations, the one or more amounts of data may satisfy at least one of the following conditions: remaining time corresponding to the one or more amounts of data being less than or equal to the first threshold; remaining time corresponding to the plurality of amounts of data being less than or equal to different first thresholds; for one LCG, remaining time corresponding to one or more reported amounts of data being less than or equal to the first threshold; or for one LCG, remaining time corresponding to a plurality of reported amounts of data being less than or equal to different first thresholds. Based on this, it facilitates the terminal device in determining one or more amounts of data corresponding to the reported data amount information.

In some implementations, the first threshold may be a threshold configured for one of the following: logical channel group; data radio bearer; or terminal device. Based on this, it facilitates the terminal device in determining source of the reported amount of data.

In some implementations, one amount of data may be one of the following: an amount of data corresponding to minimum remaining time; or all amounts of data whose corresponding remaining time is less than or equal to the first threshold. Based on this, it facilitates the terminal device in determining source of the above one amount of data.

In some implementations, in a case that data in the one logical channel group triggers reporting of the first MAC CE, the first DSR may include one amount of data; or in a case that data in the one logical channel group triggers reporting of the first MAC CE, the first DSR may include a plurality of amounts of data; or in a case that minimum remaining time corresponding to data in the one logical channel group is greater than or equal to the first threshold, the first DSR may include one amount of data; or in a case that minimum remaining time corresponding to data in the one logical channel group is greater than or equal to the first threshold, the first DSR may include a plurality of amounts of data; or in a case that minimum remaining time corresponding to data in the one logical channel group is less than or equal to the first threshold, the first DSR may include one amount of data; or in a case that minimum remaining time corresponding to data in the one logical channel group is less than or equal to the first threshold, the first DSR may include a plurality of amounts of data. Based on this, it facilitates the terminal device in determining whether the first DSR includes one amount of data or a plurality of amounts of data.

In some implementations, the plurality of amounts of data may satisfy at least one of the following conditions: corresponding to one LCG, where the plurality of amounts of data corresponding to the one LCG correspond to a plurality of data packets, and remaining time corresponding to each of the plurality of data packets is less than or equal to the first threshold; or corresponding to a plurality of LCGs, where the plurality of amounts of data corresponding to the plurality of LCGs correspond to a plurality of data packets, and remaining time corresponding to each of the plurality of data packets is less than or equal to the first threshold. Based on this, it facilitates the terminal device in determining source of the above plurality of amounts of data.

In some implementations, the first threshold may be a DSR reporting threshold. Alternatively, the first threshold may be a DSR trigger threshold. Further, the first threshold may include a second threshold and a third threshold, one of the second threshold and the third threshold may be a DSR trigger threshold, and the other of the second threshold and the third threshold may be a DSR reporting threshold.

In some implementations, the one or more amounts of data may include an amount of data for the second threshold and/or the third threshold.

In a case that a value of the second threshold is different from a value of the third threshold, the one or more amounts of data may include one or more of the following: an amount of data whose corresponding remaining time is between the second threshold and the third threshold; an amount of data whose corresponding remaining time is greater than the second threshold; an amount of data whose corresponding remaining time is greater than the third threshold; an amount of data whose corresponding remaining time is less than or equal to the second threshold; or an amount of data whose corresponding remaining time is less than or equal to the third threshold. Based on this, it facilitates the terminal device in determining an amount of data for the second threshold or the third threshold.

In a case that the third threshold is greater than the second threshold, the first DSR may include one amount of data, where the one amount of data may include one of the following: an amount of data corresponding to the third threshold; an amount of data whose corresponding remaining time is less than or equal to the third threshold; an amount of data corresponding to the second threshold; or an amount of data whose corresponding remaining time is less than or equal to the second threshold. Based on this, it facilitates the terminal device in determining an amount of data for the second threshold or the third threshold when the third threshold is greater than the second threshold.

If the third threshold is greater than the second threshold, the first DSR may include a plurality of amounts of data, where the plurality of amounts of data may include one of the following: a plurality of amounts of data whose corresponding remaining time is less than or equal to the third threshold; an amount of data whose corresponding remaining time is less than or equal to the third threshold; an amount of data whose corresponding remaining time is greater than or equal to the second threshold, and/or an amount of data whose corresponding remaining time is less than the second threshold; or a plurality of amounts of data whose corresponding remaining time is less than or equal to the second threshold. Based on this, it facilitates the terminal device in determining a plurality of amounts of data for the second threshold or the third threshold when the third threshold is greater than the second threshold.

In some implementations, in a case that minimum remaining time corresponding to data in the one logical channel group is greater than or equal to the second threshold, the first DSR may include one amount of data; or in a case that remaining time corresponding to part of data in the one logical channel group is greater than the second threshold, and remaining time corresponding to part of data in the one logical channel group is less than or equal to the second threshold, the first DSR may include one amount of data; or in a case that data in the one logical channel group triggers reporting of the MAC CE, the first DSR may include one amount of data. Based on this, it facilitates the terminal device in determining a corresponding case when the first DSR includes one amount of data.

In some implementations, one amount of data may be one of the following: an amount of data corresponding to minimum remaining time; or an amount of data whose corresponding remaining time is less than or equal to the second threshold. Based on this, it facilitates the terminal device in determining source of the one amount of data.

In some implementations, in a DSR MAC CE, a data status reported for a single LCG is an amount of data associated with all data packets in the LCG whose remaining time is less than a configured threshold. Based on this, it facilitates the terminal device in determining an amount of data reported for a single LCG. (In a DSR MAC CE, the data status reported for an individual LCG is the data volume associated with all packets in that LCG whose remaining time is below the configured threshold.)

In some implementations, in a case that data in the one logical channel group triggers reporting of the MAC CE, the first DSR may include a plurality of amounts of data; or in a case that minimum remaining time corresponding to data in the one logical channel group is less than or equal to the second threshold, the first DSR may include a plurality of amounts of data; or in a case that minimum remaining time corresponding to data in the one logical channel group is greater than or equal to the second threshold, the first DSR may include a plurality of amounts of data; or in a case that remaining time corresponding to part of data in the one logical channel group is greater than the second threshold, and remaining time corresponding to part of data is less than or equal to the second threshold, the first DSR may include a plurality of amounts of data. Based on this, it facilitates the terminal device in determining a corresponding case when the first DSR includes a plurality of amounts of data.

In some implementations, the plurality of amounts of data may include one of the following: a plurality of amounts of data whose corresponding remaining time is less than or equal to the second threshold; an amount of data whose corresponding remaining time is less than or equal to the second threshold, and an amount of data whose corresponding remaining time is between the second threshold and the third threshold; an amount of data whose corresponding remaining time is less than or equal to the third threshold, and an amount of data whose corresponding remaining time is between the second threshold and the third threshold; or a plurality of amounts of data whose corresponding remaining time is less than or equal to the second threshold, and an amount of data whose remaining time is the minimum remaining time. Based on this, it facilitates the terminal device in determining source of the plurality of amounts of data.

In some implementations, the method illustrated in FIG. 4 may further include step S402. In step S402, the first terminal device determines, based on a target PDU and/or a target service data unit (service data unit, SDU) in a PDCP layer, an amount of data associated with the first DSR. Based on this, it facilitates the terminal device in determining a method for determining the amount of data associated with the first DSR in the PDCP layer.

In some implementations, the target PDU and/or the target SDU may include one or more of the following: a PDU and/or an SDU corresponding to minimum remaining time; or a PDU and/or an SDU whose corresponding remaining time is less than or equal to a first threshold. Based on the minimum remaining time and/or the first threshold, it facilitates the terminal device in determining the target PDU and/or the target SDU.

In some implementations, the target PDU and/or the target SDU may include one or more of the following: an SDU or a PDU that is not assembled; an SDU or a PDU that is newly transmitted; an SDU or a PDU that requires retransmission; or a control PDU. Based on the SDU or the PDU that is not assembled, and/or the SDU or the PDU that is newly transmitted, and/or the SDU or the PDU that requires retransmission, it facilitates the terminal device in determining the target PDU and/or the target SDU.

In some implementations, the target PDU and/or the target SDU may not include one or more of the following: a PDU or an SDU that has not been submitted to a lower layer of the PDCP layer and is indicated to be discarded; a PDU or an SDU that has been submitted to a lower layer of the PDCP layer and is indicated to be discarded; or a PDU or an SDU that has not been submitted to a lower layer of a radio link control (radio link control, RLC) layer and is indicated to be discarded; a PDU or an SDU that has been submitted to a lower layer of an RLC layer and is indicated to be discarded; or a PDU or an SDU for which a value of a PDCP discard timer is 0 or for which a PDCP discard timer is stopped. Based on this, it facilitates the terminal device in excluding non-target PDUs and/or non-target SDUs.

In some implementations, the method illustrated in FIG. 4 may further include step S403. In step S403, in a case in which at least one of the target PDU or the target SDU includes no control PDU, the first terminal device preferentially transfers a data PDU or SDU to a MAC layer after receiving an uplink grant; or in a case in which at least one of the target PDU or the target SDU does not include an SDU or a PDU that requires retransmission, the first terminal device preferentially transfers a newly transmitted SDU or PDU to a MAC layer after receiving an uplink grant. Based on this, it facilitates the terminal device in determining the SDU or PDU to be preferentially transferred to the MAC layer.

In some implementations, the PDCP layer may transmit the first information to an RLC layer, and the first information is used by the RLC layer to determine an amount of data associated with the first DSR. Based on the first information, it facilitates the RLC layer in determining the amount of data associated with the first DSR.

In some implementations, the method illustrated in FIG. 4 may further include step S404. In step S404, the first terminal device determines, based on a target PDU and/or a target SDU in an RLC layer, an amount of data associated with the first DSR. Based on this, it facilitates the terminal device in determining a method for determining the amount of data associated with the first DSR in the RLC layer.

In some implementations, the target PDU and/or the target SDU may include one or more of the following: a PDU and/or an SDU corresponding to minimum remaining time; or a PDU and/or an SDU whose corresponding remaining time is less than or equal to a first threshold. Based on the minimum remaining time and/or the first threshold, it facilitates the terminal device in determining the target PDU and/or the target SDU.

In some implementations, the target PDU and/or the target SDU may include one or more of the following: an SDU or a PDU that is not assembled; an SDU or a PDU that is newly transmitted; an SDU or a PDU that requires retransmission. Based on the SDU or the PDU that is not assembled, and/or the SDU or the PDU that is newly transmitted, and/or the SDU or the PDU that requires retransmission, it facilitates the terminal device in determining the target PDU and/or the target SDU.

In some implementations, the target PDU and/or the target SDU may not include one or more of the following: a PDU or an SDU that has not been submitted to a lower layer of the RLC layer and is indicated to be discarded; a PDU or an SDU that has been submitted to a lower layer of an RLC layer and is indicated to be discarded. Based on this, it facilitates the terminal device in excluding non-target PDUs and/or non-target SDUs.

In some implementations, the method illustrated in FIG. 4 may further include step S405. In step S405, in a case in which at least one of the target PDU or the target SDU does not include an SDU or a PDU that requires retransmission, the first terminal device preferentially transfers a newly transmitted SDU or PDU to a MAC layer after receiving an uplink grant. Based on this, it facilitates the terminal device in determining the SDU or PDU to be preferentially transferred to the MAC layer.

In some implementations, the method illustrated in FIG. 4 further includes step S406. In step S406, the first terminal device triggers a scheduling request SR.

In some implementations, the method illustrated in FIG. 4 may further include step S407. In step S407, in a case in which a first condition is satisfied, a MAC entity of the first terminal device triggers the SR, where the first condition includes at least one of the following: a DSR procedure determining that at least one DSR has been triggered and not cancelled (If the DSR procedure determines that at least one DSR has been triggered and not cancelled.); no UL-SCH resource being available for a new transmission (If no UL-SCH resource is available for a new transmission.); a UL-SCH resource that is available for a new transmission being incapable of accommodating a DSR MAC CE plus its subheader as a result of logical channel prioritization (If the UL-SCH resource that is availale for a new transmission can not accommodate the DSR MAC CE plus its subheader as a result of logical channel prioritization.). Based on the first condition, it facilitates the terminal device in determining a case in which the SR is triggered by the MAC entity.

In some implementations, the method illustrated in FIG. 4 may further include step S408. Step S408 may be at least one of the following: determining, by the first terminal device based on an RRC configuration, a correspondence between an SR configuration and a DSR, where the correspondence includes: one or more SR configurations corresponding to one or more DSRs; and/or a DSR having a corresponding SR configuration or having no corresponding SR configuration; and/or an SR configuration of a logical channel (logical channel, LCH) that triggered a DSR being considered as a corresponding SR configuration for the triggered SR (The SR configuration of the logical channel that triggered a DSR is considered as corresponding SR configuration for the triggered SR.); in a case in which a second condition is satisfied, canceling, by the first terminal device, all pending SR(s) for DSR triggered according to a DSR procedure prior to MAC PDU assembly (All pending SR(s) for DSR triggered according to the DSR procedure prior to the MAC PDU assembly shall be cancelled.), and/or stopping a prohibit timer corresponding to a canceled SR (sr-ProhibitTimer shall be stopped), where the second condition includes at least one of the following: in a case in which a MAC CE is generated, when a MAC PDU is transmitted, the MAC PDU including a DSR MAC CE; when a MAC PDU is transmitted, the MAC PDU including a DSR MAC CE, where the DSR MAC CE includes remaining time information up to (and including) the last event that triggered a DSR prior to the DSR MAC CE assembly; or when a MAC PDU is transmitted, the DSR MAC PDU includes a DSR MAC CE, where the DSR MAC CE includes remaining time information up to (and including) the last DSR report and prior to the MAC PDU assembly (When the MAC PDU is transmitted, this PDU includes a DSR MAC CE, this PDU includes a DSR MAC CE which contains remaining time info up to (and including) the last event that triggered a DSR prior to the MAC PDU assembly, this PDU includes a DSR MAC CE which contains remaining time info up to (and including) the last DSR reporting and prior to the MAC PDU assembly.); or in a case in which a third condition is satisfied, canceling, by the first terminal device, all pending SR(s) for DSR triggered according to a DSR procedure (All pending SR(s) for DSR triggered according to the DSR procedure shall be cancelled, or/and, each respective *sr-ProhibitTimer* shall be stopped.), and/or stopping a prohibit timer corresponding to a canceled SR, where the third condition is: an UL grant(s) being capable of accommodating all pending data available for transmission (The UL grant(s) can accommodate all pending data available for transmission.). Based on this, it facilitates the terminal device in determining a correspondence between an SR configuration and a DSR, and/or determine a condition for canceling the pending SR.

In some implementations, the method illustrated in FIG. 4 may further include step S409. In step S409, the first terminal device triggers a random access procedure (random access procedure); and/or the first terminal device triggers a procedure of canceling the pending SR (cancel the pending SR).

In some implementations, the method illustrated in FIG. 4 may further include step S410. In step S410, in a case in which there is a pending SR and the pending SR corresponds to DSR, in a case that a MAC entity of the first terminal device has no available PUCCH resource for the pending SR, the MAC entity triggers the random access procedure in a special cell (SpCell). Based on this, it facilitates the terminal device in determining a case in which a random access procedure is triggered by the MAC entity in a special cell.

In some implementations, the method illustrated in FIG. 4 may further include step S411. In step S411, the MAC entity of the first terminal device stops an ongoing random access procedure, where the random access procedure corresponds to a pending SR corresponding to DSR, and the SR is initiated by the MAC entity prior to MAC PDU assembly and which has no valid PUCCH resources configured (SR was initiated by the MAC entity prior to the MAC PDU assembly and which has no valid PUCCH resources configured). Based on this, it facilitates the terminal device in determining a case in which an ongoing random access procedure is stopped by the MAC entity.

In some implementations, the method illustrated in FIG. 4 may further include step S412. Step S412 may be at least one of the following: transmitting, by the first terminal device, a MAC PDU using a UL grant, where the UL grant does not include a UL grant provided by the random access procedure and/or a UL grant for transmission of a message A (message A, MSGA) payload, the MAC PDU includes a DSR MAC CE, and the DSR MAC CE includes remaining time information, where optionally, the remaining time information is remaining time information up to (and including) the last event that triggered a DSR prior to the MAC PDU assembly (A MAC PDU is transmitted using a UL grant other than a UL grant provided by Random Access Response or a UL grant determined as specified in clause 5.1.2a for the transmission of the MSGA payload, and this PDU includes a DSR MAC CE which contains remaining time info up to (and including) the last event that triggered a DSR prior to the MAC PDU assembly.); transmitting, by the first terminal device, a MAC PDU using a UL grant, where the UL grant does not include a UL grant provided by the random access procedure and/or a UL grant for transmission of an MSGA payload, the MAC PDU includes a DSR MAC CE, and the DSR MAC CE includes remaining time information, where optionally, the remaining time information is remaining time information up to (and including) the last DSR reporting and prior to the MAC PDU assembly (A MAC PDU is transmitted using a UL grant other than a UL grant provided by Random Access Response or a UL grant determined as specified in clause 5.1.2a for the transmission of the MSGA payload, and this PDU includes a DSR MAC CE which contains remaining time info up to (and including) the last DSR reporting and prior to the MAC PDU assembly.); or transmitting, by the first terminal device, a MAC PDU using a UL grant, where the UL grant is capable of accommodating all pending data available for transmission (The UL grant(s) can accommodate all pending data available for transmission.). Based on this, it facilitates the terminal device in determining which UL grant is used for transmitting the MAC PDU.

With reference to FIG. 5, the following describes in detail a wireless communication method according to another embodiment of this application. The wireless communication method illustrated in FIG. 5 is applicable to any type of network device and terminal device mentioned above.

As shown in FIG. 5, the method illustrated in FIG. 5 may include step S501.

In step S501, the terminal device reports buffer size (buffer size) information by using one or more LCGs. The one or more LCGs may be configured to report the buffer size information by using a first BSR table and a second BSR table, or may at least be configured to report the buffer size information by using the second BSR table. There may be a first difference between the first BSR table and the second BSR table, and the first difference includes one or more of the following: a difference in granularity; a difference in an indication range of a BS; a difference in a value range; or a difference in identifiers of tables.

Based on the method illustrated in FIG. 5, the terminal device may report the buffer size information by using different BSR tables, thereby facilitating the terminal device in reporting complete buffer size information.

In some implementations, the first BSR table and the second BSR table may be used for reporting the buffer size information for triggered regular (regular) BSR, periodic (periodic) BSR, and/or padding (padding) BSR. In other words, both the foregoing two BSR tables may accommodate buffer size information of different BSRs, thereby helping improve reporting efficiency of the buffer size information.

In some implementations, the method illustrated in FIG. 5 may further include step S502. In step S502, the terminal device triggers short BSR and/or performs reporting by using a short BSR MAC CE for triggered regular BSR; or the terminal device triggers long BSR and/or performs reporting by using a long BSR MAC CE for triggered regular BSR; or the terminal device triggers enhanced short BSR and/or performs reporting by using an enhanced short BSR MAC CE for triggered regular BSR; or the terminal device triggers enhanced long BSR and/or performs reporting by using an enhanced long BSR MAC CE for triggered regular BSR, where information included in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table. The terminal device may select to trigger different BSRs, or may report triggered regular BSRs by using different MAC CEs, thereby facilitating improvement in flexibility of regular BSR reporting.

In some implementations, the method illustrated in FIG. 5 may further include step S503. In step S503, the terminal device triggers short BSR and/or performs reporting by using a short BSR MAC CE for triggered periodic BSR; or the terminal device triggers long BSR and/or performs reporting by using a long BSR MAC CE for triggered periodic BSR; or the terminal device triggers enhanced short BSR and/or performs reporting by using an enhanced short BSR MAC CE for triggered periodic BSR; or the terminal device triggers enhanced long BSR and/or performs reporting by using an enhanced long BSR MAC CE for triggered periodic BSR, where information included in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table. The terminal device may select to trigger different BSRs or report triggered periodic BSRs by using different MAC CEs, thereby facilitating improvement in flexibility of periodic BSR reporting.

In some implementations, the method illustrated in FIG. 5 may further include step S504. In step S504, the terminal device triggers short BSR and/or performs reporting by using a short BSR MAC CE for triggered padding BSR; or the terminal device triggers long BSR and/or performs reporting by using a long BSR MAC CE for triggered padding BSR; or the terminal device triggers enhanced short BSR and/or performs reporting by using an enhanced short BSR MAC CE for triggered padding BSR; or the terminal device triggers enhanced long BSR and/or performs reporting by using an enhanced long BSR MAC CE for triggered padding BSR; or the terminal device triggers enhanced short truncated BSR and/or performs reporting by using an enhanced short truncated BSR MAC CE for triggered padding BSR; or the terminal device triggers enhanced long truncated BSR and/or performs reporting by using an enhanced long truncated BSR MAC CE for triggered padding BSR, where information included in one or more of the enhanced short BSR, the enhanced short BSR MAC CE, the enhanced long BSR, the enhanced long BSR MAC CE, the enhanced short truncated BSR, the enhanced short truncated BSR MAC CE, the enhanced long truncated BSR, or the enhanced long truncated BSR MAC CE corresponds to the buffer size information corresponding to the second BSR table, or a corresponding buffer size is reported by using the second BSR table. The terminal device may select to trigger different BSRs, or may report triggered padding BSRs by using different MAC CEs, thereby facilitating improvement of reporting flexibility for padding BSR.

In some implementations, the method illustrated in FIG. 5 may further include step S505. In step S505, the terminal device skips triggering short BSR and/or skips performing reporting by using a short BSR MAC CE for triggered padding BSR; and/or the terminal device skips triggering short truncated BSR and/or skips performing reporting by using a short truncated BSR MAC CE for triggered padding BSR; or the terminal device skips triggering long truncated BSR and/or skips performing reporting by using a long truncated BSR MAC CE for triggered padding BSR. For the triggered padding BSR, the terminal device may select to skip triggering a specific BSR, or not to use a specific MAC CE, thereby facilitating more reasonable reporting of a padding BSR.

In some implementations, the method illustrated in FIG. 5 may further include step S506. In step S506, the terminal device determines, based on a first factor, a type of BSR to be triggered and/or a type of a MAC CE to be used, where the first factor includes one or more of the following: a quantity of LCGs having data to be transmitted; a size of a padding bit, a MAC PDU, a PUSCH for transmitting a BSR MAC CE, or a UL grant; whether an LCG is configured to report the buffer size information by using the second BSR table; a size of a BSR MAC CE plus its subheader; a size of data to be transmitted for at least one LCG; or whether BSR to be triggered is periodic BSR, regular BSR, or padding BSR. Based on the first factor, it facilitates the terminal device in more reasonably determining a type of BSR to be triggered and/or a type of a MAC CE to be used.

In some implementations, the determining, by the terminal device based on the first factor, the type of the BSR to be triggered and/or the type of the MAC CE to be used may include: first determining, by the terminal device, whether the BSR to be triggered is periodic BSR, regular BSR, or padding BSR, and then determining another first factor. When determining the type of the BSR to be triggered and/or the type of the MAC CE to be used, the terminal device first determines which category the BSR to be triggered belongs to, thereby facilitating more targeted determination of the type of the BSR to be triggered and/or the type of the MAC CE to be used.

In some implementations, the determining, by the terminal device based on the first factor, the type of the BSR to be triggered and/or the type of the MAC CE to be used may include: first determining, by the terminal device, whether the LCG is configured to report the buffer size information by using the second BSR table, and the size of the data to be transmitted for the at least one LCG; and then determining another first factor; or first determining, by the terminal device, a size relationship between the size of the padding bit, the MAC PDU, the PUSCH for transmitting the BSR MAC CE, or the UL grant and the size of the BSR MAC CE plus its subheader, then whether the LCG is configured to report the buffer size information by using the second BSR table, and the size of the data to be transmitted for the at least one LCG; and then determining another first factor; or first determining, by the terminal device, the quantity of LCGs having data to be transmitted, then whether the LCG is configured to report the buffer size information by using the second BSR table, and the size of the data to be transmitted for the at least one LCG; and then determining another first factor. Based on this, the terminal device may more reasonably determine a type of BSR to be triggered and/or a type of a MAC CE to be used.

In some implementations, the method illustrated in FIG. 5 may further include step S507. In step S507, in a case that a first case is satisfied, the terminal device triggers BSR, where the BSR includes one or more of the following: enhanced short BSR, enhanced short truncated BSR, enhanced long BSR, or enhanced long truncated BSR; and/or in a case that the first case is satisfied, the terminal device uses a MAC CE, where the MAC CE includes one or more of the following: an enhanced short BSR MAC CE, an enhanced short truncated BSR MAC CE, an enhanced long BSR MAC CE, or an enhanced long truncated BSR MAC CE, where the first case is that one or more LCGs are configurable to report the buffer information by using at least the second BSR table, and an amount of data to be transmitted for the at least one LCG satisfies a first condition, where the first condition is one of the following: a size of the data to be transmitted for the at least one LCG is within a range of an amount of data corresponding to the second BSR table; or the size of the data to be transmitted for the at least one LCG is less than or equal to a maximum value of the amount of data corresponding to the second BSR table, and the size of the data to be transmitted for the at least one LCG is greater than or equal to a minimum value of the amount of data corresponding to the second BSR table. Based on the first case, the terminal device may determine, in a more targeted manner, the type of the BSR to be triggered.

In some implementations, the method illustrated in FIG. 5 may further include step S508. In step S508, in a case that a plurality of LCGs satisfy the first case, the terminal device reports enhanced long BSR for periodic BSR and/or regular BSR, where the reporting is for all LCGs, or for all LCGs configured to report the buffer information by using at least the second BSR table; in a case that one LCG satisfies the first case, the terminal device reports short BSR or enhanced short BSR for periodic BSR and/or regular BSR, where the reporting is for the one LCG; or in a case that a plurality of LCGs do not satisfy the first case, the terminal device reports long BSR for periodic BSR and/or regular BSR, where the reporting is for all LCGs; otherwise, the terminal device reports short BSR. Based on this, it facilitates the terminal device in selecting, for periodic BSR and/or regular BSR in the first case, an appropriate BSR type for reporting.

In some implementations, the method illustrated in FIG. 5 may further include step S509. In step S509, in a case that a second case is satisfied, the terminal device reports enhanced long BSR for periodic BSR and/or regular BSR, where the reporting is for all LCGs, or for all LCGs configured to report the buffer information by using at least the second BSR table; in a case that the second case is not satisfied, the terminal device reports long BSR for periodic BSR and/or regular BSR, where the reporting is for all LCGs; or in a case that one LCG has data to be transmitted, the terminal device reports short BSR for periodic BSR and/or regular BSR, where the reporting is for the one LCG; or in a case that one LCG has data to be transmitted, the one LCG is configured to report the buffer information by using at least the second BSR table, and an amount of data to be transmitted for the one LCG satisfies the first condition, the terminal device reports enhanced short BSR for periodic BSR and/or regular BSR; otherwise, the terminal device reports short BSR, where the reporting is for the one LCG, where the second case is as follows: in a case in which a plurality of LCGs have data to be transmitted, at least one of the LCGs may be configured to report the buffer information by using at least the second BSR table, and an amount of data to be transmitted for the one LCG satisfies the first condition. Based on this, it facilitates the terminal device in selecting, for periodic BSR and/or regular BSR in the second case, an appropriate BSR type for reporting.

In some implementations, the method illustrated in FIG. 5 may further include step S510. In step S510, the terminal device determines, for padding BSR first based on a third case and then based on a fourth case, a type of BSR to be reported; or the terminal device determines, for padding BSR first based on the fourth case and then based on the third case, a type of BSR to be reported, where the third case is that one or more LCGs are configurable to report the buffer size information by using at least the second BSR table, and an amount of data to be transmitted for at least one of the LCGs satisfies the first condition; and the fourth case is that a size of a padding bit and a size of a MAC CE plus its subheader are expected sizes, and/or a plurality of LCGs have data to be transmitted. Based on this, it facilitates the terminal device in selecting, for padding BSR, an appropriate BSR type for reporting.

The following describes, with reference to specific embodiments, the method provided in embodiments of this application.

### Embodiment 1

In Embodiment 1, a network may configure at least one of a resource for uplink and/or downlink data transmission, a service, or a logical channel (group) available for use by a UE during a measurement gap. Optionally, the resource is a resource dedicated for use during the measurement gap, or a resource associated with the measurement gap. Optionally, at least one of the resource, the service, or the logical channel (group) may be for all locations within the measurement gap, or may be for different locations within the measurement gap. Optionally, the network may configure the resource and indicate for which service/logical channel the resource can be used. Optionally, the UE is a first UE. For a specific implementation process of Embodiment 1, reference may be made to the following steps.
1. The UE receives RRC configuration information from the network. The RRC configuration information is configuration information dedicated to the UE, or configuration information dedicated to a UE group, or configuration information dedicated to a cell. Specifically, content of the RRC configuration information includes at least one of the following:
   a) measurement gap configuration parameters, optionally, including at least one of the following:
      i. the measurement gap configuration parameters including: MGL, MGRP, gapOffset, and the like.
   b) first configuration information for the measurement gap, for example, at least one of a resource for uplink and/or downlink data transmission, a service, or a logical channel (group) available for use by the UE during the measurement gap, which includes at least one of the following:
      i. at least one of a resource for uplink and/or downlink data transmission, a service, or a logical channel (group) available for use by the UE during the measurement gap. Optionally, at least one of the resource, the service, or the logical channel (group) is a resource/service/LCH/LCG dedicated for use during the measurement gap, or a resource/service/LCH/LCG associated with the measurement gap. Optionally, at least one of the resource, the service, or the logical channel (group) may be for all locations within the measurement gap, or may be for a specific gap (for example, a particular measurement gap, or several particular measurement gaps). Optionally, the specific gap may correspond to a periodic measurement gap location (where one or N specific measurement gaps occur every X periods), or may correspond to a specific location. Optionally, the network configures a service or a logical channel (group) that can use the resource. In other words, the network configures an association relationship between the service or the logical channel (group) and the resource (that is, only the service or the logical channel (group) that is associated with the resource can use the resource for transmission).
      ii. for example, a transmission resource (for example, a specific UL grant) configured by a base station for the UE to transmit UL information during a measurement gap, or during a specific X^{th} measurement gap. The UE performs UL transmission by using the transmission resource for transmitting the UL information. Optionally, the network may indicate an identifier of an LCH/LCG that can be transmitted by using the resource. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
      iii. for example, a transmission resource (for example, a specific DL assignment) configured by the base station for the UE to transmit DL information during a measurement gap, or during a specific Y^{th} measurement gap. The UE performs DL transmission by using the transmission resource for transmitting the DL information.
   c) second configuration information for a measurement gap, for example, configuration information for the UE to perform PDCCH monitoring during the measurement gap, or for the UE to perform DG transmission based on PDCCH scheduling during the measurement gap. Specifically, the second configuration information includes at least one of the following:
      i. the configuration information being at least one of a PUSCH/PDSCH/PDCCH-related configuration, a search space-related configuration, an identifier related to an RNTI or a C-RNTI, a PDCCH reception location, or the like.
      ii. a correspondence between the resource scheduled by the PDCCH and at least one of the service or the logical channel (group) that can use the resource. In other words, the network configures a service or a logical channel (group) that can use the resource, or only a service or a logical channel (group) having the correspondence can use the resource for transmission.
      iii. Optionally, at least one of the resource, the service, or the logical channel (group) may be for all locations within the measurement gap, or for different locations within the measurement gap.
      iv. For example, the base station configures a PDCCH search space and/or an RNTI and/or a PDCCH location without considering the measurement gap. The UE performs related PDCCH detection regardless of whether the PDCCH search space and/or RNTI and/or the PDCCH location fall within the measurement gap, and performs UL and/or DL transmission according to PDCCH scheduling. Optionally, for UL, the UE determines, according to a mapping relationship that is between an LCH/LCG and a resource and configured by the network, an LCH/LCG that can be carried on the obtained resource for performing UL transmission.
      v. For example, for UL, the network may indicate an identifier of an LCH/LCG that can be transmitted by using the resource scheduled by the PDCCH. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
      vi. For example, the network indicates whether the PDCCH search space and/or the RNTI and/or the PDCCH location is applicable to all measurement gaps, or is applicable to a specific measurement gap location (for example, several measurement gaps, or several particular measurement gaps, or a measurement gap with a particular sequence number). Optionally, the specific gap may correspond to a periodic measurement gap location (where one or N specific measurement gaps occur every X periods). In other words, the UE may not consider at which locations within a measurement gap or at which time/frequency locations corresponding to particular measurement gaps the UE may monitor a PDCCH and/or perform PUSCH/PDSCH transmission corresponding to a PDCCH (based on the PDCCH search space and/or the RNTI and/or the PDCCH location configured by the network).
   d) CG/SPS configuration. Optionally, the network may indicate a measurement gap or a specific measurement gap (for example, a particular measurement gap, or several particular measurement gaps) within which the configuration applies. Optionally, the specific gap may correspond to a CG/SPS configuration that can be used in a periodic measurement gap location (where one or N specific measurement gaps occur every X periods), and/or a CG/SPS location. Specifically, the configuration may include at least one of the following:
      i. The SPS/CG configuration may be an index.
         » For example, the network may indicate an index of a CG/SPS that can be used during the measurement gap. The UE may perform transmission during the measurement gap by using a resource corresponding to the index of the CG/SPS.
      ii. The CG/SPS location may be a specific occasion, such as resources within a particular CG/SPS period or several particular CG/SPS periods, or a particular occasion or several particular occasions within a CG/SPS period.
         » For example, the network may indicate an occasion(s) of a CG/SPS that can be used during the measurement gap. The UE may perform transmission during the measurement gap by using the occasion(s) of the CG/SPS.
         » For example, one CG/SPS configuration may include a plurality of CG/SPS occasions within one period. If the network indicates that the 1^{st} occasion can be used during the measurement gap, the UE may perform transmission during the measurement gap by using the 1^{st} occasion.
         » For example, one CG/SPS configuration may include one or more CG/SPS occasions within one period. If the network indicates which occasion(s) can be used during the measurement gap, the UE may perform transmission during the measurement gap by using the occasion(s). The occasion(s) may correspond to one period or a plurality of periods.
      iii. Optionally, the network may configure a mapping relationship between the CG and an LCH, a service, or an LCG for the measurement gap.
         ➢ For example, for UL, the network may indicate an identifier of an LCH/LCG that can be transmitted by using the CG resource. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
   e) Indication information to be transmitted to the UE for enable/disable of transmission by the UE during the measurement gap. (Optionally, the information may be included in dedicated RRC information, or may be included in system information).
   f) The UE is a first UE. Optionally, the first UE is at least one of the following:
      i. a UE whose channel quality satisfies a first condition, for example, a UE whose channel quality is greater than a first threshold.
      ii. a UE that has or is using a first service. For example, the first service is a service having a specific latency requirement, a service type, a QoS parameter, a priority, or performing PDU set processing. The first service is a service of identifying a PDU set, supporting data butst handling, or identifying a data burst.
      iii. a UE configured with a first LCH/LCG. For example, the first LCH/LCG is an LCH/LCG having a specific latency requirement, a service type, a QoS parameter, a priority, or performing PDU set handling. The first LCH/LCG is an LCH/LCG for identifying a PDU set, supporting data butst handling, or identifying a data burst.
      iv. a UE that supports UL and/or DL transmission during a measurement gap.
      v. a UE that transmits a first capability to the network. The first capability includes at least one of the following: a capability of performing UL and/or DL transmission during a measurement gap, a location within a measurement gap at which the UE can perform UL/DL transmission, a service/LCH/LCG that require UL and/or DL transmission during the measurement gap, or that the UE does not require a measurement gap.
      vi. a UE with a first configuration. For example, the first configuration includes at least one of the following: PUSCH duration being less than or equal to a PUSCH duration threshold; or a resource periodicity being less than a first threshold.
2. The UE determines, based on the configuration in the first step, whether to perform transmission during the measurement gap, and/or performs uplink/downlink transmission during the measurement gap.
   a) The behavior processing is for the measurement gap as a whole (that is, all measurement gaps or each measurement gap), or is based on a specific gap (or a specific gap location).
   b) If the UE can perform uplink or downlink transmission during the measurement gap or the specific measurement gap based on the first step (it indicates that the uplink or downlink transmission is for a related service, LCH, LCG, resource, or the like), the transmission includes at least one of the following:
      i. transmitting a HARQ feedback;
      ii. transmitting an SR;
      iii. transmitting CSI;
      iv. transmitting a UL grant, including a DG, and/or an SPS and/or a CG;
      v. monitoring a PDCCH;
      vi. receiving a DL-SCH; or
      vii. a MAC layer instructing a physical layer to perform transmission of a TB.
   c) If the UE is not allowed to perform uplink or downlink transmission during the measurement gap or the specific measurement gap based on the first step, the UE does not perform, in accordance with an existing protocol, data transmission for normal services during the gap.

### Embodiment 2

In Embodiment 2, the UE reports a transmission resource, a transmission resource configuration, or a transmission resource location recommended for use during a measurement gap, and/or the UE reports a first capability. A network configures for the UE or indicates to the UE, based on the report from the UE, at least one of a resource for uplink and/or downlink data transmission, a service, or a logical channel (group) available for use by the UE during the measurement gap. Optionally, the UE performs reporting, and/or the resource is a resource dedicated for use during the measurement gap, or a resource associated with the measurement gap. For a specific implementation process of Embodiment 2, reference may be made to the following steps.
1. The UE reports first information. The first information is a transmission resource, a transmission resource configuration, or a transmission resource location recommended for use by the UE during the measurement gap, and/or the first information is information about a service/LCH/LCG that the UE is required to transmit during the measurement gap, and/or the first information is capability information of the UE (the capability information indicates whether UL and/or DL transmission can be performed during the measurement gap, locations at which the UE can perform UL/DL transmission during the measurement gap, a service/LCG/LCH that requires UL and/or DL transmission during the measurement gap, or whether the UE requires a measurement gap).
   a) Optionally, the reporting is for a specific measurement gap (location), or for a measurement gap (all measurement gap locations or each measurement gap location).
   b) Optionally, the UE performs UL and/or DL transmission during the measurement gap based on the reported first information.
   c) Optionally, the UE determines, based on the configuration information provided by the network in the second step, whether to perform transmission during the measurement gap, and/or whether to perform UL and/or DL transmission during the measurement gap.
2. The UE receives RRC configuration information from the network. The RRC configuration information is configuration information dedicated to the UE, or configuration information dedicated to a UE group, or configuration information dedicated to a cell. Specifically, content of the RRC configuration information includes at least one of the following:
   a) The network performing RRC configuration based on the first information reported by the UE. For example, the network configures for the UE or indicates to the UE, based on the first information reported by the UE, at least one of a resource for uplink and/or downlink data transmission, a service, or a logical channel (group) available for use by the UE during a measurement gap. Optionally, the UE performs reporting, and/or the resource is a resource dedicated for use during the measurement gap, or a resource associated with the measurement gap.
   b) Optionally, a resource, or a resource location, or an LCH, or a service, or an LCG that the UE uses during the measurement gap configured by the network may be the same as or different from that indicated by the UE in the first information.
   c) measurement gap configuration parameters, optionally, including at least one of the following:
      i. the measurement gap configuration parameters including: MGL, MGRP, gapOffset, and the like.
   d) first configuration information for the measurement gap, for example, at least one of a resource for uplink and/or downlink data transmission, a service, or a logical channel (group) available for use by the UE during the measurement gap, which includes at least one of the following:
      i. at least one of a resource for uplink and/or downlink data transmission, a service, or a logical channel (group) available for use by the UE during the measurement gap. Optionally, at least one of the resource, the service, or the logical channel (group) is a resource/service/LCH/LCG dedicated for use during the measurement gap, or a resource/service/LCH/LCG associated with the measurement gap. Optionally, at least one of the resource, the service, or the logical channel (group) may be for all locations within the measurement gap, or may be for a specific gap (for example, a particular measurement gap, or several particular measurement gaps). Optionally, the specific gap may correspond to a periodic measurement gap location (where one or N specific measurement gaps occur every X periods), or may correspond to a specific location. Optionally, the network configures a service or a logical channel (group) that can use the resource. In other words, the network configures an association relationship between the service or the logical channel (group) and the resource (that is, only the service or the logical channel (group) that is associated with the resource can use the resource for transmission).
      ii. for example, a transmission resource (for example, a specific UL grant) configured by a base station for the UE to transmit UL information during a measurement gap, or during a specific X^{th} measurement gap. The UE performs UL transmission by using the transmission resource for transmitting the UL information. Optionally, the network may indicate an identifier of an LCH/LCG that can be transmitted by using the resource. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
      iii. for example, a transmission resource (for example, a specific DL assignment) configured by the base station for the UE to transmit DL information during a measurement gap, or during a specific Y^{th} measurement gap. The UE performs DL transmission by using the transmission resource for transmitting the DL information.
   e) second configuration information for a measurement gap, for example, configuration information for the UE to perform PDCCH monitoring during the measurement gap, or for the UE to perform DG transmission based on PDCCH scheduling during the measurement gap. Specifically, the second configuration information includes at least one of the following:
      i. the configuration information being at least one of a PUSCH/PDSCH/PDCCH-related configuration, a search space-related configuration, an identifier related to an RNTI or a C-RNTI, a PDCCH reception location, or the like.
      ii. a correspondence between the resource scheduled by the PDCCH and at least one of the service or the logical channel (group) that can use the resource. In other words, the network configures a service or a logical channel (group) that can use the resource, or only a service or a logical channel (group) having the correspondence can use the resource for transmission.
      iii. Optionally, at least one of the resource, the service, or the logical channel (group) may be for all locations within the measurement gap, or for different locations within the measurement gap.
      iv. For example, the base station configures a PDCCH search space and/or an RNTI and/or a PDCCH location without considering the measurement gap. The UE performs related PDCCH detection regardless of whether the PDCCH search space and/or RNTI and/or the PDCCH location fall within the measurement gap, and performs UL and/or DL transmission according to PDCCH scheduling. Optionally, for UL, the UE determines, according to a mapping relationship that is between an LCH/LCG and a resource and configured by the network, an LCH/LCG that can be carried on the obtained resource for performing UL transmission.
      v. For example, for UL, the network may indicate an identifier of an LCH/LCG that can be transmitted by using the resource scheduled by the PDCCH. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
      vi. For example, the network indicates whether the PDCCH search space and/or the RNTI and/or the PDCCH location is applicable to all measurement gaps, or is applicable to a specific measurement gap location (for example, several measurement gaps, or several particular measurement gaps, or a measurement gap with a particular sequence number). Optionally, the specific gap may correspond to a periodic measurement gap location (where one or N specific measurement gaps occur every X periods). In other words, the UE may not consider at which locations within a measurement gap or at which time/frequency locations corresponding to particular measurement gaps the UE may monitor a PDCCH and/or perform PUSCH/PDSCH transmission corresponding to a PDCCH (based on the PDCCH search space and/or the RNTI and/or the PDCCH location configured by the network).
   f) CG/SPS configuration. Optionally, the network may indicate a measurement gap or a specific measurement gap (for example, a particular measurement gap, or several particular measurement gaps) within which the configuration applies. Optionally, the specific gap may correspond to a CG/SPS configuration that can be used in a periodic measurement gap location (where one or N specific measurement gaps occur every X periods), and/or a CG/SPS location. Specifically, the configuration may include at least one of the following:
      i. The SPS/CG configuration may be an index.
      ii. For example, the network may indicate an index of a CG/SPS that can be used during the measurement gap. The UE may perform transmission during the measurement gap by using a resource corresponding to the index of the CG/SPS.
      iii. The CG/SPS location may be a specific occasion, such as resources within a particular CG/SPS period or several particular CG/SPS periods, or a particular occasion or several particular occasions within a CG/SPS period.
      iv. For example, the network may indicate an occasion(s) of a CG/SPS that can be used during the measurement gap. The UE may perform transmission during the measurement gap by using the occasion(s) of the CG/SPS.
      v. For example, one CG/SPS configuration may include a plurality of CG/SPS occasions within one period. If the network indicates that the 1^{st} occasion can be used during the measurement gap, the UE may perform transmission during the measurement gap by using the 1^{st} occasion.
      vi. For example, one CG/SPS configuration may include one or more CG/SPS occasions within one period. If the network indicates which occasion(s) can be used during the measurement gap, the UE may perform transmission during the measurement gap by using the occasion(s). The occasion(s) may correspond to one period or a plurality of periods.
      vii. Optionally, the network may configure a mapping relationship between the CG and an LCH, a service, or an LCG for the measurement gap.
      viii. For example, for UL, the network may indicate an identifier of an LCH/LCG that can be transmitted by using the CG resource. Accordingly, the UE transmits, by using the resource, information/data of the LCH/LCG corresponding to the identifier of the LCH/LCG. Optionally, the UE does not transmit information/data of another LCH/LCG by using the resource. Alternatively, optionally, for information/data of another LCH/LCG, the UE carries the information/data of the another LCH/LCG in a case in which a size of the resource is greater than an amount of information/data of the LCH/LCG corresponding to the identifier of the LCH/LCG.
   g) Indication information to be transmitted to the UE for enable/disable of transmission by the UE during the measurement gap. (Optionally, the information may be included in dedicated RRC information, or may be included in system information).
   h) The UE is a first UE. Optionally, the first UE is at least one of the following:
      i. a UE whose channel quality satisfies a first condition, for example, a UE whose channel quality is greater than a first threshold.
      ii. a UE that has or is using a first service. For example, the first service is a service having a specific latency requirement, a service type, a QoS parameter, a priority, or performing PDU set processing. The first service is a service of identifying a PDU set, supporting data butst handling, or identifying a data burst.
      iii. a UE configured with a first LCH/LCG. For example, the first LCH/LCG is an LCH/LCG having a specific latency requirement, a service type, a QoS parameter, a priority, or performing PDU set handling. The first LCH/LCG is an LCH/LCG for identifying a PDU set, supporting data butst handling, or identifying a data burst.
      iv. a UE that supports UL and/or DL transmission during a measurement gap.
      v. a UE that transmits a first capability to the network. The first capability includes at least one of the following: a capability of performing UL and/or DL transmission during a measurement gap, a location within a measurement gap at which the UE can perform UL/DL transmission, a service/LCH/LCG that require UL and/or DL transmission during the measurement gap, or that the UE does not require a measurement gap.
      vi. a UE with a first configuration. For example, the first configuration includes at least one of the following: PUSCH duration being less than or equal to a PUSCH duration threshold; or a resource periodicity being less than a first threshold.
3. The UE determines, based on the first information in the first step or the configuration in the second step, whether to perform transmission during the measurement gap, and/or performs uplink/downlink transmission during the measurement gap.
   a) The behavior processing is for the measurement gap as a whole (that is, all measurement gaps or each measurement gap), or is based on a specific gap (or a specific gap location).
   b) If the UE can perform uplink or downlink transmission during the measurement gap or the specific measurement gap based on the first step (it indicates that the uplink or downlink transmission is for a related service, LCH, LCG, resource, or the like), the transmission includes at least one of the following:
      i. transmitting a HARQ feedback;
      ii. transmitting an SR;
      iii. transmitting CSI;
      iv. transmitting a UL grant, including a DG, and/or an SPS and/or a CG;
      v. monitoring a PDCCH;
      vi. receiving a DL-SCH; or
      vii. a MAC layer instructing a physical layer to perform transmission of a TB.
   c) If the UE is not allowed to perform uplink or downlink transmission during the measurement gap or the specific measurement gap based on the first step, the UE does not perform, in accordance with an existing protocol, data transmission for normal services during the gap.

### Embodiment 3

In Embodiment 3, for delay status reporting, how a terminal device determines and obtains information about an amount of data is, for example, as described in the following steps.
1. information about an amount of data carried in a DSR MAC CE.
   a) The DSR MAC CE carries information about one or more amounts of data.
      i. Optionally, the information about an amount of data may be a size of the amount of data, an index corresponding to the amount of data, or a threshold value corresponding to the amount of data.
      ii. Optionally, the information about an amount of data is one or more amounts of data, or an overall amount of data less than or equal to the DSR trigger threshold configured for the LCG, DRB, or UE, or one or more amounts of data, or an overall amount of data less than or equal to the DSR reporting threshold configured for the LCG, DRB, or UE.
      iii. Optionally, the DSR trigger threshold configured for the LCG, DRB, or UE may be the same as or different from the DSR reporting threshold configured for the LCG, DRB, or UE. Optionally, it is configured by the network per LCH, per LCG, or per UE.
      iv. Optionally, if a minimum delay (or minimum remaining time) in an LCG is less than or equal to the DSR trigger threshold configured for the LCG, DRB, or UE, the UE reports one amount of data (for example, an amount of data corresponding to the minimum delay or minimum remaining delay), or a plurality of amounts of data (for example, reports amounts of data for all data packets or N data packets whose remaining time is less than or equal to the trigger threshold, where the data packets are PDUs or PDU sets), or an overall amount of data (for example, reports an overall amount of data for all data packets whose remaining time is less than or equal to the trigger threshold, where the data packets are PDUs or PDU sets).
      v. Optionally, if a minimum delay (or minimum remaining time) in an LCG is less than or equal to the DSR reporting threshold configured for the LCG, DRB, or UE, the UE reports one amount of data (for example, an amount of data corresponding to the minimum delay or minimum remaining delay), or a plurality of amounts of data (for example, reports amounts of data for all data packets or N data packets whose remaining time is less than or equal to the reporting threshold, where the data packets are PDUs or PDU sets), or an overall amount of data (for example, reports an overall amount of data for all data packets whose remaining time is less than or equal to the reporting threshold, where the data packets are PDUs or PDU sets).
      vi. Optionally, if the DSR trigger threshold configured for the LCG, DRB, or UE is different from the DSR reporting threshold configured for the LCG, DRB, or UE, an amount of data is reported for the DSR reporting threshold and/or the DSR trigger threshold. For example, an amount of data whose corresponding remaining time is between the two thresholds, an amount of data whose corresponding remaining time is greater than one of the thresholds, or an amount of data whose corresponding remaining time is less than the other of the thresholds is reported.
      vii. Optionally, if the DSR trigger threshold configured for the LCG, DRB, or UE is different from the DSR reporting threshold configured for the LCG, DRB, or UE, and the DSR reporting threshold is greater than or equal to the DSR trigger threshold, information about one amount of data is reported. Optionally, the amount of data is an amount of data corresponding to the DSR reporting threshold, or an amount of data less than or equal to the DSR reporting threshold (for example, an overall amount of data, or an amount of data corresponding to the minimum remaining delay, or an overall amount of data of data packets whose remaining time is less than or equal to the DSR trigger threshold). Alternatively, if the DSR trigger threshold configured for the LCG, DRB, or UE is different from the DSR reporting threshold configured for the LCG, DRB, or UE, and the DSR reporting threshold is greater than or equal to the DSR trigger threshold, information about a plurality of amounts of data is reported. The information about a plurality of amounts of data is an amount of data for each data packet or amounts of data for N data packets, whose remaining time is less than or equal to the reporting threshold, or amounts of data whose corresponding remaining time is less than or equal to the DSR trigger threshold (optionally, the amount of data whose corresponding remaining time is greater than or equal to the DSR trigger threshold may also be the amount of data whose corresponding remaining time is less than or equal to the DSR reporting threshold; and optionally, the information may further include an amount of data corresponding to the minimum remaining delay).
      viii. Optionally, if the DSR trigger threshold configured for the LCG, DRB, or UE is different from the DSR reporting threshold configured for the LCG, DRB, or UE, and the DSR trigger threshold is greater than or equal to the DSR reporting threshold, information about one amount of data is reported. Optionally, the amount of data is an amount of data corresponding to the DSR reporting threshold, or an amount of data whose corresponding remaining time is less than or equal to the DSR reporting threshold (for example, an overall amount of data, or an amount of data corresponding to the minimum remaining delay, or an overall amount of data of data packets whose remaining time is less than or equal to the DSR trigger threshold), or an overall amount of data whose corresponding remaining time is less than or equal to the DSR trigger threshold. Alternatively, if the DSR trigger threshold configured for the LCG, DRB, or UE is different from the DSR reporting threshold configured for the LCG, DRB, or UE, and the DSR trigger threshold is greater than or equal to the DSR reporting threshold, information about a plurality of amounts of data is reported. The information about a plurality of amounts of data is an amount of data for each data packet or amounts of data for N data packets whose remaining time is less than or equal to the DSR trigger threshold, or amounts of data whose corresponding remaining time is less than or equal to the DSR reporting threshold, and amounts of data whose corresponding remaining time is greater than or equal to the DSR reporting threshold (optionally, the amount of data whose corresponding remaining time is greater than or equal to the DSR reporting threshold may also be the amount of data whose corresponding remaining time is less than or equal to the DSR trigger threshold; and optionally, the information may further include an amount of data corresponding to the minimum remaining delay).
      ix. If a minimum delay (or minimum remaining time) in an LCG is less than or equal to the DSR reporting threshold configured for the LCG, DRB, or UE, the UE reports one amount of data (for example, an amount of data corresponding to the minimum delay or minimum remaining delay), or a plurality of amounts of data (for example, reports amounts of data for all data packets or N data packets whose remaining time is less than or equal to the reporting threshold, where the data packets are PDUs or PDU sets), or an overall amount of data (for example, reports an overall amount of data for all data packets whose remaining time is less than or equal to the reporting threshold, where the data packets are PDUs or PDU sets).
      x. For example, if a minimum delay (or minimum remaining time) in an LCG is equal to or greater than the DSR reporting threshold configured for the LCG, DRB, or UE, or if an LCG has data packets whose remaining delay is greater than the DSR reporting threshold, data packets whose remaining time is equal to the DSR reporting threshold, and data packets whose remaining time is less than the DSR reporting threshold, a MAC CE includes information about one amount of data. Optionally, the amount of data is an amount of data corresponding to data packets (PDUs or PDU sets) in the LCG with the minimum delay (or minimum remaining time), or an amount of data corresponding to data packets (PDUs or PDU sets) in the LCG whose delay (or remaining delay) is less than or equal to the DSR reporting threshold.
      xi. For example, if a minimum delay (or minimum remaining time) in an LCG is equal to or greater than the DSR trigger threshold configured for the LCG, DRB, or UE, or if an LCG has data packets whose remaining delay is greater than the DSR trigger threshold, data packets whose remaining time is equal to the DSR trigger threshold, and data packets whose remaining time is less than the DSR trigger threshold, a MAC CE includes information about one amount of data. Optionally, the amount of data is an amount of data corresponding to data packets (PDUs or PDU sets) in the LCG with the minimum delay (or minimum remaining time), an amount of data corresponding to data packets (PDUs or PDU sets) in the LCG whose delay (or remaining delay) is less than or equal to the DSR trigger threshold, or an amount of data corresponding to data packets (PDUs or PDU sets) in the LCG whose delay (or remaining delay) is less than or equal to the DSR reporting threshold.
      xii. For example, if a minimum delay (or minimum remaining time) in an LCG is equal to or greater than the DSR reporting threshold configured for the LCG, DRB, or UE, or if the minimum delay (or minimum remaining time) in the LCG is equal to or greater than the DSR trigger threshold configured for the LCG, DRB, or UE, or if an LCG has data packets whose remaining delay is greater than the DSR reporting threshold, data packets whose remaining time is equal to the DSR reporting threshold, and data packets whose remaining time is less than the DSR reporting threshold, a MAC CE includes information about a plurality of amounts of data. Optionally, the plurality of amounts of data are an amount of data for each data packet or amounts of data for N data packets whose remaining time is less than or equal to the reporting threshold, or an amount of data for each data packet or amounts of data for N data packets whose remaining time is less than or equal to the trigger threshold, or an amount of data for data packets whose remaining time is less than or equal to the reporting threshold plus an amount of data for data packets whose remaining time is between the reporting threshold and the trigger threshold, or an amount of data for data packets whose remaining time is less than or equal to the trigger threshold plus an amount of data for data packets whose remaining time is between the reporting threshold and the trigger threshold.
2. Acquisition of information about an amount of data
   a) At the PDCP layer, for DSR, at least one of the following is included:
      i. A minimum delay (or minimum remaining time) of an LCG or LCH is inferred based on PDCP discard time, for example, the minimum delay (or minimum remaining time) is determined based on remaining duration of the PDCP discard timer.
      ii. When the minimum delay (or minimum remaining time) of the LCG or LCH is less than the DSR trigger threshold configured for the LCG, LCH, or UE, the PDCP determines which PDUs or SDUs correspond to an amount of data for DSR based on information about an amount of data required to be carried in a MAC CE. For example, an amount of data of PDUs or SDUs corresponding to the minimum delay is considered as the amount of data for the DSR, or an amount of data of PDUs or SDUs whose remaining time is less than or equal to the DSR reporting threshold is considered as the amount of data for the DSR.
         ✔ Optionally, the PDUs or SDUs include at least one of the following: a PDU or an SDU not yet assembled into a PDCP PDU, a PDU or an SDU pending for a new transmission in the PDCP, a PDCP SDU requiring retransmission for an AM DRB, a PDCP data PDU requiring retransmission for an AM DRB, or a PDCP control PDU.
         ✔ Optionally, if the PDUs or SDUs include no PDCP control PDU, after obtaining a UL grant, the UE is required to first transfer a data PDU or SDU to the MAC layer, or multiplex it into a MAC PDU.
         ✔ Optionally, if the PDUs or SDUs include no SDU or PDU requiring retransmission, after obtaining a UL grant, the UE is required to first transfer a newly transmitted PDU or SDU to the MAC layer, or multiplex it into a MAC PDU.
         ✔ Optionally, a PDU or an SDU (or a PDU or an SDU whose PDCP discard timer or PSI-specific discard timer times out) that has not been submitted to a lower layer and is indicated to be discarded does not belong to the PDUs or SDUs. Alternatively, a PDU or an SDU (or a PDU or an SDU whose PDCP discard timer or PSI-specific discard timer times out) that is indicated to be discarded does not belong to the PDUs or SDUs (even if it has been submitted to the lower layer).
      iii. When a minimum delay (or minimum remaining time) of an LCG or LCH is less than the DSR trigger threshold configured for the LCG, LCH, or UE, the PDCP transmits first information to the RLC. The first information is used by the RLC to determine the amount of data for the DSR, or to indicate for which SNs (such as PDCP SNs, or RLC SNs) an amount of data of data packets corresponding to the SNs is the amount of data for the DSR.
   b) RLC layer
      i. Based on the first information from the PDCP, it is determined of which PDUs or SDUs an amount of data is considered as the amount of data for the DSR. For example, an amount of data of PDUs or SDUs corresponding to the minimum delay is considered as the amount of data for the DSR, or an amount of data of PDUs or SDUs whose remaining time is less than or equal to the DSR reporting threshold is considered as the amount of data for the DSR.
         ✔ Optionally, the PDUs or SDUs include at least one of the following: a PDU or an SDU not yet assembled into a PDCP PDU, a PDU or an SDU pending for a new transmission in the PDCP, an RLC PDU requiring retransmission for an RLC AM, or an RLC SDU requiring retransmission for an RLC AM.
         ✔ Optionally, if the PDUs or SDUs include no SDU or PDU requiring retransmission, after obtaining a UL grant, the UE is required to first transfer a newly transmitted PDU or SDU to the MAC layer, or multiplex it into a MAC PDU.
         ✔ Optionally, a PDU or an SDU (or a PDU or an SDU whose PDCP discard timer or PSI-specific discard timer times out) that has not been submitted to a lower layer and is indicated to be discarded does not belong to the PDUs or SDUs. Alternatively, a PDU or an SDU (or a PDU or an SDU whose PDCP discard timer or PSI-specific discard timer times out) that is indicated to be discarded does not belong to the PDUs or SDUs (even if it has been submitted to the lower layer).

### Embodiment 4

In Embodiment 4, how a terminal device reports BSR may be as described in the following examples.

### 1. Example 1

For regular BSR and periodic BSR, a MAC entity for which *logicalChannelGroupIAB-Ext* is not configured by upper layers shall:
1> if more than one LCG has data available for transmission when the MAC PDU containing the BSR is to be built:
   2> report long BSR for all LCGs which have data available for transmission; otherwise: report short BSR.
1> otherwise:
   2> report short BSR.
(For Regular and Periodic BSR, the MAC entity for which *logicalChannelGroupIAB-Ext* is not configured by upper layers shall:
1> if more than one LCG has data available for transmission when the MAC PDU containing the BSR is to be built:
   2> report Long BSR for all LCGs which have data available for transmission.
1> else:
   2> report Short BSR.)

### 2. Example 2

For regular BSR and periodic BSR, a MAC entity for which logicalChannelGroupIAB-Ext is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
      3> report enhanced long BSR for all LCGs which have data available for transmission.
   2> otherwise:
      3> report enhanced short BSR.
1> otherwise:
   2> if one LCG has data available for transmission, which is configured with additionalBSR-TableAllowed, and the amount of data that it has available for transmission is greater than or equal to the minimum amount of data in the second BSR table, and less than or equal to the maximum amount of data in the second BSR table:
      3> report enhanced short BSR.
   2> otherwise:
      4> report short BSR.
(For Regular and Periodic BSR, the MAC entity for which *logicalChannelGroupIAB-Ext* is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table:
      3> report enhanced Long BSR for all LCGs which have data available for transmission.
   2> else:
      3> report enhanced Short BSR.
1> else:
   2> if one LCG has data available for transmission, which is configured with additionalBSR-TableAllowed, and the amount of data that it has available for transmission is higher than or equal to the minimum entry of the second BSR table, and lower than or equal to the maximum entry of the second BSR table.
      3> report enhanced Short BSR.
   2> else:
      4> report short BSR.)

### 3. Example 3

For regular BSR and periodic BSR, a MAC entity for which logicalChannelGroupIAB-Ext is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
      3> report enhanced long BSR for all LCGs which have data available for transmission.
   2> otherwise:
      3> report short BSR.
1> otherwise:
   2> report short BSR.
(For Regular and Periodic BSR, the MAC entity for which *logicalChannelGroupIAB-Ext* is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table.
      3> report enhanced Long BSR for all LCGs which have data available for transmission.
   2> else:
      3> report short BSR.
1> else:
   2> report short BSR.)

### 4. Example 4

For regular BSR and periodic BSR, a MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if more than one LCG has data available for transmission when the MAC PDU containing the BSR is to be built:
      3> report enhanced long BSR for all LCGs which have data available for transmission.
   2> otherwise:
      3> report enhanced short BSR.
1> otherwise:
   2> if more than one LCG has data available for transmission when the MAC PDU containing the BSR is to be built:
      3> report long BSR for all LCGs which have data available for transmission.
   2> otherwise:
      3> report short BSR.
(For Regular and Periodic BSR, the MAC entity for which *logicalChannelGroupIAB-Ext* is not configured by upper layers shall:
1> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table.
   2> if more than one LCG has data available for transmission when the MAC PDU containing the BSR is to be built.
      3> report enhanced Long BSR for all LCGs which have data available for transmission.
   2> else:
      3> report enhanced Short BSR.
1> else:
   2> if more than one LCG has data available for transmission when the MAC PDU containing the BSR is to be built:
      3> report Long BSR for all LCGs which have data available for transmission.
   2> else:
      3> report short BSR.)

### 5. Example 5

For regular BSR and periodic BSR, a MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if more than one LCG has data available for transmission when the MAC PDU containing the BSR is to be built:
      3> report enhanced long BSR for all LCGs which have data available for transmission.
   2> otherwise:
      3> report short BSR.
1> otherwise:
   2> if more than one LCG has data available for transmission when the MAC PDU containing the BSR is to be built:
      3> report long BSR for all LCGs which have data available for transmission.
   2> otherwise:
      3> report short BSR.
(For Regular and Periodic BSR, the MAC entity for which *logicalChannelGroupIAB-Ext* is not configured by upper layers shall:
1> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table.
   2> if more than one LCG has data available for transmission when the MAC PDU containing the BSR is to be built:
      3>report enhanced Long BSR for all LCGs which have data available for transmission.
   2> else:
      3>report short BSR.
1> else:
   2> if more than one LCG has data available for transmission when the MAC PDU containing the BSR is to be built:
      3>report Long BSR for all LCGs which have data available for transmission.
   2> else:
      3>report short BSR.)

### 6. Example 6

For padding BSR, the MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if a quantity of padding bits is greater than or equal to a size of the enhanced long BSR plus its subheader:
      3> report enhanced long BSR for all LCGs which have data available for transmission.
   2> otherwise:
      3> if the quantity of padding bits is greater than or equal to a size of the enhanced long truncated BSR plus its subheader:
         4> report enhanced long truncated BSR for the LCG(s) having data available for transmission according to descending order of logical channel priorities of logical channels (with or without data available for transmission) in each of the LCG(s), and in case of equal priority, according to ascending order of LCG identifiers (identification) LCGIDs.
1> otherwise:
   2> if the quantity of padding bits is greater than or equal to the size of the short BSR plus its subheader but less than the size of the long BSR plus its subheaders:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the long BSR plus its subheader:
      3> report long BSR for all LCGs which have data available for transmission.
(For Padding BSR, the MAC entity for which *logicalChannelGroupIAB-Ext* is not configured by upper layers shall:
1> if at least one LCG has data available for transmission when the BSR is to be built, in those LCGs at least one LCG is configured with additionalBSR-TableAllowed, and the amount of data that it has available for transmission is higher than or equal to the minimum entry of the second BSR table, and lower than or equal to the maximum entry of the second BSR table:
   2> if the number of padding bits is equal to or larger than the size of the enhanced Long BSR plus its subheader:
      3> report enhanced Long BSR for all LCGs which have data available for transmission.
   2> else:
      3> if the number of padding bits is equal to or larger than enhanced Long truncated BSR plus its subheader:
         4> report enhanced Long Truncated BSR of the LCG(s) with the logical channels having data available for transmission following a decreasing order of the highest priority logical channel (with or without data available for transmission) in each of these LCG(s), and in case of equal priority, in increasing order of LCGID.
1> else:
   2> if the number of padding bits is equal to or larger than the size of the Short BSR plus its subheader but smaller than the size of the Long BSR plus its subheaders:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the Long BSR plus its subheader:
      3> report Long BSR for all LCGs which have data available for transmission.)

### 7. Example 7

For padding BSR, the MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if a quantity of padding bits is greater than or equal to a size of the enhanced short BSR plus its subheader:
      3> if more than one LCG has data available for transmission when the MAC PDU containing the BSR is to be built:
         4> if the quantity of padding bits is equal to the size of the enhanced short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report enhanced long BSR.
   2> if the quantity of padding bits is greater than or equal to the size of the long BSR plus its subheader:
      3> report enhanced long BSR for all LCGs which have data available for transmission.
1> otherwise:
   2> if the quantity of padding bits is greater than or equal to the size of the short BSR plus its subheader but less than the size of the long BSR plus its subheaders:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the long BSR plus its subheader:
      3> report long BSR for all LCGs which have data available for transmission.
(For Padding BSR, the MAC entity for which *logicalChannelGroupIAB-Ext* is not configured by upper layers shall:
1> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table.
   2> if the number of padding bits is equal to or larger than the size of the enhanced Short BSR plus its subheader but smaller than the size of the enhanced Long BSR plus its subheader:
      3> if more than one LCG has data available for transmission when the BSR is to be built:
         4> if the number of padding bits is equal to the size of the enhanced Short BSR plus its subheader:
            5> report enhanced Short Truncated BSR of the LCG with the highest priority logical channel with data available for transmission.
         4> else:
            5>report enhanced Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report enhanced Short BSR.
   2> else if the number of padding bits is equal to or larger than the size of the enhanced Long BSR plus its subheader:
      3> report enhanced Long BSR for all LCGs which have data available for transmission.
1> else:
   2> if the number of padding bits is equal to or larger than the size of the Short BSR plus its subheader but smaller than the size of the Long BSR plus its subheader:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the Long BSR plus its subheader:
      3> report Long BSR for all LCGs which have data available for transmission.)

### 8. Example 8

For padding BSR, the MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if a quantity of padding bits is greater than or equal to a size of the enhanced short BSR plus its subheader:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the enhanced long BSR plus its subheader:
      3> report enhanced long BSR for all LCGs which have data available for transmission.
1> otherwise:
   2> if the quantity of padding bits is greater than or equal to the size of the short BSR plus its subheader but less than the size of the long BSR plus its subheaders:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the long BSR plus its subheader:
      3> report long BSR for all LCGs which have data available for transmission.
(For Padding BSR, the MAC entity for which *logicalChannelGroupIAB-Ext* is not configured by upper layers shall:
1> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table
   2> if the number of padding bits is equal to or larger than the size of the Short BSR plus its subheader but smaller than the size of the enhanced Long BSR plus its subheader:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report enhanced Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the enhanced Long BSR plus its subheader:
      3> report enhanced Long BSR for all LCGs which have data available for transmission.
1> else
   2> if the number of padding bits is equal to or larger than the size of the Short BSR plus its subheader but smaller than the size of the Long BSR plus its subheader:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the Long BSR plus its subheader:
      3> report Long BSR for all LCGs which have data available for transmission.)

### 9. Example 9

For padding BSR, the MAC entity for which logicalChannelGroupIAB-Ext is not configured by upper layers shall:
1> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
   2> if the quantity of padding bits is greater than or equal to the size of the enhanced short BSR plus its subheader but less than the size of the enhanced long BSR plus its subheaders:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the enhanced long BSR plus its subheader:
      3> report enhanced long BSR for all LCGs which have data available for transmission.
1> otherwise:
   2> if the quantity of padding bits is greater than or equal to the size of the short BSR plus its subheader but less than the size of the long BSR plus its subheaders:
      3> if more than one LCG has data available for transmission when the MAC PDU containing the BSR is to be built:
         4> if the quantity of padding bits is equal to the size of the short BSR plus its subheader:
            5> report short truncated BSR for a logical channel with the highest priority in the LCG having data available for transmission.
         4> otherwise:
            5> report long truncated BSR for the LCG(s) having data available for transmission according to descending order of logical channel priorities of logical channels (with or without data available for transmission) in each of the LCG(s), and in case of equal priority, according to ascending order of LCGIDs.
      3> otherwise:
         4> report short BSR.
   2> if the quantity of padding bits is greater than or equal to the size of the long BSR plus its subheader:
      3> report long BSR for all LCGs which have data available for transmission.
(For Padding BSR, the MAC entity for which *logicalChannelGroupIAB-Ext* is not configured by upper layers shall:
1> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table:
   2> if the number of padding bits is equal to or larger than the size of the Short BSR plus its subheader but smaller than the size of the enhanced Long BSR plus its subheader:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the enhanced Long BSR plus its subheader:
      3> report enhanced Long BSR for all LCGs which have data available for transmission.
1> else:
   2> if the number of padding bits is equal to or larger than the size of the Short BSR plus its subheader but smaller than the size of the Long BSR plus its subheader:
      3> if more than one LCG has data available for transmission when the BSR is to be built:
         4> if the number of padding bits is equal to the size of the Short BSR plus its subheader:
            5> report Short Truncated BSR of the LCG with the highest priority logical channel with data available for transmission.
         4> else:
            5>report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
      3> else:
         4> report Short BSR.
   2> else if the number of padding bits is equal to or larger than the size of the Long BSR plus its subheader:
      3> report Long BSR for all LCGs which have data available for transmission.)

### 10. Example 10

For padding BSR, the MAC entity for which logicalChannelGroupIAB-Ext is not configured by upper layers shall:
1> if the quantity of padding bits is greater than or equal to the size of the enhanced short BSR plus its subheader but less than the size of the long BSR plus its subheaders:
   2> if more than one LCG has data available for transmission when the MAC PDU containing the BSR is to be built:
      3> if the quantity of padding bits is equal to the size of the short BSR plus its subheader:
         4> report short truncated BSR for a logical channel with the highest priority in the LCG having data available for transmission.
      3> otherwise:
         4> report long truncated BSR for the LCG(s) having data available for transmission according to descending order of logical channel priorities of logical channels (with or without data available for transmission) in each of the LCG(s), and in case of equal priority, according to ascending order of LCGIDs.
   2> otherwise:
      3> report short BSR.
1> if the quantity of padding bits is greater than or equal to the size of the long BSR plus its subheader:
   2> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
      3> if the quantity of padding bits is equal to the size of the long BSR plus its subheader:
         4> report enhanced long BSR for all LCGs which have data available for transmission.
      3> otherwise:
         4> report long BSR for all LCGs which have data available for transmission.
(For Padding BSR, the MAC entity for which *logicalChannelGroupIAB-Ext* is not configured by upper layers shall:
1> if the number of padding bits is equal to or larger than the size of the Short BSR plus its subheader but smaller than the size of the Long BSR plus its subheader:
   2> if more than one LCG has data available for transmission when the BSR is to be built:
      3> if the number of padding bits is equal to the size of the Short BSR plus its subheader:
         4> report Short Truncated BSR of the LCG with the highest priority logical channel with data available for transmission.
      3> else:
         4> report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
   2> else:
      3> report Short BSR.
1> else if the number of padding bits is equal to or larger than the size of the Long BSR plus its subheader:
   2> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table; and,
      3> if the number of padding bits is equal to or larger than the size of the enhanced Long BSR plus its subheader.
         4> report enhanced Long BSR for all LCGs which have data available for transmission
      3> else
         4> report Long BSR for all LCGs which have data available for transmission.)

### 11. Example 11

For regular BSR and periodic BSR, a MAC entity for which logicalChannelGroupIAB-Ext is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that the LCG has data available for transmission is greater than or equal to the minimum amount of data in the second BSR table, and less than or equal to the maximum amount of data in the second BSR table:
      3> report enhanced long BSR for all LCGs which have data available for transmission.
   2> otherwise:
      3> report long BSR for all LCGs which have data available for transmission.
1> otherwise:
   2> report short BSR.
(For Regular and Periodic BSR, the MAC entity for which *logicalChannelGroupIAB-Ext* is not configured by upper layers shall:
1> if more than one LCG has data available for transmission when the MAC PDU containing the BSR is to be built:
   2> if at least one LCG has data available for transmission in which at least one LCG is configured with additionalBSR-TableAllowed, and the amount of data that it has available for transmission is higher than or equal to the minimum entry of the second BSR table, and lower than or equal to the maximum entry of the second BSR table:
      3> report enhanced Long BSR for all LCGs which have data available for transmission.
   2> else:
      3> report Long BSR for all LCGs which have data available for transmission.
1> else:
   2> report short BSR.)

In an example, a format of the enhanced long BSR MAC CE (or the enhanced BSR MAC CE) and/or a format of the enhanced long truncated BSR MAC CE (or the enhanced truncated BSR MAC CE) may, for example, be as shown in Table 1.

In an example, a format of the enhanced short BSR MAC CE and/or a format of the enhanced short truncated BSR MAC CE may, for example, be as shown in Table 2.

In another example, a format of the enhanced short BSR MAC CE and/or a format of the enhanced short truncated BSR MAC CE may, for example, be as shown in Table 3.

**Table 1**

| | | | | | | | | |
|---|---|---|---|---|---|---|---|---|
| | | | | | | | | |
| | | | | | | | | |
| LCG₇ | LCG₆ | LCG₅ | LCG₄ | LCG₃ | LCG₂ | LCG₁ | LCG₀ | Oct 1 |
| BT₇ | BT₆ | BT₅ | BT₄ | BT₃ | BT₂ | BT₁ | BT₀ | Oct 2 |
| Buffer Size 1 | | | | | | | | Oct 3 |
| Buffer Size 2 | | | | | | | | Oct 4 |
| ... | | | | | | | | Oct 5 |
| Buffer Size m | | | | | | | | Oct 6 |

**Table 2**

| | | | | | | | | |
|---|---|---|---|---|---|---|---|---|
| | | | | | | | | |
| | | | | | | | | |
| LCG₇ | LCG₆ | LCG₅ | LCG₄ | LCG₃ | LCG₂ | LCG₁ | LCG₀ | Oct 1 |
| BT₇ | BT₆ | BT₅ | BT₄ | BT₃ | BT₂ | BT₁ | BT₀ | Oct 2 |
| Buffer Size 1 | | | | | | | | Oct 3 |

**Table 3**

| | | | | | | |
|---|---|---|---|---|---|---|
| | | | | | | |
| | | | | | | |
| R | R | R | R | BT | LCG₀ | Oct 1 |
| Buffer Size 1 | | | | | | |

Fields in Table 1 to Table 3 are described below.

This field LCG*ᵢ* may indicate the presence of the Buffer Size field for the logical channel group i. If LCG*ᵢ* is set to 1, it indicates that the Buffer Size field for the logical channel group i is reported. If LCG*ᵢ* is set to 0, it indicates that the Buffer Size field for the logical channel group i is not reported. (LCG*ᵢ*:this field indicates the presence of the Buffer Size field for the logical channel group i. The LCG*ᵢ* field set to 1 indicates that the Buffer Size field for the logical channel group i is reported. The LCG*ᵢ* field set to 0 indicates that the Buffer Size field for the logical channel group i is not reported.).

The field BT*ᵢ* may indicate which BSR table is used for encoding the buffer size of the logical channel group i. If BT*ᵢ* is set to 1, it indicates that the second BSR table is used for encoding the buffer size of the logical channel group i. If BT*ᵢ* is set to 0, it indicates that the first BSR table is used for encoding the buffer size of the logical channel group *i*. (BT*ᵢ*: this field indicates which buffer size table is used to encode the buffer size of the logical channel group *i*. The BT*ᵢ* field set to 1 indicates that the buffer size table specified in the second BSR table is used for the logical channel group *i*. The BT*ᵢ* field set to 0 indicates that the buffer size table specified in the first BSR table is used for the logical channel group *i*.)

The Buffer Size field indicates a total amount of data available according to the data amount calculation procedure in TS 38.322 and TS 38.323 across all logical channels of a logical channel group after the MAC PDU has been built (that is, after the logical channel prioritization procedure, which may result the value of the buffer size field to zero). The amount of data may be indicated in a quantity of bytes. The sizes of the RLC headers and MAC subheaders are not considered in the buffer size computation. The length of the buffer size field is 8 bits. The values for the buffer size fields may be shown in the first BSR table or the second BSR table. The buffer size fields are included in the tables in ascending order of LCG*ᵢ*. (Buffer Size:The Buffer Size field identifies the total amount of data available according to the data volume calculation procedure in TS 38.322 and TS 38.323 across all logical channels of a logical channel group after the MAC PDU has been built (i.e. after the logical channel prioritization procedure, which may result the value of the Buffer Size field to zero). The amount of data is indicated in number of bytes. The size of the RLC headers and MAC subheaders are not considered in the buffer size computation. The length of this field is 8 bits. The values for the Buffer Size fields are shown in the first or second BSR table. The Buffer Size fields are included in ascending order based on the LCG*ᵢ*.)

It should be noted that Buffer Size1 in the figure may indicate an amount of data of the LCG corresponding to the BSR MAC CE. In addition, only one LCGᵢ has a value of 1, and only one BTᵢ has a value of 1.

### Embodiment 5

In some cases, it is not required to trigger DSR. In view of this problem, any one of the following methods may be considered to limit DSR triggering.
- Option 1: Introduce a DSR prohibit timer for a DSR triggering. A new DSR for an LCG may be triggered if the corresponding DSR prohibit timer is not running (Option 1:Introduce a DSR prohibit timer for the DSR triggering. A new DSR for a LCG can be triggered if the corresponding DSR prohibit timer is not running.).

Specifically, the DSR prohibit timer may be configured by a gNB and operated per LCG. In an implementation, the MAC may trigger a new DSR for a specific LCG if the corresponding DSR prohibit timer is not running. The MAC starts the DSR prohibit timer since transmission of a DSR MAC CE includes DS information of the corresponding LCG (In detail, the DSR prohibit timer can be configured by the gNB and operated per LCG. In an implementation, the MAC triggers a new DSR for a specific LCG if the corresponding DSR prohibit timer is not running. The MAC starts the DSR prohibit timer since the transmission of a DSR MAC CE in which the DS information of this corresponding LCG is included.).

Alternatively, the DSR prohibit timer may be configured by a gNB and operated per LCG. In an implementation, the MAC may trigger a new DSR for a specific LCG if the corresponding DSR prohibit timer is not running. The MAC starts the DSR prohibit timer since the last transmission of a DSR MAC CE (Or In detail, the DSR prohibit timer can be configured by the gNB and operated per LCG. In an implementation, the MAC triggers a new DSR for a specific LCG if the corresponding DSR prohibit timer is not running. The MAC starts the DSR prohibit timer since the last transmission of a DSR MAC CE.).
- Option 2: Limit an SDU that triggers a new DSR to an SDU whose remaining time exceeds a configured threshold since the last transmission of a DSR MAC CE (Option 2:Restrict the SDU that triggers a new DSR would be the one whose remaining time is above the configured threshold when the last transmission of a DSR MAC CE.).
- Option 3: Limit an SDU that triggers a new DSR to an SDU that does not trigger a DSR before (Option 3:Restrict the SDU that triggers a new DSR would be the one that does not trigger a DSR before.).

Specifically, for the new DSR, a trigger object for a DSR triggering should not be a previous PDU set, and delay information for a DSR reporting should not be delay information of the previous PDU set. This is because the delay information of the previous PDU set is already known by the network and knowing delay information of a new PDU set helps the network perform scheduling better (In detail, For the new DSR, the triggering object for a DSR triggering should not be the previous PDU set and the delay information for a DSR reporting should not be the delay information of the previous PDU set. It is because the delay information of the previous PDU set is already known by the network and knowing the information of the new PDU set helps the network scheduling better.).

For example, for a DSR triggering, a trigger object should not be a PDU set which has previously triggered a DSR; and/or for a DSR triggering, a trigger object should not be a PDU set whose remaining time is already below remainingTimeThreshold till the last transmission of a DSR MAC CE (For example: For a DSR triggering, the triggering object should not be the PDU set which has previously triggered a DSR. And/Or, For a DSR triggering, the triggering object should not be the PDU set whose remaining time is already below remainingTimeThreshold till the last transmission of a DSR MAC CE.).

For example, for a DSR reporting, delay information included should not include remaining time of the PDU set whose delay information was explicitly included in the previous DSR MAC CE; and/or, for a DSR reporting, delay information included should not include remaining time of the PDU set which has previously triggered a DSR (For example, For a DSR reporting, the delay information included should not be the remaining time of the PDU set whose delay information was explicitly included in the previous DSR MAC CE. And/Or, For a DSR reporting, the delay information included should not be the remaining time of the PDU set which has previously triggered a DSR.).
- Option 4: A new DSR is triggered for bits (that is, a new PDU set) that do not have the minimum remaining time (Option4:a new DSR be triggered for these bits(i.e. the new PDU set) that does not have the smallest remaining time).
- Option 5: A new DSR triggering waits until bits of the first PDU set are removed (finished transmitting or discarded) and then a delayed DSR is triggered (Option5:a new DSR triggering wait until the bits of the first PDU Set are removed (finished transmitting or discarded) and then a delayed DSR is triggered).
- Option 6: For an LCG, if an amount of data of the LCG changes (for example, increases or decreases), or if an amount of data of (one or all) data packets whose remaining delay is less than or equal to a trigger threshold changes (for example, increases or decreases), a new DSR is triggered.
- Option 7: For an UE, if an amount of data of the LCG changes (for example, increases or decreases), or if an amount of data of (one or all) data packets whose remaining delay is less than or equal to a trigger threshold changes (for example, increases or decreases), a new DSR is triggered.
- Option 8: Limit an SDU that triggers a new DSR to be a newly arrival SDU, or an SDU arrived after the last transmission (Option 8:Restrict the SDU that triggers a new DSR would be the newly arrival SDU, or the SDU arrived after the last transmission.).
- Option 9: Introduce a DSR prohibit timer for a DSR triggering. A new DSR may be triggered if a DSR prohibit timer for a terminal is not running (Option 9:Introduce a DSR prohibit timer for the DSR triggering. A new DSR for a UE can be triggered if the corresponding DSR prohibit timer is not running.).

Specifically, the DSR prohibit timer may be configured by a gNB and operated per terminal. In an implementation, the MAC triggers a new DSR if the corresponding DSR prohibit timer is not running. The MAC starts the DSR prohibit timer since the transmission of a DSR MAC CE (In detail, the DSR prohibit timer can be configured by the gNB and operated per UE. In an implementation, the MAC triggers a new DSR if the corresponding DSR prohibit timer is not running. The MAC starts the DSR prohibit timer since the transmission of a DSR MAC CE.).
- Option 10: Limit an SDU that triggers a new DSR to an SDU whose remaining time exceeds a configured threshold at the time of the last transmission of a DSR MAC CE in which DS information of this corresponding LCG is included (Option 10:Restrict the SDU that triggers a new DSR would be the one whose remaining time is above the configured threshold when the last transmission of a DSR MAC CE in which the DS information of this corresponding LCG is included.).

Optionally, options 1 to 10 may exist or be used individually, or may exist or be used simultaneously.

Optionally, the PDU set in options 1 to 10 may alternatively be extended to a PDU, an SDU, a data packet, or a data burst.

### Embodiment 6

If uplink skipping is enabled and no data is available for a CG PUSCH configured with UTO-UCI transmission, the MAC does not generate a MAC PDU for this CG PUSCH in the case of no other UCI to be multiplexed (If uplink skipping is enabled and no data is available for a CG PUSCH configured with UTO-UCI transmission, the MAC does not generate a MAC PDU for this CG PUSCH in the case of no other UCI to be multiplexed.).

An implementation of updating MAC specifications may be as follows.

A MAC entity shall:
1> if the MAC entity is configured with enhancedSkipUplinkTxDynamic with a value of true and a grant indicated to a HARQ entity was addressed to a C-RNTI, or if the MAC entity is configured with enhancedSkipUplinkTxConfigured with a value of true and a grant indicated to the HARQ entity is a configured uplink grant:
   2> if there is no UCI excluding UTO-UCI to be multiplexed on this PUSCH transmission as specified in TS 38.213; and
   2> if there is no aperiodic CSI requested for this PUSCH transmission as specified in TS 38.212; and
   2> if the MAC PDU includes zero MAC SDUs; and
   2> if the MAC PDU includes only the periodic BSR and there is no data available for any LCG, or the MAC PDU includes only the padding BSR:
      3> no MAC PDU is generated for the HARQ entity.
(The MAC entity shall:
1> if the MAC entity is configured with *enhancedSkipUplinkTxDynamic* with value *true* and the grant indicated to the HARQ entity was addressed to a C-RNTI, or if the MAC entity is configured with *enhancedSkipUplinkTxConfigured* with value *true* and the grant indicated to the HARQ entity is a configured uplink grant:
   2> if there is no UCI excluding UTO-UCI to be multiplexed on this PUSCH transmission as specified in TS 38.213; and
   2> if there is no aperiodic CSI requested for this PUSCH transmission as specified in TS 38.212; and
   2> if the MAC PDU includes zero MAC SDUs; and
   2> if the MAC PDU includes only the periodic BSR and there is no data available for any LCG, or the MAC PDU includes only the padding BSR:
      3> not generate a MAC PDU for the HARQ entity.)

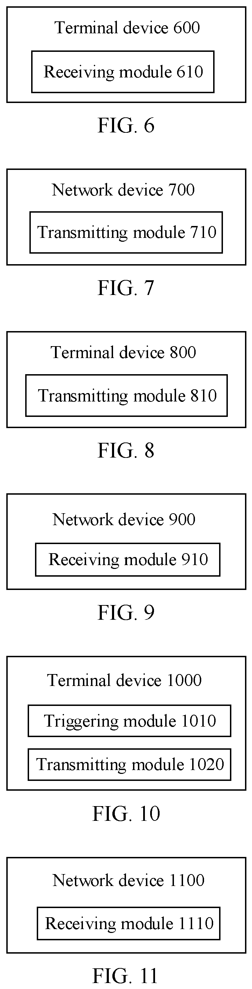

The method embodiments of this application are described above in detail with reference to FIG. 1 to FIG. 5. Apparatus embodiments of this application are described below in detail with reference to FIG. 6 to FIG. 14. It should be understood that the descriptions of the method embodiments correspond to descriptions of the apparatus embodiments, and therefore, for parts that are not described in detail, reference may be made to the foregoing method embodiments.

FIG. 6 is a schematic structural diagram of a terminal device according to an embodiment of this application. The terminal device 600 shown in FIG. 6 may include a receiving module 610. The receiving module 610 is configured to receive configuration information, where the configuration information is used to indicate one or more of the following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

In some implementations, the target resource includes one or more of the following: a resource for PDCCH monitoring; a resource scheduled by a PDCCH; a CG resource; an SPS resource; a feedback resource for SPS; a feedback resource for DG; or a PUCCH resource.

In some implementations, the configuration information is further used to indicate one or more of the following: a logical channel associated with the target resource; a logical channel group associated with the target resource; a service associated with the target resource; or a HARQ process associated with the target resource.

In some implementations, the target resource is used for transmitting only data of a first logical channel or a first logical channel group; and/or the target resource is used for transmitting only data of a first service; and/or the target resource is used for transmitting only a MAC CE corresponding to a first logical channel, or a first logical channel group, or a first service; and/or the target resource is used for transmitting only data of a first HARQ process, or the target resource corresponds to a first HARQ process, where the first logical channel, the first logical channel group, the first service, or the first HARQ process is associated with the target resource.

In some implementations, in a case that an amount of data that the target resource supports for transmission is greater than an amount of data of a first logical channel, a first logical channel group, or a first service, the target resource is further used to transmit data of a second logical channel or a second logical channel group; or in a case that an amount of data that the target resource supports for transmission is greater than an amount of data of a first HARQ process, the target resource is further used to transmit data of a second logical channel, a second logical channel group, a second service, or a second HARQ process, or reassembly may be performed for a first HARQ process, where the first logical channel, the first logical channel group, or the first service is associated with the target resource, and the second logical channel, the second logical channel group, or the second service is not associated with the target resource.

In some implementations, the configuration information is for all measurement gaps configured for the first terminal device; or the configuration information is for a specific measurement gap configured for the first terminal device.

In some implementations, the specific measurement gap includes a measurement gap configuration for a UE, or a measurement gap configuration for a frequency band, or a measurement gap configuration for RF.

In some implementations, the configuration information includes first indication information, and the first indication information is used to indicate a transmission occasion of the specific measurement gap, or a transmission occasion within the specific measurement gap, or a transmission occasion within all the measurement gaps.

In some implementations, the target resource is a resource dedicated to a measurement gap; or the target resource is a resource associated with a measurement gap; or the target logical channel is a logical channel dedicated to a measurement gap; or the target logical channel is a logical channel associated with a measurement gap; or the target logical channel group is a logical channel group dedicated to a measurement gap; or the target logical channel group is a logical channel group associated with a measurement gap; or the target service is a service dedicated to a measurement gap; or the target service is a service associated with a measurement gap; or the target HARQ process is a HARQ process dedicated to a measurement gap; or the target HARQ process is a HARQ process associated with a measurement gap.

In some implementations, the receiving module 610 is further configured to receive second indication information, where the second indication information is used to indicate an available transmission location of the target resource, or a time-frequency resource configuration available for transmission during a measurement gap.

In some implementations, the first terminal device is a first terminal device satisfying a first condition, and the first condition is associated with one or more of the following: a terminal location; channel quality; a service at or being transmitted by the terminal device; a logical channel or a logical channel group configured for the terminal device; a capability of the terminal device; capability information transmitted by the terminal device to a network device; or a configuration of the terminal device that is associated with PUSCH duration or resource periodicity.

In some implementations, the capability information includes one or more of the following: a capability of the terminal device to perform uplink and/or downlink transmission during a measurement gap; a resource location for the terminal device to perform uplink and/or downlink transmission during a measurement gap; a service that the terminal device is required to transmit during a measurement gap; a logical channel that the terminal device is required to use during a measurement gap; a logical channel group that the terminal device is required to use during a measurement gap; a signal or a channel that the first terminal device is required to transmit during a measurement gap; a HARQ process number that the first terminal device is required to transmit during a measurement gap; or whether the terminal device is required to be configured with a measurement gap.

In some implementations, the first terminal device further includes an execution module. The execution module is configured to perform a first operation based on the configuration information, and the first operation includes one of the following: determining whether to perform uplink/downlink transmission in all measurement gaps, a specific measurement gap, a transmission occasion of a measurement gap, or an available transmission location within a measurement gap; or performing uplink/downlink transmission in all measurement gaps, a specific measurement gap, a transmission occasion of a measurement gap, or an available transmission location within a measurement gap.

In some implementations, the uplink and/or downlink transmission include one or more of the following: HARQ-ACK information transmission; PUCCH transmission; SR transmission; CSI transmission; uplink grant transmission; PDCCH monitoring; DL-SCH reception; or a MAC layer instructing a physical layer to perform transmission of a TB.

FIG. 7 is a schematic structural diagram of a network device according to an embodiment of this application. The network device 700 in FIG. 7 includes a transmitting module 710, where the transmitting module 710 is configured to transmit configuration information to a first terminal device, where the configuration information is used to indicate one or more of the following: a target resource available for uplink and/or downlink transmission during a measurement gap; a target logical channel available for use during a measurement gap; a target logical channel group available for use during a measurement gap; a target service transmittable during a measurement gap; a target HARQ process transmittable during a measurement gap; whether at least one of uplink transmission or downlink transmission is executable during a measurement gap; or whether target transmission is executable during a measurement gap.

In some implementations, the target resource includes one or more of the following: a resource for PDCCH monitoring; a resource scheduled by a PDCCH; a CG resource; an SPS resource; a feedback resource for SPS; a feedback resource for DG; or a PUCCH resource.

In some implementations, the configuration information is further used to indicate one or more of the following: a logical channel associated with the target resource; a logical channel group associated with the target resource; a service associated with the target resource; or a HARQ process associated with the target resource.

In some implementations, the target resource is used for transmitting only data of a first logical channel or a first logical channel group; and/or the target resource is used for transmitting only data of a first service; and/or the target resource is used for transmitting only a MAC CE corresponding to a first logical channel, or a first logical channel group, or a first service; and/or the target resource is used for transmitting only data of a first HARQ process, or the target resource corresponds to a first HARQ process, where the first logical channel, the first logical channel group, the first service, or the first HARQ process is associated with the target resource.

In some implementations, in a case that an amount of data that the target resource supports for transmission is greater than an amount of data of a first logical channel, a first logical channel group, or a first service, the target resource is further used to transmit data of a second logical channel or a second logical channel group; or in a case that an amount of data that the target resource supports for transmission is greater than an amount of data of a first HARQ process, the target resource is further used to transmit data of a second logical channel, a second logical channel group, a second service, or a second HARQ process, or reassembly may be performed for a first HARQ process, where the first logical channel, the first logical channel group, or the first service is associated with the target resource, and the second logical channel, the second logical channel group, or the second service is not associated with the target resource.

In some implementations, the configuration information is for all measurement gaps configured for the first terminal device; or the configuration information is for a specific measurement gap configured for the first terminal device.

In some implementations, the specific measurement gap includes a measurement gap configuration for a UE, or a measurement gap configuration for a frequency band, or a measurement gap configuration for RF.

In some implementations, the configuration information includes first indication information, and the first indication information is used to indicate a transmission occasion of the specific measurement gap, or a transmission occasion within the specific measurement gap, or a transmission occasion within all the measurement gaps.

In some implementations, the target resource is a resource dedicated to a measurement gap; or the target resource is a resource associated with a measurement gap; or the target logical channel is a logical channel dedicated to a measurement gap; or the target logical channel is a logical channel associated with a measurement gap; or the target logical channel group is a logical channel group dedicated to a measurement gap; or the target logical channel group is a logical channel group associated with a measurement gap; or the target service is a service dedicated to a measurement gap; or the target service is a service associated with a measurement gap; or the target HARQ process is a HARQ process dedicated to a measurement gap; or the target HARQ process is a HARQ process associated with a measurement gap.

In some implementations, the transmitting module 710 is further configured to transmit second indication information to the first terminal device, where the second indication information is used to indicate an available transmission location of the target resource, or a time-frequency resource configuration available for transmission during a measurement gap.

In some implementations, the first terminal device is a first terminal device satisfying a first condition, and the first condition is associated with one or more of the following: a terminal location; channel quality; a service at or being transmitted by the terminal device; a logical channel or a logical channel group configured for the terminal device; a capability of the terminal device; capability information transmitted by the terminal device to a network device; or a configuration of the terminal device that is associated with PUSCH duration or resource periodicity.

In some implementations, the capability information includes one or more of the following: a capability of the terminal device to perform uplink and/or downlink transmission during a measurement gap; a resource location for the terminal device to perform uplink and/or downlink transmission during a measurement gap; a service that the terminal device is required to transmit during a measurement gap; a logical channel that the terminal device is required to use during a measurement gap; a logical channel group that the terminal device is required to use during a measurement gap; a signal or a channel that the first terminal device is required to transmit during a measurement gap; a HARQ process number that the first terminal device is required to transmit during a measurement gap; or whether the terminal device is required to be configured with a measurement gap.

FIG. 8 is a schematic structural diagram of a terminal device according to another embodiment of this application. The terminal device 800 in FIG. 8 includes a transmitting module 810. The transmitting module 810 is configured to transmit first information to a network device, and the first information is used to indicate one or more of the following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; capability information of the first terminal device that is associated with a measurement gap.

In some implementations, the capability information includes one or more of the following: a capability of the first terminal device to perform uplink and/or downlink transmission during a measurement gap; a location for the first terminal device to perform uplink and/or downlink transmission during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; a requirement of the first terminal device for a measurement gap.

In some implementations, the first information is for all measurement gaps configured for the first terminal device, a first frequency band, or first RF; or the first information is for a specific measurement gap configured for the first terminal device, or a first frequency band, or first RF; or the first information is for a transmission occasion of a measurement gap that is configured for the first terminal device, or a first frequency band, or first RF; or the first information is for an available transmission location within a measurement gap that is configured for the first terminal device, or a first frequency band, or first RF; or the first information is for a time-frequency resource configuration available for transmission during a measurement gap that is configured for the first terminal device, or a first frequency band, or first RF.

FIG. 9 is a schematic structural diagram of a network device according to another embodiment of this application. The network device 900 in FIG. 9 includes a receiving module 910. The receiving module 910 is configured to receive first information transmitted by the first terminal device, and the first information is used to indicate one or more of the following: a transmission resource recommended for use by the first terminal device during a measurement gap; a transmission resource configuration recommended for use by the first terminal device during a measurement gap; a resource location of a transmission resource that is recommended for use by the first terminal device during a measurement gap; a time-frequency resource location recommended for use by the first terminal device during a measurement gap; an SPS and/or CG index that the first terminal device is required to use during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; capability information of the first terminal device that is associated with a measurement gap.

In some implementations, the capability information includes one or more of the following: a capability of the first terminal device to perform uplink and/or downlink transmission during a measurement gap; a location for the first terminal device to perform uplink and/or downlink transmission during a measurement gap; a service that the first terminal device is required to transmit during a measurement gap; a logical channel that the first terminal device is required to use during a measurement gap; a logical channel group that the first terminal device is required to use during a measurement gap; a HARQ process number that the first terminal device is required to use during a measurement gap; a signal or a channel that the first terminal device is required to transmit during a measurement gap; a requirement of the first terminal device for a measurement gap.

In some implementations, the first information is for all measurement gaps configured for the first terminal device, a first frequency band, or first RF; or the first information is for a specific measurement gap configured for the first terminal device, or a first frequency band, or first RF; or the first information is for a transmission occasion of a measurement gap that is configured for the first terminal device, or a first frequency band, or first RF; or the first information is for an available transmission location within a measurement gap that is configured for the first terminal device, or a first frequency band, or first RF; or the first information is for a time-frequency resource configuration available for transmission during a measurement gap that is configured for the first terminal device, or a first frequency band, or first RF.

FIG. 10 is a schematic structural diagram of a terminal device according to another embodiment of this application. The terminal device 1000 in FIG. 10 includes a triggering module 1010 and/or a transmitting module 1020. The triggering module 1010 is configured to trigger first DSR. The transmitting module 1020 is configured to transmit a first MAC CE. The first MAC CE is a MAC CE corresponding to DSR, the MAC CE includes information of at least one logical channel group, and the information of the one logical channel group includes remaining time information and data amount information.

In some implementations, at least one of the first MAC CE or the information of the one logical channel group satisfies at least one of the following conditions: the first MAC CE being a UL MAC CE; the first MAC CE being a DSR MAC CE; the first MAC CE being a fixed-size MAC CE or a variable-size MAC CE; the first MAC CE carrying information of only one LCG, or carrying information of a plurality of LCGs; the first MAC CE being for information of a buffer status (buffer status, BS) table (table) selected for an LCG, or for information of a buffer status table selected for the first terminal device or the first MAC CE; for one LCG, the first MAC CE carrying information about one or more amounts of data; remaining time of the one logical channel group being remaining time up to expiration of a PDCP discard timer; an amount of data of the one logical channel group being an amount of data corresponding to the remaining time, or an amount of data corresponding to a first threshold, or an amount of data whose corresponding remaining time is less than or equal to the remaining time, or an amount of data whose corresponding remaining time is less than or equal to the first threshold; or an amount of data of the one logical channel group being an amount of data of one piece of data, one PDU, or one PDU set within the logical channel group that satisfies a condition, or an amount of data of all data, PDUs, or PDU sets within the logical channel group that satisfy a condition.

In some implementations, the one or more amounts of data satisfy at least one of the following conditions: the one or more amounts of data being amounts of data whose remaining time is less than or equal to the first threshold; the plurality of amounts of data being amounts of data whose remaining time is less than or equal to different first thresholds; for one LCG, the one or more amounts of data being amounts of data whose remaining time is less than or equal to the first threshold; or for one LCG, the plurality of amounts of data being amounts of data whose remaining time is less than or equal to different first thresholds.

In some implementations, the one or more amounts of data satisfy at least one of the following conditions: remaining time corresponding to the one or more amounts of data being less than or equal to the first threshold; remaining time corresponding to the plurality of amounts of data being less than or equal to different first thresholds; for one LCG, remaining time corresponding to one or more reported amounts of data being less than or equal to the first threshold; or for one LCG, remaining time corresponding to a plurality of reported amounts of data being less than or equal to different first thresholds.

In some implementations, the first threshold is a threshold configured for one of the following: logical channel group; data radio bearer; or terminal device.

In some implementations, one amount of data is one of the following: an amount of data corresponding to minimum remaining time; or all amounts of data whose corresponding remaining time is less than or equal to the first threshold.

In some implementations, in a case that data in the one logical channel group triggers reporting of the first MAC CE, the first DSR includes one amount of data; or in a case that data in the one logical channel group triggers reporting of the first MAC CE, the first DSR includes a plurality of amounts of data; or in a case that minimum remaining time corresponding to data in the one logical channel group is greater than or equal to the first threshold, the first DSR includes one amount of data; or in a case that minimum remaining time corresponding to data in the one logical channel group is greater than or equal to the first threshold, the first DSR includes a plurality of amounts of data; or in a case that minimum remaining time corresponding to data in the one logical channel group is less than or equal to the first threshold, the first DSR includes one amount of data; or in a case that minimum remaining time corresponding to data in the one logical channel group is less than or equal to the first threshold, the first DSR includes a plurality of amounts of data.

In some implementations, the plurality of amounts of data satisfy at least one of the following conditions: corresponding to one LCG, where the plurality of amounts of data corresponding to the one LCG correspond to a plurality of data packets, and remaining time corresponding to each of the plurality of data packets is less than or equal to the first threshold; or corresponding to a plurality of LCGs, where the plurality of amounts of data corresponding to the plurality of LCGs correspond to a plurality of data packets, and remaining time corresponding to each of the plurality of data packets is less than or equal to the first threshold.

In some implementations, the first threshold is a DSR reporting threshold. Alternatively, the first threshold is a DSR trigger threshold.

In some implementations, the first threshold includes a second threshold and a third threshold, one of the second threshold and the third threshold is a DSR trigger threshold, and the other of the second threshold and the third threshold is a DSR reporting threshold.

In some implementations, the one or more amounts of data include an amount of data for the second threshold and/or the third threshold.

In some implementations, in a case that a value of the second threshold is different from a value of the third threshold, the one or more amounts of data include one or more of the following: an amount of data whose corresponding remaining time is between the second threshold and the third threshold; an amount of data whose corresponding remaining time is greater than the second threshold; an amount of data whose corresponding remaining time is greater than the third threshold; an amount of data whose corresponding remaining time is less than or equal to the second threshold; or an amount of data whose corresponding remaining time is less than or equal to the third threshold.

In some implementations, in a case that the third threshold is greater than the second threshold, the first DSR includes one amount of data, where the one amount of data includes one of the following: an amount of data corresponding to the third threshold; an amount of data whose corresponding remaining time is less than or equal to the third threshold; an amount of data corresponding to the second threshold; or an amount of data whose corresponding remaining time is less than or equal to the second threshold.

In some implementations, in a case that the third threshold is greater than the second threshold, the first DSR includes a plurality of amounts of data, where the plurality of amounts of data include one of the following: a plurality of amounts of data whose corresponding remaining time is less than or equal to the third threshold; an amount of data whose corresponding remaining time is less than or equal to the third threshold; an amount of data whose corresponding remaining time is greater than or equal to the second threshold, and/or an amount of data whose corresponding remaining time is less than the second threshold; or a plurality of amounts of data whose corresponding remaining time is less than or equal to the second threshold.

In some implementations, in a case that minimum remaining time corresponding to data in the one logical channel group is greater than or equal to the second threshold, the first DSR includes one amount of data; or in a case that remaining time corresponding to part of data in the one logical channel group is greater than the second threshold, and remaining time corresponding to part of data in the one logical channel group is less than or equal to the second threshold, the first DSR includes one amount of data; or in a case that data in the one logical channel group triggers reporting of the MAC CE, the first DSR includes one amount of data.

In some implementations, one amount of data is one of the following: an amount of data corresponding to minimum remaining time; or an amount of data whose corresponding remaining time is less than or equal to the second threshold.

In some implementations, in a DSR MAC CE, a data status reported for a single LCG is an amount of data associated with all data packets in the LCG whose remaining time is less than a configured threshold.

In some implementations, in a case that data in the one logical channel group triggers reporting of the MAC CE, the first DSR includes a plurality of amounts of data; or in a case that minimum remaining time corresponding to data in the one logical channel group is less than or equal to the second threshold, the first DSR includes a plurality of amounts of data; or in a case that minimum remaining time corresponding to data in the one logical channel group is greater than or equal to the second threshold, the first DSR includes a plurality of amounts of data; or in a case that remaining time corresponding to part of data in the one logical channel group is greater than the second threshold, and remaining time corresponding to part of data is less than or equal to the second threshold, the first DSR includes a plurality of amounts of data.

In some implementations, the plurality of amounts of data include one of the following: a plurality of amounts of data whose corresponding remaining time is less than or equal to the second threshold; an amount of data whose corresponding remaining time is less than or equal to the second threshold, and an amount of data whose corresponding remaining time is between the second threshold and the third threshold; an amount of data whose corresponding remaining time is less than or equal to the third threshold, and an amount of data whose corresponding remaining time is between the second threshold and the third threshold; or a plurality of amounts of data whose corresponding remaining time is less than or equal to the second threshold, and an amount of data whose remaining time is the minimum remaining time.

In some implementations, the terminal device 1000 further includes a determining module 1030. The determining module 1030 is configured to determine, based on a target PDU and/or a target SDU in a PDCP layer, an amount of data associated with the first DSR.

In some implementations, at least one of the target PDU or the target SDU includes one or more of the following: a PDU and/or an SDU corresponding to minimum remaining time; or a PDU and/or an SDU whose corresponding remaining time is less than or equal to a first threshold.

In some implementations, at least one of the target PDU or the target SDU includes one or more of the following: an SDU or a PDU that is not assembled; an SDU or a PDU that is newly transmitted; an SDU or a PDU that requires retransmission; or a control PDU.

In some implementations, at least one of the target PDU or the target SDU does not include one or more of the following: a PDU or an SDU that has not been submitted to a lower layer of the PDCP layer and is indicated to be discarded; a PDU or an SDU that has been submitted to a lower layer of the PDCP layer and is indicated to be discarded; or a PDU or an SDU that has not been submitted to a lower layer of the RLC layer and is indicated to be discarded; a PDU or an SDU that has been submitted to a lower layer of the RLC layer and is indicated to be discarded; or a PDU or an SDU for which a value of a PDCP discard timer is 0 or for which a PDCP discard timer is stopped.

In some implementations, the terminal device 1000 further includes a transmitting module 1040. The transmitting module 1040 is configured to: in a case in which at least one of the target PDU or the target SDU includes no control PDU, preferentially transfer a data PDU or SDU to a MAC layer after receiving an uplink grant; or in a case in which at least one of the target PDU or the target SDU does not include an SDU or a PDU that requires retransmission, preferentially transfer a newly transmitted SDU or PDU to a MAC layer after receiving an uplink grant.

In some implementations, the PDCP layer transmits first information to an RLC layer, and the first information is used by the RLC layer to determine an amount of data associated with the first DSR.

In some implementations, the determining module 1030 is further configured to determine, based on a target PDU and/or a target SDU in an RLC layer, an amount of data associated with the first DSR.

In some implementations, at least one of the target PDU or the target SDU includes one or more of the following: a PDU and/or an SDU corresponding to minimum remaining time; or a PDU and/or an SDU whose corresponding remaining time is less than or equal to a first threshold.

In some implementations, at least one of the target PDU or the target SDU includes one or more of the following: an SDU or a PDU that is not assembled; an SDU or a PDU that is newly transmitted; an SDU or a PDU that requires retransmission.

In some implementations, at least one of the target PDU or the target SDU does not include one or more of the following: a PDU or an SDU that has not been submitted to a lower layer of the RLC layer and is indicated to be discarded; a PDU or an SDU that has been submitted to a lower layer of an RLC layer and is indicated to be discarded.

In some implementations, the transmitting module 1040 is further configured to: in a case in which at least one of the target PDU or the target SDU does not include an SDU or a PDU that requires retransmission, preferentially transfer a newly transmitted SDU or PDU to a MAC layer after receiving an uplink grant.

In some implementations, the triggering module 1010 is further configured to trigger a scheduling request SR.

In some implementations, the terminal device further includes a MAC entity 1050. The MAC entity 1050 is configured to trigger an SR when a first condition is satisfied. The first condition includes at least one of the following: a DSR procedure determining that at least one DSR has been triggered and not cancelled; no UL-SCH resource being available for a new transmission; or a UL-SCH resource that is available for a new transmission being incapable of accommodating a DSR MAC CE plus its subheader as a result of logical channel prioritization.

In some implementations, the determining module 1030 is further configured to determine, based on an RRC configuration, a correspondence between an SR configuration and a DSR, where the correspondence includes: one or more SR configurations corresponding to one or more DSRs; and/or a DSR having a corresponding SR configuration or having no corresponding SR configuration; and/or an SR configuration of an LCH that triggered a DSR being considered as a corresponding SR configuration for the triggered SR; and the triggering module 1010 is further configured to: in a case in which a second condition is satisfied, cancel all pending SR(s) for DSR triggered according to a DSR procedure prior to MAC PDU assembly, and/or stop a prohibit timer corresponding to a canceled SR, where the second condition includes at least one of the following: in a case in which a MAC CE is generated, when a MAC PDU is transmitted, the MAC PDU including a DSR MAC CE; when a MAC PDU is transmitted, the MAC PDU including a DSR MAC CE, where the DSR MAC CE includes remaining time information up to (and including) the last event that triggered a DSR prior to the DSR MAC CE assembly; or when a MAC PDU is transmitted, the DSR MAC PDU includes a DSR MAC CE, where the DSR MAC CE includes remaining time information up to (and including) the last DSR report and prior to the MAC PDU assembly. Alternatively, the triggering module 1010 is further configured to: in a case in which a third condition is satisfied, cancel all pending SR(s) for DSR triggered according to a DSR procedure, and/or stop a prohibit timer corresponding to a canceled SR, where the third condition is: an UL grant(s) being capable of accommodating all pending data available for transmission.

In some implementations, the determining module 1030 is further configured to trigger a random access procedure and/or trigger a procedure of canceling the pending SR.

In some implementations, the MAC entity 1050 is further configured to: in a case in which there is a pending SR and the pending SR corresponds to DSR, in a case that the MAC entity 1050 has no available PUCCH resource for the pending SR, the MAC entity 1050 triggers a random access procedure in a special cell.

In some implementations, the MAC entity 1050 is further configured to stop an ongoing random access procedure, where the random access procedure corresponds to a pending SR corresponding to DSR, and the SR is initiated by the MAC entity 1050 prior to MAC PDU assembly and which has no valid PUCCH resources configured.

In some implementations, the transmitting module 1020 is further configured to transmit a MAC PDU using a UL grant, where the UL grant does not include a UL grant provided by the random access procedure and/or a UL grant for transmission of an MSGA payload, the MAC PDU includes a DSR MAC CE, and the DSR MAC CE includes remaining time information. Optionally, the remaining time information is remaining time information up to (and including) the last event that triggered a DSR prior to the MAC PDU assembly. Alternatively, the transmitting module 1020 is further configured to transmit a MAC PDU using a UL grant. The UL grant does not include a UL grant provided by the random access procedure and/or a UL grant for transmission of an MSGA payload. The MAC PDU includes a DSR MAC CE, and the DSR MAC CE includes remaining time information. Optionally, the remaining time information is remaining time information up to (and including) the last DSR reporting and prior to the MAC PDU assembly. Alternatively, the transmitting module 1020 is further configured to transmit a MAC PDU using a UL grant, where the UL grant is capable of accommodating all pending data available for transmission.

FIG. 11 is a schematic structural diagram of a network device according to another embodiment of this application. The network device 1100 in FIG. 11 includes a receiving module 1110. The receiving module 1110 is configured to receive first DSR and/or a first MAC CE, where the first MAC CE is a MAC CE corresponding to DSR, the first MAC CE includes information of at least one logical channel group, and the information of the one logical channel group includes remaining time information and data amount information.

In some implementations, at least one of the first MAC CE or the information of the one logical channel group satisfies at least one of the following conditions: the first MAC CE being a UL MAC CE; the first MAC CE being a DSR MAC CE; the first MAC CE being a fixed-size MAC CE or a variable-size MAC CE; the first MAC CE carrying information of only one LCG, or carrying information of a plurality of LCGs; the first MAC CE being for information of a buffer status (buffer status, BS) table (table) selected for an LCG, or for information of a buffer status table selected for the first terminal device or the first MAC CE; for one LCG, the first MAC CE carrying information about one or more amounts of data; remaining time of the one logical channel group being remaining time up to expiration of a PDCP discard timer; an amount of data of the one logical channel group being an amount of data corresponding to the remaining time, or an amount of data corresponding to a first threshold, or an amount of data whose corresponding remaining time is less than or equal to the remaining time, or an amount of data whose corresponding remaining time is less than or equal to the first threshold; or an amount of data of the one logical channel group being an amount of data of one piece of data, one PDU, or one PDU set within the logical channel group that satisfies a condition, or an amount of data of all data, PDUs, or PDU sets within the logical channel group that satisfy a condition.

In some implementations, the one or more amounts of data satisfy at least one of the following conditions: the one or more amounts of data being amounts of data whose remaining time is less than or equal to the first threshold; the plurality of amounts of data being amounts of data whose remaining time is less than or equal to different first thresholds; for one LCG, the one or more amounts of data being amounts of data whose remaining time is less than or equal to the first threshold; or for one LCG, the plurality of amounts of data being amounts of data whose remaining time is less than or equal to different first thresholds.

In some implementations, the one or more amounts of data satisfy at least one of the following conditions: remaining time corresponding to the one or more amounts of data being less than or equal to the first threshold; remaining time corresponding to the plurality of amounts of data being less than or equal to different first thresholds; for one LCG, remaining time corresponding to one or more reported amounts of data being less than or equal to the first threshold; or for one LCG, remaining time corresponding to a plurality of reported amounts of data being less than or equal to different first thresholds.

In some implementations, the first threshold is a threshold configured for one of the following: logical channel group; data radio bearer; or terminal device.

In some implementations, one amount of data is one of the following: an amount of data corresponding to minimum remaining time; or all amounts of data whose corresponding remaining time is less than or equal to the first threshold.

In some implementations, in a case that data in the one logical channel group triggers reporting of the first MAC CE, the first DSR includes one amount of data; or in a case that data in the one logical channel group triggers reporting of the first MAC CE, the first DSR includes a plurality of amounts of data; or in a case that minimum remaining time corresponding to data in the one logical channel group is greater than or equal to the first threshold, the first DSR includes one amount of data; or in a case that minimum remaining time corresponding to data in the one logical channel group is greater than or equal to the first threshold, the first DSR includes a plurality of amounts of data; or in a case that minimum remaining time corresponding to data in the one logical channel group is less than or equal to the first threshold, the first DSR includes one amount of data; or in a case that minimum remaining time corresponding to data in the one logical channel group is less than or equal to the first threshold, the first DSR includes a plurality of amounts of data.

In some implementations, the plurality of amounts of data satisfy at least one of the following conditions: corresponding to one LCG, where the plurality of amounts of data corresponding to the one LCG correspond to a plurality of data packets, and remaining time corresponding to each of the plurality of data packets is less than or equal to the first threshold; or corresponding to a plurality of LCGs, where the plurality of amounts of data corresponding to the plurality of LCGs correspond to a plurality of data packets, and remaining time corresponding to each of the plurality of data packets is less than or equal to the first threshold.

In some implementations, the first threshold is a DSR reporting threshold. Alternatively, the first threshold is a DSR trigger threshold.

In some implementations, the first threshold includes a second threshold and a third threshold, one of the second threshold and the third threshold is a DSR trigger threshold, and the other of the second threshold and the third threshold is a DSR reporting threshold.

In some implementations, the one or more amounts of data include an amount of data for the second threshold and/or the third threshold.

In some implementations, in a case that a value of the second threshold is different from a value of the third threshold, the one or more amounts of data include one or more of the following: an amount of data whose corresponding remaining time is between the second threshold and the third threshold; an amount of data whose corresponding remaining time is greater than the second threshold; an amount of data whose corresponding remaining time is greater than the third threshold; an amount of data whose corresponding remaining time is less than or equal to the second threshold; or an amount of data whose corresponding remaining time is less than or equal to the third threshold.

In some implementations, in a case that the third threshold is greater than the second threshold, the first DSR includes one amount of data, where the one amount of data includes one of the following: an amount of data corresponding to the third threshold; an amount of data whose corresponding remaining time is less than or equal to the third threshold; an amount of data corresponding to the second threshold; or an amount of data whose corresponding remaining time is less than or equal to the second threshold.

In some implementations, in a case that the third threshold is greater than the second threshold, the first DSR includes a plurality of amounts of data, where the plurality of amounts of data include one of the following: a plurality of amounts of data whose corresponding remaining time is less than or equal to the third threshold; an amount of data whose corresponding remaining time is less than or equal to the third threshold; an amount of data whose corresponding remaining time is greater than or equal to the second threshold, and/or an amount of data whose corresponding remaining time is less than the second threshold; or a plurality of amounts of data whose corresponding remaining time is less than or equal to the second threshold.

In some implementations, in a case that minimum remaining time corresponding to data in the one logical channel group is greater than or equal to the second threshold, the first DSR includes one amount of data; or in a case that remaining time corresponding to part of data in the one logical channel group is greater than the second threshold, and remaining time corresponding to part of data in the one logical channel group is less than or equal to the second threshold, the first DSR includes one amount of data; or in a case that data in the one logical channel group triggers reporting of the MAC CE, the first DSR includes one amount of data.

In some implementations, one amount of data is one of the following: an amount of data corresponding to minimum remaining time; or an amount of data whose corresponding remaining time is less than or equal to the second threshold.

In some implementations, in a DSR MAC CE, a data status reported for a single LCG is an amount of data associated with all data packets in the LCG whose remaining time is less than a configured threshold.

In some implementations, in a case that data in the one logical channel group triggers reporting of the MAC CE, the first DSR includes a plurality of amounts of data; or in a case that minimum remaining time corresponding to data in the one logical channel group is less than or equal to the second threshold, the first DSR includes a plurality of amounts of data; or in a case that minimum remaining time corresponding to data in the one logical channel group is greater than or equal to the second threshold, the first DSR includes a plurality of amounts of data; or in a case that remaining time corresponding to part of data in the one logical channel group is greater than the second threshold, and remaining time corresponding to part of data is less than or equal to the second threshold, the first DSR includes a plurality of amounts of data.

In some implementations, the plurality of amounts of data include one of the following: a plurality of amounts of data whose corresponding remaining time is less than or equal to the second threshold; an amount of data whose corresponding remaining time is less than or equal to the second threshold, and an amount of data whose corresponding remaining time is between the second threshold and the third threshold; an amount of data whose corresponding remaining time is less than or equal to the third threshold, and an amount of data whose corresponding remaining time is between the second threshold and the third threshold; or a plurality of amounts of data whose corresponding remaining time is less than or equal to the second threshold, and an amount of data whose remaining time is the minimum remaining time.

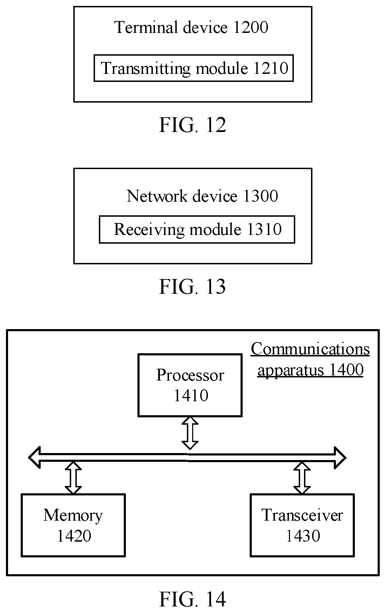

FIG. 12 is a schematic structural diagram of a terminal device according to another embodiment of this application. The terminal device 1200 in FIG. 12 includes a transmitting module 1210. The transmitting module 1210 is configured to report buffer size information by using one or more LCGs. The one or more LCGs are configured to report the buffer size information by using a first BSR table and a second BSR table, or are at least configured to report the buffer size information by using the second BSR table. There is a first difference between the first BSR table and the second BSR table, and the first difference includes one or more of the following: a difference in granularity; a difference in an indication range of a BS; a difference in a value range; or a difference in identifiers of tables.

In some implementations, the first BSR table and the second BSR table may be used for reporting the buffer size information for triggered regular BSR, periodic BSR, and/or padding BSR.

In some implementations, the terminal device further includes a triggering module 1220. The triggering module 1220 is configured to: trigger short BSR and/or perform reporting by using a short BSR MAC CE for triggered regular BSR; or trigger long BSR and/or perform reporting by using a long BSR MAC CE for triggered regular BSR; or trigger enhanced short BSR and/or perform reporting by using an enhanced short BSR MAC CE for triggered regular BSR; or trigger enhanced long BSR and/or perform reporting by using an enhanced long BSR MAC CE for triggered regular BSR, where information included in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table.

In some implementations, the triggering module 1220 is further configured to: trigger short BSR and/or perform reporting by using a short BSR MAC CE for triggered periodic BSR; or trigger long BSR and/or perform reporting by using a long BSR MAC CE for triggered periodic BSR; or trigger enhanced short BSR and/or perform reporting by using an enhanced short BSR MAC CE for triggered periodic BSR; or trigger enhanced long BSR and/or perform reporting by using an enhanced long BSR MAC CE for triggered periodic BSR, where information included in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table.

In some implementations, the triggering module 1220 is further configured to: trigger short BSR and/or perform reporting by using a short BSR MAC CE for triggered padding BSR; or trigger long BSR and/or perform reporting by using a long BSR MAC CE for triggered padding BSR; or trigger enhanced short BSR and/or perform reporting by using an enhanced short BSR MAC CE for triggered padding BSR; or trigger enhanced long BSR and/or perform reporting by using an enhanced long BSR MAC CE for triggered padding BSR; or trigger enhanced short truncated BSR and/or perform reporting by using an enhanced short truncated BSR MAC CE for triggered padding BSR; or trigger enhanced long truncated BSR and/or perform reporting by using an enhanced long truncated BSR MAC CE for triggered padding BSR, where information included in one or more of the enhanced short BSR, the enhanced short BSR MAC CE, the enhanced long BSR, the enhanced long BSR MAC CE, the enhanced short truncated BSR, the enhanced short truncated BSR MAC CE, the enhanced long truncated BSR, or the enhanced long truncated BSR MAC CE corresponds to the buffer size information corresponding to the second BSR table, or a corresponding buffer size is reported by using the second BSR table.

In some implementations, the triggering module 1220 is further configured to: skip triggering short BSR and/or skip performing reporting by using a short BSR MAC CE for triggered padding BSR; and/or skip triggering short truncated BSR and/or skip performing reporting by using a short truncated BSR MAC CE for triggered padding BSR; or skip triggering long truncated BSR and/or skip performing reporting by using a long truncated BSR MAC CE for triggered padding BSR.

In some implementations, the terminal device further includes a determining module 1230. The determining module 1230 is configured to determine, based on a first factor, a type of BSR to be triggered and/or a type of a MAC CE to be used, where the first factor includes one or more of the following: a quantity of LCGs having data to be transmitted; a size of a padding bit, a MAC PDU, a PUSCH for transmitting a BSR MAC CE, or a UL grant; whether an LCG is configured to report the buffer size information by using the second BSR table; a size of a BSR MAC CE plus its subheader; a size of data to be transmitted for at least one LCG; or whether BSR to be triggered is periodic BSR, regular BSR, or padding BSR.

In some implementations, the determining, based on the first factor, the type of the BSR to be triggered and/or the type of the MAC CE to be used includes: first determining whether the BSR to be triggered is periodic BSR, regular BSR, or padding BSR, and then determining another first factor.

In some implementations, the determining, based on the first factor, the type of the BSR to be triggered and/or the type of the MAC CE to be used includes: first determining whether the LCG is configured to report the buffer size information by using the second BSR table, and the size of the data to be transmitted for the at least one LCG; and then determining another first factor; or first determining a size relationship between the size of the padding bit, the MAC PDU, the PUSCH for transmitting the BSR MAC CE, or the UL grant and the size of the BSR MAC CE plus its subheader, then whether the LCG is configured to report the buffer size information by using the second BSR table, and the size of the data to be transmitted for the at least one LCG; and then determining another first factor; or first determining, by the terminal device, the quantity of LCGs having data to be transmitted, then whether the LCG is configured to report the buffer size information by using the second BSR table, and the size of the data to be transmitted for the at least one LCG; and then determining another first factor.

In some implementations, the triggering module 1220 is further configured to: in a case that a first case is satisfied, trigger BSR, where the BSR includes one or more of the following: enhanced short BSR, enhanced short truncated BSR, enhanced long BSR, or enhanced long truncated BSR; and/or in a case that the first case is satisfied, use a MAC CE, where the MAC CE includes one or more of the following: an enhanced short BSR MAC CE, an enhanced short truncated BSR MAC CE, an enhanced long BSR MAC CE, or an enhanced long truncated BSR MAC CE, where the first case is that one or more LCGs are configurable to report the buffer information by using at least the second BSR table, and an amount of data to be transmitted for the at least one LCG satisfies a first condition, where the first condition is one of the following: a size of the data to be transmitted for the at least one LCG is within a range of an amount of data corresponding to the second BSR table; or the size of the data to be transmitted for the at least one LCG is less than or equal to a maximum value of the amount of data corresponding to the second BSR table, and the size of the data to be transmitted for the at least one LCG is greater than or equal to a minimum value of the amount of data corresponding to the second BSR table.

In some implementations, the transmitting module 1210 is further configured to: in a case that a plurality of LCGs satisfy the first case, report enhanced long BSR for periodic BSR and/or regular BSR, where the reporting is for all LCGs, or for all LCGs configured to report the buffer information by using at least the second BSR table; or in a case that one LCG satisfies the first case, report short BSR or enhanced short BSR for periodic BSR and/or regular BSR, where the reporting is for the one LCG; or in a case that a plurality of LCGs do not satisfy the first case, report long BSR for periodic BSR and/or regular BSR, where the reporting is for all LCGs; otherwise, report short BSR.

In some implementations, the transmitting module 1210 is further configured to: in a case that a second case is satisfied, report enhanced long BSR for periodic BSR and/or regular BSR, where the reporting is for all LCGs, or for all LCGs configured to report the buffer information by using at least the second BSR table; in a case that the second case is not satisfied, report long BSR for periodic BSR and/or regular BSR, where the reporting is for all LCGs; or in a case that one LCG has data to be transmitted, report short BSR for periodic BSR and/or regular BSR, where the reporting is for the one LCG; or in a case that one LCG has data to be transmitted, the one LCG is configured to report the buffer information by using at least the second BSR table, and an amount of data to be transmitted for the one LCG satisfies the first condition, report enhanced short BSR for periodic BSR and/or regular BSR; otherwise, report short BSR, where the reporting is for the one LCG, where the second case is as follows: in a case in which a plurality of LCGs have data to be transmitted, at least one of the LCGs may be configured to report the buffer information by using at least the second BSR table, and an amount of data to be transmitted for the one LCG satisfies the first condition.

In some implementations, the determining module 1230 is further configured to: determine, for padding BSR first based on a third case and then based on a fourth case, a type of BSR to be reported; or determine, for padding BSR first based on the fourth case and then based on the third case, a type of BSR to be reported, where the third case is that one or more LCGs are configurable to report the buffer size information by using at least the second BSR table, and an amount of data to be transmitted for at least one of the LCGs satisfies the first condition; and the fourth case is that a size of a padding bit and a size of a MAC CE plus its subheader are expected sizes, and/or a plurality of LCGs have data to be transmitted.

FIG. 13 is a schematic structural diagram of a network device according to another embodiment of this application. The network device 1300 in FIG. 13 includes a receiving module 1310. The receiving module 1310 is configured to receive buffer size information reported by a terminal device by using one or more LCGs. The one or more LCGs are configured to report the buffer size information by using a first BSR table and a second BSR table, or are at least configured to report the buffer size information by using the second BSR table. There is a first difference between the first BSR table and the second BSR table, and the first difference includes one or more of the following: a difference in granularity; a difference in an indication range of a BS; a difference in a value range; or a difference in identifiers of tables.

In some implementations, the first BSR table and the second BSR table may be used for reporting the buffer size information for triggered regular BSR, periodic BSR, and/or padding BSR.

FIG. 14 is a schematic structural diagram of a communications apparatus according to an embodiment of this application. The communications apparatus 1400 in FIG. 14 may be configured to implement the methods described in the foregoing method embodiments. The apparatus 1400 may be a chip, a terminal device, or a base station.

The communications apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The communications apparatus 1400 may further include one or more memories 1420. The memory 1420 stores a program that may be executed by the processor 1410 to cause the processor 1410 to perform the methods described in the foregoing method embodiments. The memory 1420 may be separated from or integrated into the processor 1410.

The communications apparatus 1400 may further include a transceiver 1430. The processor 1410 may communicate with another device or chip through the transceiver 1430. For example, the processor 1410 may transmit data to and receive data from another device or chip through the transceiver 1430.

It should be understood that, in embodiments of this application, the processor 1410 may be a general-purpose central processing unit (central processing unit, CPU), a microprocessor, an application-specific integrated circuit (application specific integrated circuit, ASIC), or one or more integrated circuits, and is configured to execute related programs, to implement the technical solutions provided in the embodiments of this application.

The memory 1420 may include a read-only memory and a random access memory, and provide an instruction and data to the processor 1410. A part of the processor 1410 may further include a non-volatile random access memory. For example, the processor 1410 may further store information of a device type.

In an implementation process, steps in the foregoing methods can be implemented by using a hardware integrated logical circuit in the processor 1410, or by using instructions in a form of software. The method for requesting uplink transmission resources disclosed with reference to the embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1420, and the processor 1410 reads information in the memory 1420 and completes the steps of the foregoing methods in combination with hardware of the processor. To avoid repetition, details are not described again herein.

It should be understood that the processor 1410 mentioned in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

An embodiment of this application further provides a computer-readable storage medium for storing a program. The computer-readable storage medium may be applied to the terminal device or the base station provided in embodiments of this application, and the program causes a computer to execute the wireless communication method in various embodiments of this application.

An embodiment of this application further provides a computer program product. The computer program product includes a program. The computer program product may be applied to the terminal device or the base station provided in embodiments of this application, and the program causes a computer to execute the wireless communication method in various embodiments of this application.

An embodiment of this application further provides a computer program. The computer program may be applied to the terminal device or the base station provided in embodiments of this application, and the computer program causes a computer to execute the wireless communication method in various embodiments of this application.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber Line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. A wireless communication method, comprising:
receiving, by a first terminal device, configuration information, wherein the configuration information is used to indicate one or more of following:
a target resource available for uplink and/or downlink transmission during a measurement gap;
a target logical channel available for use during a measurement gap;
a target logical channel group available for use during a measurement gap;
a target service transmittable during a measurement gap;
a target hybrid automatic repeat request HARQ process transmittable during a measurement gap;
whether at least one of uplink transmission or downlink transmission is executable during a measurement gap; or
whether target transmission is executable during a measurement gap.

2. The method according to claim 1, wherein the target resource comprises one or more of following:
a resource for physical downlink control channel PDCCH monitoring;
a resource scheduled by a PDCCH;
a configured grant CG resource;
a semi-persistent scheduling SPS resource;
a feedback resource for SPS;
a feedback resource for dynamic grant DG; or
a physical uplink control channel PUCCH resource.

3. The method according to claim 1 or 2, wherein the configuration information is further used to indicate one or more of following:
a logical channel associated with the target resource;
a logical channel group associated with the target resource;
a service associated with the target resource; or
a HARQ process associated with the target resource.

4. The method according to claim 3, wherein
the target resource is used for transmitting only data of a first logical channel or a first logical channel group; and/or
the target resource is used for transmitting only data of a first service; and/or
the target resource is used for transmitting only a medium access control MAC control element CE corresponding to a first logical channel, or a first logical channel group, or a first service; and/or
the target resource is used for transmitting only data of a first HARQ process, or the target resource corresponds to a first HARQ process,
wherein the first logical channel, the first logical channel group, the first service, or the first HARQ process is associated with the target resource.

5. The method according to claim 3, wherein
in a case that an amount of data that the target resource supports for transmission is greater than an amount of data of a first logical channel, a first logical channel group, or a first service, the target resource is further used to transmit data of a second logical channel or a second logical channel group; or
in a case that an amount of data that the target resource supports for transmission is greater than an amount of data of a first HARQ process, the target resource is further used to transmit data of a second logical channel, a second logical channel group, a second service, or a second HARQ process, or reassembly is capable of being performed for a first HARQ process,
wherein the first logical channel, the first logical channel group, or the first service is associated with the target resource, and the second logical channel, the second logical channel group, or the second service is not associated with the target resource.

6. The method according to any one of claims 1 to 5, wherein
the configuration information is for all measurement gaps configured for the first terminal device; or
the configuration information is for a specific measurement gap configured for the first terminal device.

7. The method according to claim 6, wherein the specific measurement gap comprises a measurement gap configuration for the first terminal device, or a measurement gap configuration for a frequency band, or a measurement gap configuration for radio frequency RF.

8. The method according to claim 6, wherein the configuration information comprises first indication information, and the first indication information is used to indicate a transmission occasion of the specific measurement gap, or a transmission occasion within the specific measurement gap, or a transmission occasion within all the measurement gaps.

9. The method according to any one of claims 1 to 8, wherein
the target resource is a resource dedicated to a measurement gap; or
the target resource is a resource associated with a measurement gap; or
the target logical channel is a logical channel dedicated to a measurement gap; or
the target logical channel is a logical channel associated with a measurement gap; or
the target logical channel group is a logical channel group dedicated to a measurement gap; or
the target logical channel group is a logical channel group associated with a measurement gap; or
the target service is a service dedicated to a measurement gap; or
the target service is a service associated with a measurement gap; or
the target HARQ process is a HARQ process dedicated to a measurement gap; or
the target HARQ process is a HARQ process associated with a measurement gap.

10. The method according to any one of claims 1 to 9, wherein the method further comprises:
receiving, by the first terminal device, second indication information, wherein the second indication information is used to indicate an available transmission location of the target resource, or a time-frequency resource configuration available for transmission during a measurement gap.

11. The method according to any one of claims 1 to 10, wherein the first terminal device is a first terminal device satisfying a first condition, and the first condition is associated with one or more of following:
a terminal location;
channel quality;
a service at or being transmitted by the terminal device;
a logical channel or a logical channel group configured for the terminal device;
a capability of the terminal device;
capability information transmitted by the terminal device to a network device; or
a configuration of the terminal device that is associated with physical uplink shared channel PUSCH duration or resource periodicity.

12. The method according to claim 11, wherein the capability information comprises one or more of following:
a capability of the terminal device to perform uplink and/or downlink transmission during a measurement gap;
a resource location for the terminal device to perform uplink and/or downlink transmission during a measurement gap;
a service that the terminal device is required to transmit during a measurement gap;
a logical channel that the terminal device is required to use during a measurement gap;
a logical channel group that the terminal device is required to use during a measurement gap;
a signal or a channel that the first terminal device is required to transmit during a measurement gap; or
a HARQ process number that the first terminal device is required to transmit during a measurement gap; or
whether the terminal device is required to be configured with a measurement gap.

13. The method according to any one of claims 1 to 12, wherein the method further comprises:
performing, by the first terminal device based on the configuration information, a first operation, wherein the first operation comprises one of following:
determining whether to perform uplink/downlink transmission in all measurement gaps, a specific measurement gap, a transmission occasion of a measurement gap, or an available transmission location within a measurement gap; or
performing uplink/downlink transmission in all measurement gaps, a specific measurement gap, a transmission occasion of a measurement gap, or an available transmission location within a measurement gap.

14. The method according to claim 13, wherein the uplink and/or downlink transmission comprise one or more of following:
HARQ-acknowledgment ACK information transmission;
PUCCH transmission;
scheduling request SR transmission;
channel state information CSI transmission;
uplink grant transmission;
PDCCH monitoring;
downlink DL-shared channel SCH reception; or
transmission of a transport block TB by a physical layer as instructed by a MAC layer.

15. A wireless communication method, comprising:
transmitting, by a network device, configuration information to a first terminal device, wherein the configuration information is used to indicate one or more of following:
a target resource available for uplink and/or downlink transmission during a measurement gap;
a target logical channel available for use during a measurement gap;
a target logical channel group available for use during a measurement gap;
a target service transmittable during a measurement gap;
a target hybrid automatic repeat request HARQ process transmittable during a measurement gap;
whether at least one of uplink transmission or downlink transmission is executable during a measurement gap; or
whether target transmission is executable during a measurement gap.

16. The method according to claim 15, wherein the target resource comprises one or more of following:
a resource for physical downlink control channel PDCCH monitoring;
a resource scheduled by a PDCCH;
a configured grant CG resource;
a semi-persistent scheduling SPS resource;
a feedback resource for SPS;
a feedback resource for dynamic grant DG; or
a physical uplink control channel PUCCH resource.

17. The method according to claim 15 or 16, wherein the configuration information is further used to indicate one or more of following:
a logical channel associated with the target resource;
a logical channel group associated with the target resource;
a service associated with the target resource; or
a HARQ process associated with the target resource.

18. The method according to claim 17, wherein
the target resource is used for transmitting only data of a first logical channel or a first logical channel group; and/or
the target resource is used for transmitting only data of a first service; and/or
the target resource is used for transmitting only a medium access control MAC control element CE corresponding to a first logical channel, or a first logical channel group, or a first service; and/or
the target resource is used for transmitting only data of a first HARQ process, or the target resource corresponds to a first HARQ process,
wherein the first logical channel, the first logical channel group, the first service, or the first HARQ process is associated with the target resource.

19. The method according to claim 17, wherein
in a case that an amount of data that the target resource supports for transmission is greater than an amount of data of a first logical channel, a first logical channel group, or a first service, the target resource is further used to transmit data of a second logical channel or a second logical channel group; or
in a case that an amount of data that the target resource supports for transmission is greater than an amount of data of a first HARQ process, the target resource is further used to transmit data of a second logical channel, a second logical channel group, a second service, or a second HARQ process, or reassembly is capable of being performed for a first HARQ process,
wherein the first logical channel, the first logical channel group, or the first service is associated with the target resource, and the second logical channel, the second logical channel group, or the second service is not associated with the target resource.

20. The method according to any one of claims 15 to 19, wherein
the configuration information is for all measurement gaps configured for the first terminal device; or
the configuration information is for a specific measurement gap configured for the first terminal device.

21. The method according to claim 20, wherein the specific measurement gap comprises a measurement gap configuration for the first terminal device, or a measurement gap configuration for a frequency band, or a measurement gap configuration for radio frequency RF.

22. The method according to claim 20, wherein the configuration information comprises first indication information, and the first indication information is used to indicate a transmission occasion of the specific measurement gap, or a transmission occasion within the specific measurement gap, or a transmission occasion within all the measurement gaps.

23. The method according to any one of claims 15 to 22, wherein
the target resource is a resource dedicated to a measurement gap; or
the target resource is a resource associated with a measurement gap; or
the target logical channel is a logical channel dedicated to a measurement gap; or
the target logical channel is a logical channel associated with a measurement gap; or
the target logical channel group is a logical channel group dedicated to a measurement gap; or
the target logical channel group is a logical channel group associated with a measurement gap; or
the target service is a service dedicated to a measurement gap; or
the target service is a service associated with a measurement gap; or
the target HARQ process is a HARQ process dedicated to a measurement gap; or
the target HARQ process is a HARQ process associated with a measurement gap.

24. The method according to any one of claims 15 to 23, wherein the method further comprises:
transmitting, by the network device, second indication information to the first terminal device, wherein the second indication information is used to indicate an available transmission location of the target resource, or a time-frequency resource configuration available for transmission during a measurement gap.

25. The method according to any one of claims 15 to 24, wherein the first terminal device is a first terminal device satisfying a first condition, and the first condition is associated with one or more of following:
a terminal location;
channel quality;
a service at or being transmitted by the terminal device;
a logical channel or a logical channel group configured for the terminal device;
a capability of the terminal device;
capability information transmitted by the terminal device to a network device; or
a configuration of the terminal device that is associated with physical uplink shared channel PUSCH duration or resource periodicity.

26. The method according to claim 25, wherein the capability information comprises one or more of following:
a capability of the terminal device to perform uplink and/or downlink transmission during a measurement gap;
a resource location for the terminal device to perform uplink and/or downlink transmission during a measurement gap;
a service that the terminal device is required to transmit during a measurement gap;
a logical channel that the terminal device is required to use during a measurement gap;
a logical channel group that the terminal device is required to use during a measurement gap;
a signal or a channel that the first terminal device is required to transmit during a measurement gap;
a HARQ process number that the first terminal device is required to transmit during a measurement gap; or
whether the terminal device is required to be configured with a measurement gap.

27. A wireless communication method, comprising:
transmitting, by a first terminal device, first information to a network device, wherein the first information is used to indicate one or more of following:
a transmission resource recommended for use by the first terminal device during a measurement gap;
a transmission resource configuration recommended for use by the first terminal device during a measurement gap;
a resource location of a transmission resource that is recommended for use by the first terminal device during a measurement gap;
a time-frequency resource location recommended for use by the first terminal device during a measurement gap;
a semi-persistent scheduling SPS and/or configured grant CG index that the first terminal device is required to use during a measurement gap;
a service that the first terminal device is required to transmit during a measurement gap;
a logical channel that the first terminal device is required to use during a measurement gap;
a logical channel group that the first terminal device is required to use during a measurement gap;
a hybrid automatic repeat request HARQ process number that the first terminal device is required to use during a measurement gap;
a signal or a channel that the first terminal device is required to transmit during a measurement gap; or
capability information of the first terminal device that is associated with a measurement gap.

28. The method according to claim 27, wherein the capability information comprises one or more of following:
a capability of the first terminal device to perform uplink and/or downlink transmission during a measurement gap;
a location for the first terminal device to perform uplink and/or downlink transmission during a measurement gap;
a service that the first terminal device is required to transmit during a measurement gap;
a logical channel that the first terminal device is required to use during a measurement gap;
a logical channel group that the first terminal device is required to use during a measurement gap;
a HARQ process number that the first terminal device is required to use during a measurement gap;
a signal or a channel that the first terminal device is required to transmit during a measurement gap; or
a requirement of the first terminal device for a measurement gap.

29. The method according to claim 27 or 28, wherein
the first information is for all measurement gaps configured for the first terminal device, or a first frequency band, or first radio frequency RF; or
the first information is for a specific measurement gap configured for the first terminal device, or a first frequency band, or first RF; or
the first information is for a transmission occasion of a measurement gap that is configured for the first terminal device, or a first frequency band, or first RF; or
the first information is for an available transmission location within a measurement gap that is configured for the first terminal device, or a first frequency band, or first RF; or
the first information is for a time-frequency resource configuration available for transmission during a measurement gap that is configured for the first terminal device, or a first frequency band, or first RF.

30. A wireless communication method, comprising:
receiving, by a network device, first information transmitted by a first terminal device, wherein the first information is used to indicate one or more of following:
a transmission resource recommended for use by the first terminal device during a measurement gap;
a transmission resource configuration recommended for use by the first terminal device during a measurement gap;
a resource location of a transmission resource that is recommended for use by the first terminal device during a measurement gap;
a time-frequency resource location recommended for use by the first terminal device during a measurement gap;
a semi-persistent scheduling SPS and/or configured grant CG index that the first terminal device is required to use during a measurement gap;
a service that the first terminal device is required to transmit during a measurement gap;
a logical channel that the first terminal device is required to use during a measurement gap;
a logical channel group that the first terminal device is required to use during a measurement gap;
a hybrid automatic repeat request HARQ process number that the first terminal device is required to use during a measurement gap;
a signal or a channel that the first terminal device is required to transmit during a measurement gap; or
capability information of the first terminal device that is associated with a measurement gap.

31. The method according to claim 30, wherein the capability information comprises one or more of following:
a capability of the first terminal device to perform uplink and/or downlink transmission during a measurement gap;
a location for the first terminal device to perform uplink and/or downlink transmission during a measurement gap;
a service that the first terminal device is required to transmit during a measurement gap;
a logical channel that the first terminal device is required to use during a measurement gap;
a logical channel group that the first terminal device is required to use during a measurement gap;
a HARQ process number that the first terminal device is required to use during a measurement gap;
a signal or a channel that the first terminal device is required to transmit during a measurement gap; or
a requirement of the first terminal device for a measurement gap.

32. The method according to claim 30 or 31, wherein
the first information is for all measurement gaps configured for the first terminal device, or a first frequency band, or first radio frequency RF; or
the first information is for a specific measurement gap configured for the first terminal device, or a first frequency band, or first RF; or
the first information is for a transmission occasion of a measurement gap that is configured for the first terminal device, or a first frequency band, or first RF; or
the first information is for an available transmission location within a measurement gap that is configured for the first terminal device, or a first frequency band, or first RF; or
the first information is for a time-frequency resource configuration available for transmission during a measurement gap that is configured for the first terminal device, or a first frequency band, or first RF.

33. A wireless communication method, comprising:
triggering, by a first terminal device, first delay status reporting DSR, and/or transmitting a first medium access control MAC control element CE, wherein the first MAC CE is a MAC CE corresponding to DSR, the first MAC CE comprises information of at least one logical channel group, and the information of the one logical channel group comprises remaining time information and data amount information.

34. The method according to claim 33, wherein at least one of the first MAC CE or the information of the one logical channel group satisfies at least one of following conditions:
the first MAC CE being an uplink UL MAC CE;
the first MAC CE being a DSR MAC CE;
the first MAC CE being a fixed-size MAC CE or a variable-size MAC CE;
the first MAC CE carrying information of only one logical channel group LCG, or carrying information of a plurality of LCGs;
the first MAC CE being for information of a buffer status BS table selected for an LCG, or for information of a BS table selected for the first terminal device or the first MAC CE;
for one LCG, the first MAC CE carrying information about one or more amounts of data;
remaining time of the one logical channel group being remaining time up to expiration of a packet data convergence protocol PDCP discard timer;
an amount of data of the one logical channel group being an amount of data corresponding to the remaining time, or an amount of data corresponding to a first threshold, or an amount of data whose corresponding remaining time is less than or equal to the remaining time, or an amount of data whose corresponding remaining time is less than or equal to the first threshold; or
an amount of data of the one logical channel group being an amount of data of one piece of data, one protocol data unit PDU, or one PDU set within the logical channel group that satisfies a condition, or an amount of data of all data, PDUs, or PDU sets within the logical channel group that satisfy a condition.

35. The method according to claim 34, wherein the one or more amounts of data satisfy at least one of following conditions:
the one or more amounts of data being amounts of data whose remaining time is less than or equal to the first threshold;
the plurality of amounts of data being amounts of data whose remaining time is less than or equal to different first thresholds;
for one LCG, the one or more amounts of data being amounts of data whose remaining time is less than or equal to the first threshold;
for one LCG, the plurality of amounts of data being amounts of data whose remaining time is less than or equal to different first thresholds.

36. The method according to claim 34, wherein the one or more amounts of data satisfy at least one of following conditions:
remaining time corresponding to the one or more amounts of data being less than or equal to the first threshold;
remaining time corresponding to the plurality of amounts of data being less than or equal to different first thresholds;
for one LCG, remaining time corresponding to one or more reported amounts of data being less than or equal to the first threshold; or
for one LCG, remaining time corresponding to a plurality of reported amounts of data being less than or equal to different first thresholds.

37. The method according to any one of claims 34 to 36, wherein the first threshold is a threshold for one of following configurations:
logical channel group;
data radio bearer; or
terminal device.

38. The method according to any one of claims 34 to 36, wherein the one amount of data is one of following:
an amount of data corresponding to minimum remaining time; or
all amounts of data whose corresponding remaining time is less than or equal to the first threshold.

39. The method according to any one of claims 34 to 36, wherein
in a case that data in the one logical channel group triggers reporting of the first MAC CE, the first DSR comprises one amount of data; or
in a case that data in the one logical channel group triggers reporting of the first MAC CE, the first DSR comprises a plurality of amounts of data; or
in a case that minimum remaining time corresponding to data in the one logical channel group is greater than or equal to the first threshold, the first DSR comprises one amount of data; or
in a case that minimum remaining time corresponding to data in the one logical channel group is greater than or equal to the first threshold, the first DSR comprises a plurality of amounts of data; or
in a case that minimum remaining time corresponding to data in the one logical channel group is less than or equal to the first threshold, the first DSR comprises one amount of data; or
in a case that minimum remaining time corresponding to data in the one logical channel group is less than or equal to the first threshold, the first DSR comprises a plurality of amounts of data.

40. The method according to any one of claims 34 to 36, wherein the plurality of amounts of data satisfy at least one of following conditions:
corresponding to one LCG, wherein the plurality of amounts of data corresponding to the one LCG correspond to a plurality of data packets, and remaining time corresponding to each of the plurality of data packets is less than or equal to the first threshold; or
corresponding to a plurality of LCGs, wherein the plurality of amounts of data corresponding to the plurality of LCGs correspond to a plurality of data packets, and remaining time corresponding to each of the plurality of data packets is less than or equal to the first threshold.

41. The method according to any one of claims 33 to 40, wherein
the first threshold being a DSR reporting threshold; or
the first threshold being a DSR trigger threshold.

42. The method according to any one of claims 33 to 41, wherein the first threshold comprises a second threshold and a third threshold, one of the second threshold and the third threshold is a DSR trigger threshold, and the other of the second threshold and the third threshold is a DSR reporting threshold.

43. The method according to claim 42, wherein the one or more amounts of data comprise an amount of data for the second threshold and/or the third threshold.

44. The method according to claim 42 or 43, wherein in a case that a value of the second threshold is different from a value of the third threshold, the one or more amounts of data comprise one or more of following:
an amount of data whose corresponding remaining time is between the second threshold and the third threshold;
an amount of data whose corresponding remaining time is greater than the second threshold;
an amount of data whose corresponding remaining time is greater than the third threshold;
an amount of data whose corresponding remaining time is less than or equal to the second threshold; or
an amount of data whose corresponding remaining time is less than or equal to the third threshold.

45. The method according to any one of claims 42 to 44, wherein
in a case that the third threshold is greater than the second threshold, the first DSR comprises one amount of data,
wherein the one amount of data comprises one of following:
an amount of data corresponding to the third threshold;
an amount of data whose corresponding remaining time is less than or equal to the third threshold;
an amount of data corresponding to the second threshold; or
an amount of data whose corresponding remaining time is less than or equal to the second threshold.

46. The method according to any one of claims 42 to 44, wherein
in a case that the third threshold is greater than the second threshold, the first DSR comprises a plurality of amounts of data,
wherein the plurality of amounts of data comprise one of following:
a plurality of amounts of data whose corresponding remaining time is less than or equal to the third threshold;
an amount of data whose corresponding remaining time is less than or equal to the third threshold;
an amount of data whose corresponding remaining time is greater than or equal to the second threshold, and/or an amount of data whose corresponding remaining time is less than the second threshold; or
a plurality of amounts of data whose corresponding remaining time is less than or equal to the second threshold.

47. The method according to any one of claims 42 to 46, wherein
in a case that minimum remaining time corresponding to data in the one logical channel group is greater than or equal to the second threshold, the first DSR comprises one amount of data; or
in a case that remaining time corresponding to part of data in the one logical channel group is greater than the second threshold, and remaining time corresponding to part of data in the one logical channel group is less than or equal to the second threshold, the first DSR comprises one amount of data; or
in a case that data in the one logical channel group triggers reporting of the MAC CE, the first DSR comprises one amount of data.

48. The method according to claim 47, wherein the one amount of data is one of following:
an amount of data corresponding to the minimum remaining time; or
an amount of data whose corresponding remaining time is less than or equal to the second threshold.

49. The method according to any one of claims 33 to 48, wherein
in a DSR MAC CE, a data status reported for a single LCG is an amount of data associated with all data packets in the LCG whose remaining time is less than a configured threshold.

50. The method according to any one of claims 42 to 46, wherein
in a case that data in the one logical channel group triggers reporting of the MAC CE, the first DSR comprises a plurality of amounts of data; or
in a case that minimum remaining time corresponding to data in the one logical channel group is less than or equal to the second threshold, the first DSR comprises a plurality of amounts of data; or
in a case that minimum remaining time corresponding to data in the one logical channel group is greater than or equal to the second threshold, the first DSR comprises a plurality of amounts of data; or
in a case that remaining time corresponding to part of data in the one logical channel group is greater than the second threshold, and remaining time corresponding to part of data is less than or equal to the second threshold, the first DSR comprises a plurality of amounts of data.

51. The method according to claim 50, wherein the plurality of amounts of data comprise one of following:
a plurality of amounts of data whose corresponding remaining time is less than or equal to the second threshold;
an amount of data whose corresponding remaining time is less than or equal to the second threshold, and an amount of data whose corresponding remaining time is between the second threshold and the third threshold;
an amount of data whose corresponding remaining time is less than or equal to the third threshold, and an amount of data whose corresponding remaining time is between the second threshold and the third threshold; or
a plurality of amounts of data whose corresponding remaining time is less than or equal to the second threshold, and an amount of data whose remaining time is the minimum remaining time.

52. The method according to any one of claims 33 to 51, wherein the method further comprises:
determining, by the first terminal device based on a target PDU and/or a target service data unit SDU in a PDCP layer, an amount of data associated with the first DSR.

53. The method according to claim 52, wherein at least one of the target PDU or the target SDU comprises one or more of following:
a PDU and/or an SDU corresponding to minimum remaining time; or
a PDU and/or an SDU whose corresponding remaining time is less than or equal to a first threshold.

54. The method according to claim 52 or 53, wherein at least one of the target PDU or the target SDU comprises one or more of following:
an SDU or a PDU that is not assembled;
an SDU or a PDU that is newly transmitted;
an SDU or a PDU that requires retransmission; or
a control PDU.

55. The method according to any one of claims 52 or 54, wherein at least one of the target PDU or the target SDU does not comprise one or more of following:
a PDU or an SDU that has not been submitted to a lower layer of the PDCP layer and is indicated to be discarded;
a PDU or an SDU that has been submitted to a lower layer of the PDCP layer and is indicated to be discarded;
a PDU or an SDU that has not been submitted to a lower layer of a radio link control RLC layer and is indicated to be discarded;
a PDU or an SDU that has been submitted to a lower layer of an RLC layer and is indicated to be discarded; or
a PDU or an SDU for which a value of a PDCP discard timer is 0 or for which a PDCP discard timer is stopped.

56. The method according to any one of claims 52 to 55, wherein the method further comprises:
in a case in which at least one of the target PDU or the target SDU comprises no control PDU, preferentially transferring, by the first terminal device after receiving an uplink grant, a data PDU or SDU to a MAC layer; or
in a case in which at least one of the target PDU or the target SDU does not comprise an SDU or a PDU that requires retransmission, preferentially transferring, by the first terminal device after receiving an uplink grant, a newly transmitted SDU or PDU to a MAC layer.

57. The method according to any one of claims 52 to 56, wherein the PDCP layer transmits first information to an RLC layer, and the first information is used by the RLC layer to determine an amount of data associated with the first DSR.

58. The method according to any one of claims 33 to 57, wherein the method further comprises:
determining, by the first terminal device based on a target PDU and/or a target SDU in an RLC layer, an amount of data associated with the first DSR.

59. The method according to claim 58, wherein at least one of the target PDU or the target SDU comprises one or more of following:
a PDU and/or an SDU corresponding to minimum remaining time;
a PDU and/or an SDU whose corresponding remaining time is less than or equal to a first threshold.

60. The method according to claim 58 or 59, wherein at least one of the target PDU or the target SDU comprises one or more of following:
an SDU or a PDU that is not assembled;
an SDU or a PDU that is newly transmitted;
an SDU or a PDU that requires retransmission.

61. The method according to any one of claims 58 or 60, wherein at least one of the target PDU or the target SDU does not comprise one or more of following:
a PDU or an SDU that has not been submitted to a lower layer of an RLC layer and is indicated to be discarded; or
a PDU or an SDU that has been submitted to a lower layer of an RLC layer and is indicated to be discarded.

62. The method according to any one of claims 58 to 61, wherein the method further comprises:
in a case in which at least one of the target PDU or the target SDU does not comprise an SDU or a PDU that requires retransmission, preferentially transferring, by the first terminal device after receiving an uplink grant, a newly transmitted SDU or PDU to a MAC layer.

63. The method according to any one of claims 33 to 62, wherein the method further comprises:
triggering, by the first terminal device, a scheduling request SR.

64. The method according to claim 63, wherein the method further comprises:
in a case in which a first condition is satisfied, triggering, by a MAC entity of the first terminal device, the SR, wherein the first condition comprises at least one of following:
a DSR procedure determining that at least one DSR has been triggered and not cancelled;
no UL-shared channel SCH resource being available for a new transmission; or
a UL-SCH resource that is available for a new transmission being incapable of accommodating a DSR MAC CE plus its subheader as a result of logical channel prioritization.

65. The method according to claim 63, wherein the method further comprises at least one of following:
determining, by the first terminal device based on a radio resource control RRC configuration, a correspondence between an SR configuration and a DSR, wherein the correspondence comprises: one or more SR configurations corresponding to one or more DSRs; and/or a DSR having a corresponding SR configuration or having no corresponding SR configuration; and/or an SR configuration of a logical channel LCH that triggered a DSR being considered as a corresponding SR configuration for the triggered SR;
in a case in which a second condition is satisfied, canceling, by the first terminal device, all pending SR(s) for DSR triggered according to a DSR procedure prior to MAC PDU assembly, and/or stopping a prohibit timer corresponding to a canceled SR, wherein the second condition comprises at least one of following: in a case in which a MAC CE is generated, when a MAC PDU is transmitted, the MAC PDU comprising a DSR MAC CE; when a MAC PDU is transmitted, the MAC PDU comprising a DSR MAC CE, wherein the DSR MAC CE comprises remaining time information up to (and comprising) the last event that triggered a DSR prior to the DSR MAC CE assembly; or when a MAC PDU is transmitted, the DSR MAC PDU comprises a DSR MAC CE, wherein the DSR MAC CE comprises remaining time information up to (and comprising) the last DSR report and prior to the MAC PDU assembly; or
in a case in which a third condition is satisfied, canceling, by the first terminal device, all pending SR(s) for DSR triggered according to a DSR procedure, and/or stopping a prohibit timer corresponding to a canceled SR, wherein the third condition is: an UL grant(s) being capable of accommodating all pending data available for transmission.

66. The method according to claim 63, wherein the method further comprises:
triggering, by the first terminal device, a random access procedure; and/or
triggering, by the first terminal device, a procedure of canceling a pending SR.

67. The method according to claim 66, wherein the method further comprises:
in a case in which there is a pending SR and the pending SR corresponds to DSR, in a case that a MAC entity of the first terminal device has no available physical uplink control channel PUCCH resource for the pending SR, triggering, by the MAC entity, the random access procedure in a special cell.

68. The method according to any one of claims 63 to 67, wherein the method further comprises:
stopping, by a MAC entity of the first terminal device, an ongoing random access procedure, wherein the random access procedure corresponds to a pending SR corresponding to DSR, and the SR is initiated by the MAC entity prior to MAC PDU assembly and which has no valid PUCCH resources configured.

69. The method according to claim 68, wherein the method further comprises at least one of following:
transmitting, by the first terminal device, a MAC PDU using a UL grant, wherein the UL grant does not comprise a UL grant provided by the random access procedure and/or a UL grant for transmission of a message A MSGA payload, the MAC PDU comprises a DSR MAC CE, and the DSR MAC CE comprises remaining time information, wherein optionally, the remaining time information is remaining time information up to (and comprising) the last event that triggered a DSR prior to the MAC PDU assembly;
transmitting, by the first terminal device, a MAC PDU using a UL grant, wherein the UL grant does not comprise a UL grant provided by the random access procedure and/or a UL grant for transmission of an MSGA payload, the MAC PDU comprises a DSR MAC CE, and the DSR MAC CE comprises remaining time information, wherein optionally, the remaining time information is remaining time information up to (and comprising) the last DSR reporting and prior to the MAC PDU assembly; or
transmitting, by the first terminal device, a MAC PDU using a UL grant, wherein the UL grant is capable of accommodating all pending data available for transmission.

70. A wireless communication method, comprising:
triggering, by a first terminal device, first delay status reporting DSR, and/or transmitting a first medium access control MAC control element CE, wherein the first MAC CE is a MAC CE corresponding to DSR, the first MAC CE comprises information of at least one logical channel group, and the information of the one logical channel group comprises remaining time information and data amount information.

71. The method according to claim 70, wherein at least one of the first MAC CE or the information of the one logical channel group satisfies at least one of following conditions:
the first MAC CE being an uplink UL MAC CE;
the first MAC CE being a DSR MAC CE;
the first MAC CE being a fixed-size MAC CE or a variable-size MAC CE;
the first MAC CE carrying information of only one logical channel group LCG, or carrying information of a plurality of LCGs;
the first MAC CE being for information of a buffer status BS table selected for an LCG, or for information of a BS table selected for the first terminal device or the first MAC CE;
for one LCG, the first MAC CE carrying information about one or more amounts of data;
remaining time of the one logical channel group being remaining time up to expiration of a packet data convergence protocol PDCP discard timer;
an amount of data of the one logical channel group being an amount of data corresponding to the remaining time, or an amount of data corresponding to a first threshold, or an amount of data whose corresponding remaining time is less than or equal to the remaining time, or an amount of data whose corresponding remaining time is less than or equal to the first threshold; or
an amount of data of the one logical channel group being an amount of data of one piece of data, one protocol data unit PDU, or one PDU set within the logical channel group that satisfies a condition, or an amount of data of all data, PDUs, or PDU sets within the logical channel group that satisfy a condition.

72. The method according to claim 71, wherein the one or more amounts of data satisfy at least one of following conditions:
the one or more amounts of data being amounts of data whose remaining time is less than or equal to the first threshold;
the plurality of amounts of data being amounts of data whose remaining time is less than or equal to different first thresholds;
for one LCG, the one or more amounts of data being amounts of data whose remaining time is less than or equal to the first threshold; or
for one LCG, the plurality of amounts of data being amounts of data whose remaining time is less than or equal to different first thresholds.

73. The method according to claim 71, wherein the one or more amounts of data satisfy at least one of following conditions:
remaining time corresponding to the one or more amounts of data being less than or equal to the first threshold;
remaining time corresponding to the plurality of amounts of data being less than or equal to different first thresholds;
for one LCG, remaining time corresponding to one or more reported amounts of data being less than or equal to the first threshold; or
for one LCG, remaining time corresponding to a plurality of reported amounts of data being less than or equal to different first thresholds.

74. The method according to any one of claims 71 to 73, wherein the first threshold is a threshold for one of following configurations:
logical channel group;
data radio bearer; or
terminal device.

75. The method according to any one of claims 71 to 73, wherein the one amount of data is one of following:
an amount of data corresponding to minimum remaining time; or
all amounts of data whose corresponding remaining time is less than or equal to the first threshold.

76. The method according to any one of claims 71 to 73, wherein
in a case that data in the one logical channel group triggers reporting of the first MAC CE, the first DSR comprises one amount of data; or
in a case that data in the one logical channel group triggers reporting of the first MAC CE, the first DSR comprises a plurality of amounts of data; or
in a case that minimum remaining time corresponding to data in the one logical channel group is greater than or equal to the first threshold, the first DSR comprises one amount of data; or
in a case that minimum remaining time corresponding to data in the one logical channel group is greater than or equal to the first threshold, the first DSR comprises a plurality of amounts of data; or
in a case that minimum remaining time corresponding to data in the one logical channel group is less than or equal to the first threshold, the first DSR comprises one amount of data; or
in a case that minimum remaining time corresponding to data in the one logical channel group is less than or equal to the first threshold, the first DSR comprises a plurality of amounts of data.

77. The method according to any one of claims 71 to 73, wherein the plurality of amounts of data satisfy at least one of following conditions:
corresponding to one LCG, wherein the plurality of amounts of data corresponding to the one LCG correspond to a plurality of data packets, and remaining time corresponding to each of the plurality of data packets is less than or equal to the first threshold; or
corresponding to a plurality of LCGs, wherein the plurality of amounts of data corresponding to the plurality of LCGs correspond to a plurality of data packets, and remaining time corresponding to each of the plurality of data packets is less than or equal to the first threshold.

78. The method according to any one of claims 70 to 77, wherein
the first threshold being a DSR reporting threshold; or
the first threshold being a DSR trigger threshold.

79. The method according to any one of claims 70 to 78, wherein the first threshold comprises a second threshold and a third threshold, one of the second threshold and the third threshold is a DSR trigger threshold, and the other of the second threshold and the third threshold is a DSR reporting threshold.

80. The method according to claim 79, wherein the one or more amounts of data comprise an amount of data for the second threshold and/or the third threshold.

81. The method according to claim 79 or 80, wherein in a case that a value of the second threshold is different from a value of the third threshold, the one or more amounts of data comprise one or more of following:
an amount of data whose corresponding remaining time is between the second threshold and the third threshold;
an amount of data whose corresponding remaining time is greater than the second threshold;
an amount of data whose corresponding remaining time is greater than the third threshold;
an amount of data whose corresponding remaining time is less than or equal to the second threshold; or
an amount of data whose corresponding remaining time is less than or equal to the third threshold.

82. The method according to any one of claims 79 to 81, wherein
in a case that the third threshold is greater than the second threshold, the first DSR comprises one amount of data,
wherein the one amount of data comprises one of following:
an amount of data corresponding to the third threshold;
an amount of data whose corresponding remaining time is less than or equal to the third threshold;
an amount of data corresponding to the second threshold; or
an amount of data whose corresponding remaining time is less than or equal to the second threshold.

83. The method according to any one of claims 79 to 81, wherein
in a case that the third threshold is greater than the second threshold, the first DSR comprises a plurality of amounts of data,
wherein the plurality of amounts of data comprise one of following:
a plurality of amounts of data whose corresponding remaining time is less than or equal to the third threshold;
an amount of data whose corresponding remaining time is less than or equal to the third threshold;
an amount of data whose corresponding remaining time is greater than or equal to the second threshold, and/or an amount of data whose corresponding remaining time is less than the second threshold; or
a plurality of amounts of data whose corresponding remaining time is less than or equal to the second threshold.

84. The method according to any one of claims 79 to 83, wherein
in a case that minimum remaining time corresponding to data in the one logical channel group is greater than or equal to the second threshold, the first DSR comprises one amount of data; or
in a case that remaining time corresponding to part of data in the one logical channel group is greater than the second threshold, and remaining time corresponding to part of data in the one logical channel group is less than or equal to the second threshold, the first DSR comprises one amount of data; or
in a case that data in the one logical channel group triggers reporting of the MAC CE, the first DSR comprises one amount of data.

85. The method according to claim 84, wherein the one amount of data is one of following:
an amount of data corresponding to minimum remaining time; or
an amount of data whose corresponding remaining time is less than or equal to the second threshold.

86. The method according to any one of claims 70 to 85, wherein
in a DSR MAC CE, a data status reported for a single LCG is an amount of data associated with all data packets in the LCG whose remaining time is less than a configured threshold.

87. The method according to any one of claims 79 to 83, wherein
in a case that data in the one logical channel group triggers reporting of the MAC CE, the first DSR comprises a plurality of amounts of data; or
in a case that minimum remaining time corresponding to data in the one logical channel group is less than or equal to the second threshold, the first DSR comprises a plurality of amounts of data; or
in a case that minimum remaining time corresponding to data in the one logical channel group is greater than or equal to the second threshold, the first DSR comprises a plurality of amounts of data; or
in a case that remaining time corresponding to part of data in the one logical channel group is greater than the second threshold, and remaining time corresponding to part of data is less than or equal to the second threshold, the first DSR comprises a plurality of amounts of data.

88. The method according to claim 87, wherein the plurality of amounts of data comprise one of following:
a plurality of amounts of data whose corresponding remaining time is less than or equal to the second threshold;
an amount of data whose corresponding remaining time is less than or equal to the second threshold, and an amount of data whose corresponding remaining time is between the second threshold and the third threshold;
an amount of data whose corresponding remaining time is less than or equal to the third threshold, and an amount of data whose corresponding remaining time is between the second threshold and the third threshold; or
a plurality of amounts of data whose corresponding remaining time is less than or equal to the second threshold, and an amount of data whose remaining time is the minimum remaining time.

89. A wireless communication method, comprising:
reporting, by a terminal device, buffer size information by using one or more logical channel groups LCGs, wherein the one or more LCGs are configured to report the buffer size information by using a first buffer status reporting BSR table and a second BSR table, or are at least configured to report the buffer size information by using the second BSR table, there is a first difference between the first BSR table and the second BSR table, and the first difference comprises one or more of following: a difference in granularity; a difference in an indication range of a buffer status BS; a difference in a value range; or a difference in identifiers of tables.

90. The method according to claim 89, wherein the first BSR table and the second BSR table are capable of being used for reporting the buffer size information for triggered regular BSR, periodic BSR, and/or padding BSR.

91. The method according to claim 90, wherein the method further comprises:
triggering, by the terminal device, short BSR and/or performing reporting by using a short BSR medium access control MAC control element CE for triggered regular BSR; or
triggering, by the terminal device, long BSR and/or performing reporting by using a long BSR MAC CE for triggered regular BSR; or
triggering, by the terminal device, enhanced short BSR and/or performing reporting by using an enhanced short BSR MAC CE for triggered regular BSR; or
triggering, by the terminal device, enhanced long BSR and/or performing reporting by using an enhanced long BSR MAC CE for triggered regular BSR,
wherein information comprised in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table.

92. The method according to claim 90, wherein the method further comprises:
triggering, by the terminal device, short BSR and/or performing reporting by using a short BSR MAC CE for triggered periodic BSR; or
triggering, by the terminal device, long BSR and/or performing reporting by using a long BSR MAC CE for triggered periodic BSR; or
triggering, by the terminal device, enhanced short BSR and/or performing reporting by using an enhanced short BSR MAC CE for triggered periodic BSR; or
triggering, by the terminal device, enhanced long BSR and/or performing reporting by using an enhanced long BSR MAC CE for triggered periodic BSR,
wherein information comprised in one or more of the enhanced short BSR, the enhanced short BSR MAC CE, the enhanced long BSR, or the enhanced long BSR MAC CE corresponds to the buffer size information corresponding to the second BSR table, or a corresponding buffer size is reported by using the second BSR table.

93. The method according to claim 90, wherein the method further comprises:
triggering, by the terminal device, short BSR and/or performing reporting by using a short BSR MAC CE for triggered padding BSR; or
triggering, by the terminal device, long BSR and/or performing reporting by using a long BSR MAC CE for triggered padding BSR; or
triggering, by the terminal device, enhanced short BSR and/or performing reporting by using an enhanced short BSR MAC CE for triggered padding BSR; or
triggering, by the terminal device, enhanced long BSR and/or performing reporting by using an enhanced long BSR MAC CE for triggered padding BSR; or
triggering, by the terminal device, enhanced short truncated BSR and/or performing reporting by using an enhanced short truncated BSR MAC CE for triggered padding BSR; or
triggering, by the terminal device, enhanced long truncated BSR and/or performing reporting by using an enhanced long truncated BSR MAC CE for triggered padding BSR,
wherein information comprised in one or more of the enhanced short BSR, the enhanced short BSR MAC CE, the enhanced long BSR, the enhanced long BSR MAC CE, the enhanced short truncated BSR, the enhanced short truncated BSR MAC CE, the enhanced long truncated BSR, or the enhanced long truncated BSR MAC CE corresponds to the buffer size information corresponding to the second BSR table, or a corresponding buffer size is reported by using the second BSR table.

94. The method according to claim 90, wherein the method further comprises:
skipping triggering, by the terminal device, short BSR and/or skipping performing reporting by using a short BSR MAC CE for triggered padding BSR; and/or
skipping triggering, by the terminal device, short truncated BSR and/or skipping performing reporting by using a short truncated BSR MAC CE for triggered padding BSR; or
skipping triggering, by the terminal device, long truncated BSR and/or skipping performing reporting by using a long truncated BSR MAC CE for triggered padding BSR.

95. The method according to any one of claims 89 to 94, wherein the method further comprises:
determining, by the terminal device based on a first factor, a type of BSR to be triggered and/or a type of a MAC CE to be used,
wherein the first factor comprises one or more of following: a quantity of LCGs having data to be transmitted; a size of a padding bit, a MAC protocol data unit PDU, a physical uplink shared channel PUSCH for transmitting a BSR MAC CE, or an uplink UL grant; whether an LCG is configured to report the buffer size information by using the second BSR table; a size of a BSR MAC CE plus its subheader; a size of data to be transmitted for at least one LCG; or whether BSR to be triggered is periodic BSR, regular BSR, or padding BSR.

96. The method according to claim 95, wherein the determining, by the terminal device based on the first factor, the type of the BSR to be triggered and/or the type of the MAC CE to be used comprises:
first determining, by the terminal device, whether the BSR to be triggered is periodic BSR, regular BSR, or padding BSR, and then determining another first factor.

97. The method according to claim 95, wherein the determining, by the terminal device based on the first factor, the type of the BSR to be triggered and/or the type of the MAC CE to be used comprises:
first determining, by the terminal device, whether the LCG is configured to report the buffer size information by using the second BSR table, and the size of the data to be transmitted for the at least one LCG; and then determining another first factor; or
first determining, by the terminal device, a size relationship between the size of the padding bit, the MAC PDU, the PUSCH for transmitting the BSR MAC CE, or the UL grant and the size of the BSR MAC CE plus its subheader, then whether the LCG is configured to report the buffer size information by using the second BSR table, and the size of the data to be transmitted for the at least one LCG; and then determining another first factor; or
first determining, by the terminal device, the quantity of LCGs having data to be transmitted, then whether the LCG is configured to report the buffer size information by using the second BSR table, and the size of the data to be transmitted for the at least one LCG; and then determining another first factor.

98. The method according to any one of claims 89 to 97, wherein the method further comprises:
in a case that a first case is satisfied, triggering, by the terminal device, BSR, wherein the BSR comprises one or more of following: enhanced short BSR, enhanced short truncated BSR, enhanced long BSR, or enhanced long truncated BSR; and/or
in a case that the first case is satisfied, using, by the terminal device, a MAC CE, wherein the MAC CE comprises one or more of following: an enhanced short BSR MAC CE, an enhanced short truncated BSR MAC CE, an enhanced long BSR MAC CE, or an enhanced long truncated BSR MAC CE,
wherein the first case is that one or more LCGs are configurable to report the buffer information by using at least the second BSR table, and an amount of data to be transmitted for the at least one LCG satisfies a first condition, wherein the first condition is one of following: a size of the data to be transmitted for the at least one LCG is within a range of an amount of data corresponding to the second BSR table; or the size of the data to be transmitted for the at least one LCG is less than or equal to a maximum value of the amount of data corresponding to the second BSR table, and the size of the data to be transmitted for the at least one LCG is greater than or equal to a minimum value of the amount of data corresponding to the second BSR table.

99. The method according to claim 98, wherein the method further comprises:
in a case that a plurality of LCGs satisfy the first case, reporting, by the terminal device, enhanced long BSR for periodic BSR and/or regular BSR, wherein the reporting is for all LCGs, or for all LCGs configured to report the buffer information by using at least the second BSR table;
in a case that one LCG satisfies the first case, reporting, by the terminal device, short BSR or enhanced short BSR for periodic BSR and/or regular BSR, wherein the reporting is for the one LCG; or
in a case that a plurality of LCGs do not satisfy the first case, reporting, by the terminal device, long BSR for periodic BSR and/or regular BSR, wherein the reporting is for all LCGs; otherwise, reporting short BSR.

100. The method according to claim 98, wherein the method further comprises:
in a case that a second case is satisfied, reporting, by the terminal device, enhanced long BSR for periodic BSR and/or regular BSR, wherein the reporting is for all LCGs, or for all LCGs configured to report the buffer information by using at least the second BSR table;
in a case that the second case is not satisfied, reporting, by the terminal device, long BSR for periodic BSR and/or regular BSR, wherein the reporting is for all LCGs; or
in a case that one LCG has data to be transmitted, reporting, by the terminal device, short BSR for periodic BSR and/or regular BSR, wherein the reporting is for the one LCG; or
in a case that one LCG has data to be transmitted, the one LCG is configured to report the buffer information by using at least the second BSR table, and an amount of data to be transmitted for the one LCG satisfies the first condition, reporting, by the terminal device, enhanced short BSR for periodic BSR and/or regular BSR; otherwise, reporting short BSR, wherein the reporting is for the one LCG,
wherein the second case is as follows: in a case in which a plurality of LCGs have data to be transmitted, at least one of the LCGs is configured to report the buffer information by using at least the second BSR table, and an amount of data to be transmitted for the one LCG satisfies the first condition.

101. The method according to claim 98, wherein the method further comprises:
determining, for padding BSR by the terminal device first based on a third case and then based on a fourth case, a type of BSR to be reported; or
determining, for padding BSR by the terminal device first based on the fourth case and then based on the third case, a type of BSR to be reported,
wherein the third case is that one or more LCGs are configurable to report the buffer size information by using at least the second BSR table, and an amount of data to be transmitted for at least one of the LCGs satisfies the first condition; and the fourth case is that a size of a padding bit and a size of a MAC CE plus its subheader are expected sizes, and/or a plurality of LCGs have data to be transmitted.

102. A wireless communication method, comprising:
receiving, by a network device, buffer size information reported by a terminal device by using one or more logical channel groups LCGs, wherein the one or more LCGs are configured to report the buffer size information by using a first buffer status reporting BSR table and a second BSR table, or are at least configured to report the buffer size information by using the second BSR table, there is a first difference between the first BSR table and the second BSR table, and the first difference comprises one or more of following: a difference in granularity; a difference in an indication range of a buffer status BS; a difference in a value range; or a difference in identifiers of tables.

103. The method according to claim 102, wherein the first BSR table and the second BSR table are capable of being used for reporting the buffer size information for triggered regular BSR, periodic BSR, and/or padding BSR.

104. A terminal device, comprising:
a receiving module, configured to receive configuration information, wherein the configuration information is used to indicate one or more of following:
a target resource available for uplink and/or downlink transmission during a measurement gap;
a target logical channel available for use during a measurement gap;
a target logical channel group available for use during a measurement gap;
a target service transmittable during a measurement gap;
a target hybrid automatic repeat request HARQ process transmittable during a measurement gap;
whether at least one of uplink transmission or downlink transmission is executable during a measurement gap; or
whether target transmission is executable during a measurement gap.

105. A network device, comprising:
a transmitting module, configured to transmit configuration information to a first terminal device, wherein the configuration information is used to indicate one or more of following:
a target resource available for uplink and/or downlink transmission during a measurement gap;
a target logical channel available for use during a measurement gap;
a target logical channel group available for use during a measurement gap;
a target service transmittable during a measurement gap;
a target hybrid automatic repeat request HARQ process transmittable during a measurement gap;
whether at least one of uplink transmission or downlink transmission is executable during a measurement gap; or
whether target transmission is executable during a measurement gap.

106. A terminal device, comprising:
a transmitting module, configured to transmit first information to a network device, wherein the first information is used to indicate one or more of following:
a transmission resource recommended for use by the first terminal device during a measurement gap;
a transmission resource configuration recommended for use by the first terminal device during a measurement gap;
a resource location of a transmission resource that is recommended for use by the first terminal device during a measurement gap; a time-frequency resource location recommended for use by the first terminal device during a measurement gap;
a semi-persistent scheduling SPS and/or configured grant CG index that the first terminal device is required to use during a measurement gap;
a service that the first terminal device is required to transmit during a measurement gap;
a logical channel that the first terminal device is required to use during a measurement gap;
a logical channel group that the first terminal device is required to use during a measurement gap;
a hybrid automatic repeat request HARQ process number that the first terminal device is required to use during a measurement gap;
a signal or a channel that the first terminal device is required to transmit during a measurement gap; or
capability information of the first terminal device that is associated with a measurement gap.

107. A network device, comprising: a receiving module, configured to receive first information transmitted by a first terminal device, wherein the first information is used to indicate one or more of following:
a transmission resource recommended for use by the first terminal device during a measurement gap;
a transmission resource configuration recommended for use by the first terminal device during a measurement gap;
a resource location of a transmission resource that is recommended for use by the first terminal device during a measurement gap; a time-frequency resource location recommended for use by the first terminal device during a measurement gap;
a semi-persistent scheduling SPS and/or configured grant CG index that the first terminal device is required to use during a measurement gap;
a service that the first terminal device is required to transmit during a measurement gap;
a logical channel that the first terminal device is required to use during a measurement gap;
a logical channel group that the first terminal device is required to use during a measurement gap;
a hybrid automatic repeat request HARQ process number that the first terminal device is required to use during a measurement gap;
a signal or a channel that the first terminal device is required to transmit during a measurement gap; or
capability information of the first terminal device that is associated with a measurement gap.

108. A terminal device, comprising:
a triggering module, configured to trigger first delay status reporting DSR; and/or
a transmitting module, configured to transmit a first medium access control MAC control element CE, wherein the first MAC CE is a MAC CE corresponding to DSR, the MAC CE comprises information of at least one logical channel group, and the information of the one logical channel group comprises remaining time information and data amount information.

109. A network device, comprising:
a receiving module, configured to receive first delay status reporting DSR, and/or receive a first medium access control MAC control element CE, wherein the first MAC CE is a MAC CE corresponding to DSR, the first MAC CE comprises information of at least one logical channel group, and the information of the one logical channel group comprises remaining time information and data amount information.

110. A terminal device, comprising:
a transmitting module, configured to report buffer size information by using one or more logical channel groups LCGs, wherein the one or more LCGs are configured to report the buffer size information by using a first buffer status reporting BSR table and a second BSR table, or are at least configured to report the buffer size information by using the second BSR table, there is a first difference between the first BSR table and the second BSR table, and the first difference comprises one or more of following: a difference in granularity; a difference in an indication range of a buffer status BS; a difference in a value range; or a difference in identifiers of tables.

111. A network device, comprising:
a receiving module, configured to receive buffer size information reported by a terminal device by using one or more logical channel groups LCGs, wherein the one or more LCGs are configured to report the buffer size information by using a first buffer status reporting BSR table and a second BSR table, or are at least configured to report the buffer size information by using the second BSR table, there is a first difference between the first BSR table and the second BSR table, and the first difference comprises one or more of following: a difference in granularity; a difference in an indication range of a buffer status BS; a difference in a value range; or a difference in identifiers of tables.

112. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 14, or 27 to 29, or 33 to 69, or 89 to 101.

113. A network device, comprising a transceiver, a memory, and a processor, wherein the memory is configured to store a program, and the processor is configured to invoke the program in the memory and control the transceiver to receive or transmit a signal, to cause the network device to execute the method according to any one of claims 15 to 26, or 30 to 32, or 70 to 88, or 100, or 101.

114. An apparatus, comprising a processor configured to invoke a program from a memory, to cause the apparatus to execute the method according to any one of claims 1 to 14, or 15 to 26, or 27 to 29, or 30 to 32, or 33 to 69, or 70 to 88, or 89 to 101, or 102, or 103.

115. A chip, comprising a processor, configured to invoke a program from a memory, to cause a device installed with the chip to execute the method according to any one of claims 1 to 14, or 15 to 26, or 27 to 29, or 30 to 32, or 33 to 69, or 70 to 88, or 89 to 101, or 102, or 103.

116. A computer-readable storage medium, wherein the computer-readable storage medium stores a program, and the program causes a computer to execute the method according to any one of claims 1 to 14, or 15 to 26, or 27 to 29, or 30 to 32, or 33 to 69, or 70 to 88, or 89 to 101, or 102, or 103.

117. A computer program product, comprising a program, wherein the program causes a computer to execute the method according to any one of claims 1 to 14, or 15 to 26, or 27 to 29, or 30 to 32, or 33 to 69, or 70 to 88, or 89 to 101, or 102, or 103.

118. A computer program, wherein the computer program causes a computer to execute the method according to any one of claims 1 to 14, or 15 to 26, or 27 to 29, or 30 to 32, or 33 to 69, or 70 to 88, or 89 to 101, or 102, or 103.
